# EUROPEAN PATENT APPLICATION

(11) **EP 4 836 335 A1**
(43) Date of publication of application: **04.11.2026**
(21) Application number: 23962710.2
(22) Date of filing: 28.12.2023
(51) Int. Cl.: H04L 5/00

(54) **DMRS DETERMINATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: SHI, Zhihua, Dongguan, Guangdong 523860 (CN); CAO, Jianfei, Dongguan, Guangdong 523860 (CN); LIU, Zhe, Dongguan, Guangdong 523860 (CN)
(74) Representative: Taor, Simon Edward William
(86) International application number: PCT/CN2023/142920
(87) International publication number: WO 2025/138031

(57) **Abstract**

Provided are methods, apparatuses, a device, and a storage medium for determining a Demodulation Reference Signal (DMRS), which belong to the technical field of communications. The method includes: determining a DMRS corresponding to a reference signal in a first reference signal group, the reference signal in the first reference signal group and the DMRS corresponding to the reference signal in the first reference signal group being used to assess a first link quality, the DMRS corresponding to the reference signal in the first reference signal group being a first DMRS or a second DMRS, the first DMRS being a first-type DMRS or a second-type DMRS, and the second DMRS being the second-type DMRS. When two types of DMRSs are present, which type of DMRS is used as a hypothesis can be determined.

## Description

### TECHNICAL FIELD

Embodiments of the present disclosure relate to the technical field of communications, and in particular, to Demodulation Reference Signal (DMRS) determination methods and apparatuses, a device, and a storage medium.

### BACKGROUND

During communication transmission, DMRS and data signals occupy different time-frequency resources, that is, DMRS and data signals are orthogonally arranged on time-frequency resources. When the total time-frequency resources are fixed, an increase in DMRS resource overhead means a reduction in resources used for transmitting data signals, thereby resulting in a decrease in the transmission rate of data signals. The data signal refers to at least one of data or control information.

In the related art, to address the above drawbacks, a DMRS capable of being transmitted on the same time-frequency resources as data signals has been designed. However, after introducing such a DMRS that can be transmitted on the same time-frequency resources as data signals, relevant parameters in a wireless communication system may be affected. How to determine a DMRS used in a communication process is an urgent problem to be solved.

### SUMMARY

Embodiments of the present disclosure provide DMRS determination methods and apparatuses, a device, and a storage medium. The technical solutions are as follows:

According to one aspect of the embodiments of the present disclosure, a DMRS determination method is provided, the method including:
determining a DMRS corresponding to a reference signal in a first reference signal group;
wherein the reference signal in the first reference signal group and the DMRS corresponding to the reference signal in the first reference signal group are used to assess a first link quality, the DMRS corresponding to the reference signal in the first reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination method is provided, the method including:
determining a DMRS corresponding to a candidate reference signal in a third reference signal group;
wherein the candidate reference signal in the third reference signal group and the DMRS corresponding to the candidate reference signal in the third reference signal group are used to assess a third link quality, the DMRS corresponding to the candidate reference signal in the third reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination method is provided, the method including:
receiving a first signal, the first signal being used to respond to a target reference signal, where the target reference signal is a reference signal that satisfies a link quality condition among all candidate reference signals;
wherein the first signal is transmitted based on a first DMRS, or the first signal is transmitted based on a second DMRS, the first DMRS is a first-type DMRS or a second-type DMRS, and the second DMRS is the second-type DMRS.

According to another aspect of the embodiments of the present disclosure, a DMRS determination method is provided, the method including:
sending first indication information, the first indication information being used to indicate a DMRS corresponding to a reference signal in a first reference signal group;
wherein the reference signal in the first reference signal group and the DMRS corresponding to the reference signal in the first reference signal group are used to assess a first link quality, the DMRS corresponding to the reference signal in the first reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination method is provided, the method including:
sending second indication information, the second indication information being used to indicate a DMRS corresponding to a candidate reference signal in a third reference signal group;
wherein the candidate reference signal in the third reference signal group and the DMRS corresponding to the candidate reference signal in the third reference signal group are used to assess a third link quality, the DMRS corresponding to the candidate reference signal in the third reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination method is provided, the method including:
sending a first signal, the first signal being used to respond to a target reference signal, where the target reference signal is a reference signal that satisfies a link quality condition among all candidate reference signals;
wherein the first signal is transmitted based on a first DMRS, or the first signal is transmitted based on a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a determining module, configured to determine a DMRS corresponding to a reference signal in a first reference signal group;
wherein the reference signal in the first reference signal group and the DMRS corresponding to the reference signal in the first reference signal group are used to assess a first link quality, the DMRS corresponding to the reference signal in the first reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a determining module, configured to determine a DMRS corresponding to a candidate reference signal in a third reference signal group;
wherein the candidate reference signal in the third reference signal group and the DMRS corresponding to the candidate reference signal in the third reference signal group are used to assess a third link quality, the DMRS corresponding to the candidate reference signal in the third reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a receiving module, configured to receive a first signal, the first signal being used to respond to a target reference signal, where the target reference signal is a reference signal that satisfies a link quality condition among all candidate reference signals;
wherein the first signal is transmitted based on a first DMRS, or the first signal is transmitted based on a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a transmitting module, configured to transmit first indication information, the first indication information being used to indicate a DMRS corresponding to a reference signal in a first reference signal group;
wherein the reference signal in the first reference signal group and the DMRS corresponding to the reference signal in the first reference signal group are used to assess a first link quality, the DMRS corresponding to the reference signal in the first reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a transmitting module, configured to transmit second indication information, the second indication information being used to indicate a DMRS corresponding to a candidate reference signal in a third reference signal group;
wherein the candidate reference signal in the third reference signal group and the DMRS corresponding to the candidate reference signal in the third reference signal group are used to assess a third link quality, the DMRS corresponding to the candidate reference signal in the third reference signal group is a first DMRS or a second DMRS, the first DMRS is a first-type DMRS or a second-type DMRS, and the second DMRS is the second-type DMRS.

According to another aspect of the embodiments of the present disclosure, a DMRS determination apparatus is provided, the apparatus including:
a transmitting module, configured to transmit a first signal, the first signal being used to respond to a target reference signal, where the target reference signal is a reference signal that satisfies a link quality condition among all candidate reference signals;
wherein the first signal is transmitted based on a first DMRS, or the first signal is transmitted based on a second DMRS, the first DMRS is a first-type DMRS or a second-type DMRS, and the second DMRS is the second-type DMRS.

According to another aspect of the embodiments of the present disclosure, a computer-readable storage medium is provided, which has stored a computer program that is loaded and executed by a processor to implement the DMRS determination methods according to the above aspects.

According to another aspect of the embodiments of the present disclosure, a computer program product or computer program is provided, which includes computer instructions that are stored in a computer-readable storage medium and are read by a processor from the computer-readable storage medium and executed by the processor to implement the DMRS determination methods according to the above aspects.

Beneficial effects of the technical solutions provided in the embodiments of the present disclosure may include:

By determining the DMRS corresponding to the reference signal in the first reference signal group, a terminal device can determine which DMRS to be used as a DMRS hypothesis. By assessing the link quality of a beam by determining a DMRS used by a hypothesized control channel, the accuracy of link quality assessment is improved when either of two DMRS types may be used.

### BRIEF DESCRIPTION OF THE DRAWINGS

FIG. 1 is a schematic diagram of a DMRS provided by the related art;
FIG. 2 is a schematic diagram of a DMRS provided by the related art;
FIG. 3 is a schematic diagram of transmission of a downlink data channel provided by an embodiment of the present disclosure;
FIG. 4 is a flowchart of a communication system provided by an embodiment of the present disclosure;
FIG. 5 is a schematic diagram of a DMRS provided by an embodiment of the present disclosure;
FIG. 6 is a flowchart of a DMRS determination method provided by an embodiment of the present disclosure;
FIG. 7 is a schematic diagram of a DMRS determination method provided by an embodiment of the present disclosure;
FIG. 8 is a flowchart of a DMRS determination method provided by an embodiment of the present disclosure;
FIG. 9 is a schematic diagram of a DMRS determination method provided by an embodiment of the present disclosure;
FIG. 10 is a flowchart of a DMRS determination method provided by an embodiment of the present disclosure;
FIG. 11 is a flowchart of a DMRS determination method provided by an embodiment of the present disclosure;
FIG. 12 is a flowchart of a DMRS determination method provided by an embodiment of the present disclosure;
FIG. 13 is a flowchart of a DMRS determination method provided by an embodiment of the present disclosure;
FIG. 14 is a flowchart of a DMRS determination method provided by an embodiment of the present disclosure;
FIG. 15 is a flowchart of a DMRS determination method provided by an embodiment of the present disclosure;
FIG. 16 is a flowchart of a DMRS determination method provided by an embodiment of the present disclosure;
FIG. 17 is a flowchart of a DMRS determination method provided by an embodiment of the present disclosure;
FIG. 18 is a flowchart of a DMRS determination method provided by an embodiment of the present disclosure;
FIG. 19 is a flowchart of a DMRS determination method provided by an embodiment of the present disclosure;
FIG. 20 is a flowchart of a DMRS determination method provided by an embodiment of the present disclosure;
FIG. 21 is a flowchart of a DMRS determination method provided by an embodiment of the present disclosure;
FIG. 22 is a flowchart of a DMRS determination method provided by an embodiment of the present disclosure;
FIG. 23 is a flowchart of a DMRS determination method provided by an embodiment of the present disclosure;
FIG. 24 is a flowchart of a DMRS determination method provided by an embodiment of the present disclosure;
FIG. 25 is a flowchart of a DMRS determination method provided by an embodiment of the present disclosure;
FIG. 26 is a flowchart of a DMRS determination method provided by an embodiment of the present disclosure;
FIG. 27 is a flowchart of a DMRS determination method provided by an embodiment of the present disclosure;
FIG. 28 is a flowchart of a DMRS determination method provided by an embodiment of the present disclosure;
FIG. 29 is a flowchart of a DMRS determination method provided by an embodiment of the present disclosure;
FIG. 30 is a flowchart of a DMRS determination method provided by an embodiment of the present disclosure;
FIG. 31 is a flowchart of a DMRS determination method provided by an embodiment of the present disclosure;
FIG. 32 is a flowchart of a DMRS determination method provided by an embodiment of the present disclosure;
FIG. 33 is a flowchart of a DMRS determination method provided by an embodiment of the present disclosure;
FIG. 34 is a flowchart of a DMRS determination method provided by an embodiment of the present disclosure;
FIG. 35 is a flowchart of a DMRS determination method provided by an embodiment of the present disclosure;
FIG. 36 is a flowchart of a DMRS determination method provided by an embodiment of the present disclosure;
FIG. 37 is a structural block diagram of a DMRS determination apparatus provided by an embodiment of the present disclosure;
FIG. 38 is a structural block diagram of a DMRS determination apparatus provided by an embodiment of the present disclosure;
FIG. 39 is a structural block diagram of a DMRS determination apparatus provided by an embodiment of the present disclosure;
FIG. 40 is a structural block diagram of a DMRS determination apparatus provided by an embodiment of the present disclosure;
FIG. 41 is a structural block diagram of a DMRS determination apparatus provided by an embodiment of the present disclosure;
FIG. 42 is a structural block diagram of a DMRS determination apparatus provided by an embodiment of the present disclosure; and
FIG. 43 is a structural schematic diagram of a communications device provided by an embodiment of the present disclosure.

### DETAILED DESCRIPTION

To make the objectives, technical solutions, and advantages of the present disclosure clearer, the embodiments of the present disclosure will be further described in detail below with reference to the accompanying drawings. Exemplary embodiments will be described in detail herein, examples of which are illustrated in the accompanying drawings. When the following description refers to the accompanying drawings, unless otherwise indicated, the same numerals in different drawings represent the same or similar elements. The implementations described in the following exemplary embodiments do not represent all implementations consistent with the present disclosure. Rather, they are merely examples of apparatuses and methods consistent with some aspects of the present disclosure as recited in the appended claims. All other embodiments obtained by a person of ordinary skill in the art without creative efforts based on the embodiments of the present disclosure shall fall within the protection scope of the present disclosure.

The terminology used in the present disclosure is for the purpose of describing particular embodiments only and is not intended to be limiting of the present disclosure. As used in the present disclosure and the appended claims, the singular forms "a", "an", "said", and "the" are intended to include the plural forms as well, unless the context clearly indicates otherwise. It will be further understood that the term "and/or" as used herein refers to and includes any and all possible combinations of one or more of the associated listed items. It will be understood that, although the terms first, second, third, etc. may be used herein to describe various information, such information should not be limited by these terms, and these terms are only used to distinguish one type of information from another, for example, first information may be referred to as second information, and similarly, second information may be referred to as first information, without departing from the scope of the present disclosure. Depending on the context, the word "if" as used herein may be interpreted as "when" or "upon" or "in response to a determination".

First, related technologies involved in embodiments of the present disclosure are introduced as follows:

### • DMRS that uses different time-frequency resources from data signals:

In the related art, a basic workflow in a wireless communication system may include the following steps:
At a transmitting end, bitstream information to be transmitted is channel-coded to obtain coded bits, and then modulated to obtain modulation symbols. The modulation symbols and a DMRS are inserted into corresponding time-frequency resources, and subsequent processing is performed to obtain Orthogonal Frequency-Division Multiplexing (OFDM) symbols or other forms of multi-carrier symbols.

At a receiving end, a receiver measures the DMRS to perform demodulation and channel decoding on the modulation symbols, and finally obtains information bits to be transmitted.

The above workflow may be applied to downlink transmission (DL transmission, i.e., transmission from a network device to a terminal device), uplink transmission (UL transmission, i.e., transmission from a terminal device to a network device), or sidelink transmission (SL transmission, i.e., transmission between terminal devices or between network devices). The receiving end needs to use DMRS to obtain bit information transmitted by the transmitting end.

It is to be noted that "transmission" described in embodiments of the present disclosure may be transmission of data or transmission of control information, for example, one or more of a Physical Downlink Shared Channel (PDSCH), a Physical Uplink Shared Channel (PUSCH), a Physical Sidelink Shared Channel (PSSCH), a Physical Downlink Control Channel (PDCCH), a Physical Uplink Control Channel (PUCCH), a Physical Sidelink Control Channel (PSCCH), and a Physical Sidelink Feedback Channel (PSFCH).

Due to the complexity and time-variability of a wireless channel environment, in the above system, channel estimation and recovery for the wireless channel by the receiver directly affect final data recovery performance. In a conventional communication system, generally, DMRS of a control channel (i.e., a channel transmitting control information) is relatively fixed, and the DMRS density and/or DMRS pattern do not need to be dynamically changed. In this case, DMRS design tends to be conservative so as to adapt to various wireless channel environments. For a data channel (i.e., a channel transmitting data), different DMRS densities and/or DMRS patterns may be designed to reduce DMRS overhead, and the communication system configures or indicates, according to a current wireless channel environment, specific DMRS to be used by the receiving end.

The following briefly describes DMRS in a 5th-Generation (5G) New Radio (NR) system as an example.

In an NR system, DMRS may be classified into front-loaded DMRS and Additional RS (rear-loaded DMRS). The front-loaded DMRS is usually located in the first few OFDM symbols of a slot, and the rear-loaded DMRS is a repetition of the front-loaded DMRS and is located in one or more other OFDM symbols to guarantee performance in a high-speed scenario. The front-loaded DMRS may include 1 or 2 OFDM symbols configured by a network device. Meanwhile, NR supports two different types of DMRS, and different types of DMRS occupy time-frequency resources in different ways.

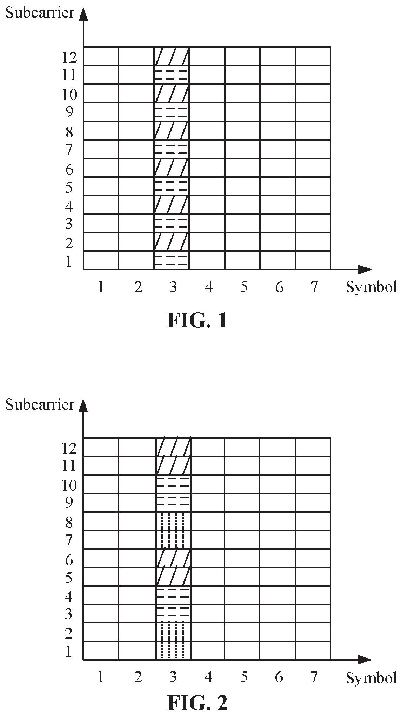

For one type of DMRS, as shown in FIG. 1, description is made by using an example in which there are 7 OFDM symbols in the time domain and 12 subcarriers in the frequency domain. Two Code Division Multiplexing (CDM) groups may be supported on one OFDM symbol. For example, two filling shapes in FIG. 1 respectively correspond to two CDM groups, each CDM group including 6 subcarriers. Each CDM group may support 2 ports, and the 2 ports are orthogonal to each other through an Orthogonal Cover Code (OCC). That is, one port uses an OCC of [+1, +1, +1, +1, +1, +1] on different subcarriers, and the other port uses an OCC of [+1, -1, +1, -1, +1, -1]. In this way, the one type of DMRS may support up to 4 orthogonal ports on one OFDM symbol and up to 8 orthogonal ports on two OFDM symbols.

For another type of DMRS, as shown in FIG. 2, description is made by using an example in which there are 7 OFDM symbols in the time domain and 12 subcarriers in the frequency domain. Three CDM groups may be supported on one OFDM symbol. For example, three filling shapes in FIG. 2 respectively correspond to three CDM groups, each CDM group including four adjacent subcarriers. Each CDM group may support 2 ports, and the 2 ports are orthogonal to each other through an OCC. That is, one port uses an OCC of [+1, +1, +1, +1] on different subcarriers, and the other port uses an OCC of [+1, -1, +1, -1]. In this way, the another type of DMRS may support up to 6 orthogonal ports on one OFDM symbol and up to 12 orthogonal ports on two OFDM symbols.

In addition, each small grid in FIG. 1 and FIG. 2 represents one Resource Element (RE). Every 12 consecutive subcarriers in the frequency domain form one Resource Block (RB).

RE: which is a minimum time-frequency resource unit in a communication system. For example, in an NR system, one RE corresponds to one subcarrier in the frequency domain and one symbol in the time domain.

RB: which may refer to K consecutive subcarriers in the frequency domain, or K consecutive subcarriers in the frequency domain and M consecutive symbols in the time domain, where K is a positive integer and M is a positive integer. For example, a typical value of K is 12, and K may also be another value such as 2ⁿ, e.g., 8 or 16. Typical values of M may be 6, 7, or 14. In embodiments of the present disclosure, no distinction is made between RB and Physical Resource Block (PRB).

In a current communication system, DMRS and data occupy different REs. That is, DMRS or data may be placed at one RE position, but DMRS and data cannot be placed at the same RE position simultaneously. Therefore, data and a DMRS are orthogonal in time-frequency resources, i.e., non-overlapping. Such DMRS non-overlapping with data may also be referred to as orthogonal DMRS. When a moving speed of a terminal device is high, more symbols in the time domain, namely more RE resources, need to be occupied by DMRS to improve channel estimation performance. In this case, RE resources available for data are reduced.

### • PDCCH:

A network device indicates transmission of a PDCCH by configuring a Control Resource Set (CORESET) and a Search Space. It is to be noted that a Search Space may also be referred to as a Search Space Set. A CORESET includes multiple PRBs in the frequency domain and 1 to 3 OFDM symbols in the time domain. Time-domain resources occupied by a CORESET are semi-statically configured by higher-layer parameters. A search space is a set of PDCCH candidates (PDCCH candidates) under one or more aggregation levels. An aggregation level of a PDCCH actually transmitted by the network device may change over time. Since no related signaling is notified to a terminal device, the terminal device needs to blindly detect the PDCCH under different aggregation levels. A PDCCH to be blindly detected is referred to as a PDCCH candidate. The terminal device decodes PDCCH candidates within the search space. If Cyclic Redundancy Check (CRC) passes, it is considered that content of the decoded PDCCH is valid for the terminal device, and subsequent operations may be performed by using information obtained through decoding.

In PDCCH design of a 5G system, a Resource-element group (REG) is composed of 12 subcarriers on one symbol, and 6 REGs form one Control Channel Element (CCE). A number of CCEs used by one PDCCH candidate reflects an aggregation level. In a 5G system, the aggregation level may be 1, 2, 4, 8, or 16, respectively corresponding to 1 CCE, 2 CCEs, 4 CCEs, 8 CCEs, and 16 CCEs.

In NR, in each downlink Bandwidth Part (BWP) of each serving cell, a network device may configure up to 10 search spaces/search space sets for a terminal device. Time-domain configuration information is configured in the search spaces/search space sets to indicate a time-domain position at which the terminal device detects a PDCCH. Meanwhile, the network device configures an associated CORESET identity (ID) for each search space/search space set. The terminal device may obtain physical resources of the search space/search space set in the frequency domain by using the CORESET ID. Each search space/search space set has a uniquely associated CORESET ID. Different search spaces/search space sets may be associated with a same CORESET ID. A UE determines a time-frequency domain position of a PDCCH candidate according to time domain, frequency domain and other parameters corresponding to the search space/search space set.

When configuring a CORESET, the network device configures one or a group of Transmission Configuration Indicator states (TCI states) for each CORESET. The TCI state is used to indicate related parameters required by the terminal device during demodulation detection on a PDCCH candidate associated with the CORESET. When the network device configures a group of TCI states for a CORESET, the network device activates one TCI state for the CORESET by using Medium Access Control (MAC) Control Element (CE) signaling to assist the terminal device in demodulating a corresponding PDCCH.

In addition, the network device further configures for each CORESET a higher-layer index which is configured to indicate whether the CORESET belongs to a same Transmission and Reception Point (TRP). A same higher-layer index is used to indicate that CORESETs are from a same TRP.

### • Multi-beam system:

Design objectives of a 5G NR system include high-bandwidth communication in a high band. When an operating frequency of a communication device increases, path loss during transmission increases, thereby affecting coverage capability of a high-frequency system. To effectively guarantee coverage of an NR system in a high band, an effective technical solution is to improve coverage capability by using a multi-beam technology based on a large-scale antenna array.

In the related art, one cell (sector) uses a relatively wide beam to cover the entire cell. Therefore, at each moment, terminal devices within a coverage range of the cell have an opportunity to obtain transmission resources allocated by a system.

A multi-beam system of 5G NR covers an entire cell by using different beams, that is, each beam covers a small range, so that multiple beams cover the entire cell. Different beams are distinguished by different signals carried thereon. For example, different Synchronization Signal Blocks (Synchronization Signal/PBCH Blocks, SSBs) are transmitted on different beams, or different Channel State Information Reference Signals (CSI-RSs) are transmitted on different beams.

In a multi-beam system, a PDCCH and a PDSCH may be transmitted by using different downlink transmission beams.

For systems below 5G, a terminal device generally has no analog beam, and therefore uses an omnidirectional antenna (or an approximately omnidirectional antenna) to receive signals transmitted by different downlink transmission beams of a network device.

For a millimeter-wave system, a terminal device may have an analog beam, and therefore needs to use a corresponding downlink reception beam to receive a signal transmitted by a corresponding downlink transmission beam of a network device. In this case, corresponding beam indication information is required to assist the terminal device in determining a beam. A multi-beam system may also be applied to a 6th-Generation (6G) communication system in the future.

In an NR protocol, beam indication information does not directly indicate a beam itself, but indicates the beam through Quasi Co-Location (QCL) between signals. When receiving a signal, to improve reception performance, a terminal device may improve a reception algorithm by using characteristics of a transmission environment corresponding to data transmission. For example, statistical characteristics of a channel may be used to optimize design and parameters of a channel estimator. In an NR system, these characteristics corresponding to data transmission are represented by QCL information (QCL-Info).

During downlink transmission, if signals are from different TRPs/panels/beams, characteristics of a transmission environment corresponding to data transmission may also change. Therefore, in an NR system, when transmitting a downlink control channel or a data channel, a network device indicates corresponding QCL information to a terminal device by using a TCI state.

One TCI state may include one or more of the following configurations:
- TCI state identity, configured to identify one TCI state;
- one or more pieces of QCL information.

Each piece of QCL information further includes one or more of the following information:
- QCL type configuration;
- QCL reference signal configuration.

The QCL type configuration may be any one of QCL typeA, QCL typeB, QCL typeC, and QCL typeD (for simplicity, QCL may be omitted in some places in the following description, for example, directly written as typeA). The QCL reference signal configuration includes one or more of an identity of a cell where a reference signal is located, a BWP identity, and a reference signal identity. Definitions of different QCL type configurations are as follows:
'QCL typeA': {Doppler shift, Doppler spread, average delay, delay spread};
'QCL typeB': {Doppler shift, Doppler spread};
'QCL typeC': {Doppler shift, average delay};
'QCL typeD': {spatial reception parameter}.

In an NR system, a network device may indicate a corresponding TCI state for a downlink signal or a downlink channel.

If the network device configures, by using a TCI state, a QCL reference signal of a downlink channel or a downlink signal as an SSB or a CSI-RS, and a QCL type configuration is typeA, typeB or typeC, a terminal device may assume that large-scale parameters of the downlink signal are the same as those of the configured SSB or CSI-RS, where the large-scale parameters are determined by the QCL type configuration.

Similarly, if the network device configures, by using a TCI state, a QCL reference signal of a downlink channel or a downlink signal as an SSB or a CSI-RS, and a QCL type configuration is typeD, a terminal device may use a same reception beam as that of the configured SSB or CSI-RS to receive the downlink signal. Generally, a downlink channel or a downlink signal and a configured SSB or CSI-RS are transmitted by a same TRP, a same panel or a same beam. If transmission TRPs, transmission panels or transmission beams of two downlink channels or two downlink signals are different, a network device usually configures different TCI states.

For a downlink control channel, a TCI state of a corresponding CORESET may be indicated by Radio Resource Control (RRC) signaling or a combination of RRC signaling and MAC signaling.

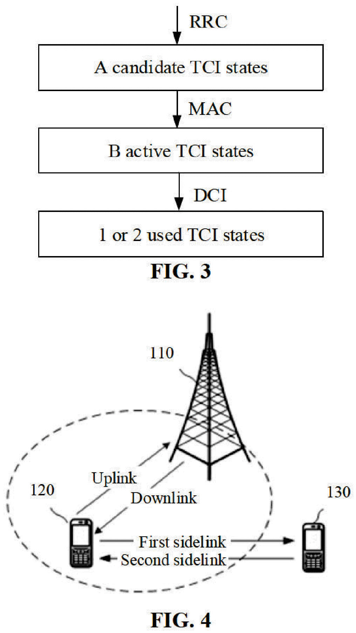

For a downlink data channel, an available TCI state set is indicated by RRC signaling, some TCI states are activated by MAC signaling, and finally one or two TCI states used for a PDSCH scheduled by Downlink Control Information (DCI) are indicated from among active TCI states through a TCI state indication field in the DCI. Exemplarily, as shown in FIG. 3, RRC signaling indicates that a TCI state set includes A TCI state candidates; B TCI state candidates among the A TCI state candidates are activated by MAC signaling to obtain B active TCI states; finally one or two used TCI states are indicated by DCI; A is a positive integer, B is a positive integer, and A is greater than or equal to B.

FIG. 4 is a schematic diagram of a communication system provided by an exemplary embodiment of the present disclosure. The communication system includes a network device 110 and a terminal device 120, and/or a terminal device 120 and a terminal device 130, which is not limited in the present disclosure.

The network device 110 in the present disclosure provides a wireless communication function. The network device 110 includes, but is not limited to: an Evolved Node B (eNB), a Radio Network Controller (RNC), a Node B (NB), a Base Station Controller (BSC), a Base Transceiver Station (BTS), a home base station (for example, a Home Evolved Node B or a Home Node B, HNB), a Baseband Unit (BBU), an Access Point (AP) in a Wireless Fidelity (Wi-Fi) system, a wireless relay node, a wireless backhaul node, a Transmission Point (TP), a Transmission and Reception Point (TRP), etc. The network device 110 may also be a Next Generation Node B (gNB) or a transmission point (TRP or TP) in a 5th Generation (5G) mobile communication system, or one or a group of (including multiple antenna panels) antenna panels of a base station in a 5G system, or a network node constituting a gNB or a transmission point such as a Baseband Unit (BBU) or a Distributed Unit (DU), etc., or a base station in a Beyond Fifth Generation (B5G) mobile communication system, a 6th Generation (6G) mobile communication system, etc., or a Core Network (CN), a Fronthaul, a Backhaul, a Radio Access Network (RAN), network slicing, etc., or a serving cell, a Primary Cell (PCell), a Primary Secondary Cell (PSCell), a Special Cell (SpCell), a Secondary Cell (SCell), a neighboring cell, etc. of a terminal device.

The terminal device 120 and/or the terminal device 130 in the present disclosure are also referred to as User Equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. The terminal includes, but is not limited to: a handheld device, a wearable device, a vehicle-mounted device, an Internet of Things device, etc., such as a mobile phone, a tablet computer, an e-book reader, a laptop computer, a desktop computer, a television, a game console, a Mobile Internet Device (MID), an Augmented Reality (AR) terminal, a Virtual Reality (VR) terminal, a Mixed Reality (MR) terminal, a wearable device, a handle, an electronic tag, a controller, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, a wireless terminal in remote medical surgery, a cellular phone, a cordless phone, a Session Initiation Protocol (SIP) phone, a Wireless Local Loop (WLL) station, a Personal Digital Assistant (PDA), a Set Top Box (STB), Customer Premise Equipment (CPE), etc.

The network device 110 and the terminal device 120 communicate with each other through a certain air interface technology, for example, a Uu interface. Exemplarily, there are two communication scenarios between the network device 110 and the terminal device 120: an uplink communication scenario and a downlink communication scenario. The uplink communication refers to transmitting a signal to the network device 110; and the downlink communication refers to transmitting a signal to the terminal device 120.

The terminal device 120 and the terminal device 130 communicate with each other through a certain air interface technology, for example, a Uu interface. Exemplarily, there are two communication scenarios between the terminal device 120 and the terminal device 130: a first sidelink communication scenario and a second sidelink communication scenario. The first sidelink communication refers to transmitting a signal to the terminal device 130; and the second sidelink communication refers to transmitting a signal to the terminal device 120.

The terminal device 120 and the terminal device 130 are both within network coverage and located in a same cell, or the terminal device 120 and the terminal device 130 are both within network coverage but located in different cells, or the terminal device 120 is within network coverage but the terminal device 130 is outside network coverage.

The technical solutions provided in embodiments of the present disclosure may be applied to various communication systems, for example: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5th Generation (5G) mobile communication system, a New Radio (NR) system, an evolved system of an NR system, LTE-based access to unlicensed spectrum (LTE-U) system, NR-based access to unlicensed spectrum (NR-U) system, a Terrestrial Networks (TN) system, a Non-Terrestrial Networks (NTN) system, Wireless Local Area Networks (WLAN), Wireless Fidelity (Wi-Fi), a cellular Internet of Things system, a cellular passive Internet of Things system. The technical solutions may also be applied to evolved systems subsequent to a 5G NR system, and may also be applied to a Beyond Fifth Generation (B5G) mobile communication system, a 6th Generation (6G) mobile communication system and subsequent evolved systems. In some embodiments of the present disclosure, "NR" may also be referred to as a 5G NR system or a 5G system. The 5G mobile communication system may include Non-Standalone (NSA) and/or Standalone (SA).

The technical solutions provided in embodiments of the present disclosure may also be applied to Machine Type Communication (MTC), Long Term Evolution-Machine (LTE-M), a Device to Device (D2D) network, a Machine to Machine (M2M) network, an Internet of Things (IoT) network or other networks. The IoT network may include, for example, an internet of vehicles. Communication modes in an internet of vehicles system are collectively referred to as Vehicle to X (V2X, where X may represent anything). For example, the V2X may include: Vehicle to Vehicle (V2V) communication, Vehicle to Infrastructure (V2I) communication, Vehicle to Pedestrian (V2P) communication, or Vehicle to Network (V2N) communication.

The communication system provided in this embodiment may be applied to one or more of the following communication scenarios, without limitation: an uplink communication scenario, a downlink communication scenario, and a sidelink communication scenario.

In some embodiments, a communication system includes multiple different DMRSs for a control channel. The multiple different DMRSs may be DMRSs of a same type or DMRSs of different types. Exemplarily, it is assumed that the communication system includes two DMRSs for a control channel, namely a first DMRS and a second DMRS. The present disclosure uses two different DMRSs as an example, which may be easily extended to a case of more different DMRSs, and details are not described herein again.

Optionally, the first DMRS and the second DMRS are DMRSs of a same type. For example, the first DMRS is a DMRS that uses different REs from control information, or it may be understood that REs used by the first DMRS are different from REs used by control information, or REs used by the first DMRS do not overlap with REs used by control information, or the first DMRS is orthogonal to control information in time-frequency resources. The second DMRS is a DMRS that uses different REs from control information, or it may be understood that REs used by the second DMRS are different from REs used by control information, or REs used by the second DMRS do not overlap with REs used by control information, or the second DMRS is orthogonal to control information in time-frequency resources. The above DMRS that uses different REs from control information is a DMRS already used in the related art, and use of such a DMRS can reduce complexity of a communication system.

Optionally, the first DMRS and the second DMRS are DMRSs of different types. For example, the first DMRS is a DMRS that uses one or more same REs as control information, or it may be understood that one or more REs for the first DMRS are also REs used by control information. The second DMRS is a DMRS that uses different REs from control information, or it may be understood that REs used by the second DMRS are different from REs used by control information, or REs used by the second DMRS do not overlap with REs used by control information, or the second DMRS is orthogonal to control information in time-frequency resources. By using the above DMRS that uses one or more same REs as control information, a number of resources used for transmitting data can be guaranteed under a fixed time-frequency resource, thereby guaranteeing a data transmission rate.

In some embodiments, different types of DMRSs include a first-type DMRS and a second-type DMRS. The first-type DMRS is a DMRS that uses one or more same REs as control information, and the second-type DMRS is a DMRS that uses different REs from control information. The present disclosure uses two DMRS types as an example, which may be easily extended to a case of more DMRS types, and details are not described herein again.

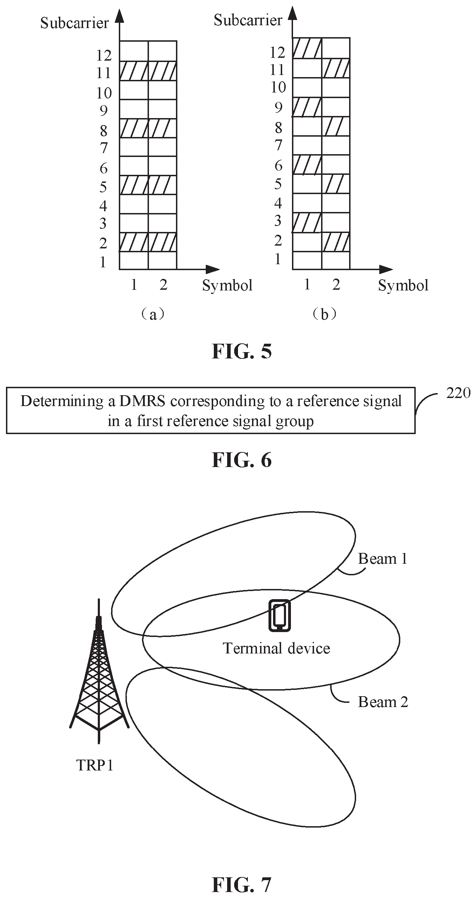

In some embodiments, positions of same REs used by the first-type DMRS and control information are optional. Exemplarily, as shown in FIG. 5, description is made by using an example in which there are 12 subcarriers in the frequency domain. Positions of same REs used by the first-type DMRS and control information are positions of 2nd, 5th, 8th, and 11th subcarriers on each symbol as shown in (a) of FIG. 5; or positions of same REs used by the first-type DMRS and control information are positions of 3rd, 6th, 9th, and 12th subcarriers on a first symbol and positions of 2nd, 5th, 8th, and 11th subcarriers on a second symbol in each group of two symbols as shown in (b) of FIG. 5. Exemplarily, the first-type DMRS and control information use completely same REs.

It is to be noted that in a CDMA system, although a pilot signal and a data signal may be transmitted on a same time-frequency resource, both the pilot signal and the data signal need to undergo additional spreading processing. For example, the pilot signal and the data signal need to use different orthogonal codes for differentiation. In other words, in CDMA in the related art, a pilot signal and a data signal transmitted on a same time-frequency resource are a spread pilot signal and a spread data signal. During reception, despreading codes are required to separate the pilot signal and the data signal, so as to implement final demodulation. However, embodiments of the present disclosure are mainly applied to an OFDM system and other systems based on multiple subcarriers. Modulation symbols of a data signal and modulation symbols of a demodulation pilot signal may be directly transmitted on a same time-frequency resource, and the pilot signal and the data signal do not need to undergo additional spreading processing. During reception, an advanced receiver is required for demodulation. That is, in embodiments of the present disclosure, a pilot signal and a data signal transmitted on a same time-frequency resource may be an unspread pilot signal and an unspread data signal.

In some embodiments, a first terminal device receives DMRS indication information transmitted by a network device and/or a second terminal device, where the DMRS indication information is used to indicate the first terminal device to determine a target DMRS used by a control channel. The target DMRS may be a first-type DMRS or a second-type DMRS. By transmitting the DMRS indication information, the network device can flexibly configure a DMRS used by a control channel, so as to better match a wireless environment and improve system performance.

Optionally, which DMRS type the first DMRS corresponds to (for example, whether the first DMRS is a first-type DMRS or a second-type DMRS) is predefined by a protocol and/or configured by a network.

Optionally, which DMRS type the second DMRS corresponds to (for example, whether the second DMRS is a first-type DMRS or a second-type DMRS) is predefined by a protocol and/or configured by a network. In a typical implementation, the second DMRS is a second-type DMRS. For example, it may be predefined that the second DMRS is a second-type DMRS without network configuration.

Some typical combinations of implementation of the first DMRS and the second DMRS are as follows:
- The first DMRS is a second-type DMRS, and the second DMRS is a second-type DMRS;
- The first DMRS is a first-type DMRS, and the second DMRS is a second-type DMRS.

The above typical combinations are for illustration only, and other combinations are not excluded. Other combinations may be directly obtained according to the above description, and are not listed one by one herein.

Optionally, when the DMRS indication information is transmitted by a network device, the above control channel corresponds to a downlink control channel, such as a PDCCH. Optionally, when the DMRS indication information is transmitted by a second terminal device, the above control channel corresponds to a sidelink control channel, such as a PSCCH.

Optionally, the above DMRS indication information may be implemented by one or more of the following messages/signaling:
- broadcast message;
- system message;
- RRC signaling;
- MAC CE signaling;
- DCI signaling;
- downlink message in a random access procedure; and
- Artificial Intelligence (AI)/Machine Learning (ML) dedicated signaling.

When DMRS indication information is indicated by a broadcast message and/or a system message, all terminal devices can be notified at one time, reducing total signaling overhead.

When DMRS indication information is indicated by RRC signaling and/or MAC CE signaling and/or DCI signaling, independent configuration can be performed for each terminal device, which is more targeted and helps to improve performance of each terminal device. In addition, reliability of RRC signaling is higher than that of MAC CE signaling and DCI signaling; delay of MAC CE signaling is lower than that of RRC signaling, and reliability of MAC CE signaling is higher than that of DCI signaling; delay of DCI signaling is lower than that of RRC signaling and MAC CE signaling. That is, reliability of RRC signaling > reliability of MAC CE signaling > reliability of DCI signaling, and delay of RRC signaling > delay of MAC CE signaling > delay of DCI signaling.

A downlink message in a random access procedure may be preconfigured, which helps to improve performance of a communication system. AI/ML dedicated signaling helps to improve communication efficiency.

In some embodiments, any of the above messages/signaling may be collocated or combined. Exemplarily, DMRS indication information is indicated by RRC signaling and MAC CE signaling. Or, DMRS indication information is indicated by a broadcast message and a system message. For a same type of signaling/message, there may also be multiple pieces of a same type of signaling/message. Exemplarily, DMRS indication information is indicated by multiple pieces of RRC signaling.

In some embodiments, the DMRS indication information includes at least one first field configured to indicate the above target DMRS. For example, the target DMRS may be a first DMRS or a second DMRS, and the target DMRS is a first-type DMRS or a second-type DMRS. Optionally, it is determined, according to different values of the first field, that the target DMRS is a first-type DMRS or a second-type DMRS. Exemplarily, values of the first field include one or more of the following options:
- a first value; and
- a second value.

When the value of the first field is the first value, it is determined that the target DMRS is the first DMRS; while when the value of the first field is the second value, it is determined that the target DMRS is the second DMRS. Or, when the value of the first field is the first value, it is determined that the target DMRS is the second DMRS; while when the value of the first field is the second value, it is determined that the target DMRS is the first DMRS. Any DMRS can be flexibly indicated by the value of the first field.

Optionally, it is determined, according to a configuration situation of the first field, that the target DMRS is the first DMRS or the second DMRS. For example, when the first field is configured, it is determined that the target DMRS is the first DMRS; and when the first field is not configured, it is determined that the target DMRS is the second DMRS. Or, when the first field is configured, it is determined that the target DMRS is the second DMRS; and when the first field is not configured, it is determined that the target DMRS is the first DMRS. Optionally, when the first field is configured, the value of the first field may be "enable" or "support", or another related form. Signaling overhead can be saved by determining the target DMRS according to the configuration situation of the first field.

Optionally, a CHOICE structure is used in the DMRS indication information, and different fields are configured to indicate that the target DMRS is a first-type DMRS or a second-type DMRS. In this case, as an embodiment, the DMRS indication information may be transmitted by RRC signaling.

In some embodiments, the above DMRS indication information is configured for one or more of the following objects:
- configured for one cell or one carrier, which can reduce signaling overhead;
- configured for a PSCCH, which can reduce signaling overhead;
- configured for a CORESET, which can control each CORESET more flexibly with a higher degree of freedom;
- configured for a CORESET group, which can control each CORESET group more flexibly with a higher degree of freedom;
- configured for a search space, which can control each search space flexibly with a higher degree of freedom; and
- configured for a search space group, which can control each group of search spaces flexibly with a higher degree of freedom, where the search space group may include one or more search spaces/search space sets.

In some embodiments, to avoid an ambiguous phase during switching between different DMRSs and improve system stability, the above DMRS indication information is not used in the following cases:
- CORESET with a number 0, namely CORESET 0;
- search space with a number 0, namely Search Space 0;
- CORESET corresponding to search space 0;
- search space for receiving a first system message;
- CORESET corresponding to a search space for receiving a first system message;
- search space for receiving another system message;
- CORESET corresponding to a search space for receiving another system message;
- search space for paging;
- CORESET corresponding to a search space for paging;
- search space for random access; and
- CORESET corresponding to a search space for random access.

In some embodiments, the DMRS indication information indicates a power parameter of a target DMRS. Or a power parameter of a target DMRS is predefined, for example, predefined by a protocol or predefined by broadcast information. In embodiments of the present disclosure, "power" may also be extended to "energy", which is not limited. If the power parameter of the target DMRS is indicated by the DMRS indication information, an indication manner of the power parameter of the target DMRS is more flexible, and a system can flexibly determine the power parameter of the target DMRS; if the power parameter of the target DMRS is predefined, signaling overhead can be saved.

In some embodiments, the DMRS indication information indicates a frequency-domain resource density and/or a frequency-domain resource position of a target DMRS. Or a frequency-domain resource density and/or a frequency-domain resource position of a target DMRS is predefined, for example, predefined by a protocol or predefined by broadcast information. In some embodiments, the DMRS indication information indicates a time-domain density and/or a time-domain resource position of a target DMRS. In some embodiments, the DMRS indication information indicates a sequence generation parameter of a target DMRS.

### For Beam Failure Detection:

In some embodiments, a first terminal device assesses link quality based on a first reference signal group, where the first reference signal group includes one or more reference signals. Optionally, the first reference signal group corresponds to a first TRP, and each reference signal in the first reference signal group is associated with one beam of the first TRP. Optionally, the reference signal is a CSI-RS and/or an SSB. Optionally, the reference signal is a periodic signal.

Optionally, the first terminal device further assesses link quality based on a second reference signal group, where the second reference signal group includes one or more reference signals. Optionally, the second reference signal group corresponds to a second TRP, and each reference signal in the second reference signal group is associated with one beam of the second TRP. Optionally, the reference signal is a CSI-RS and/or an SSB. Optionally, the reference signal is a periodic signal.

Optionally, the first terminal device separately assesses link quality based on the first reference signal group and the second reference signal group. Optionally, the first terminal device jointly assesses link quality based on the first reference signal group and the second reference signal group. The link quality may be used to indicate or assess whether a target event occurs, for example, whether beam failure occurs. Conditions for the target event to occur include one or more of the following:
- The link quality is lower than a first threshold;
- The number of consecutive times that the link quality is lower than the first threshold is greater than or greater than or equal to a preset value (deto be noted as an E1 count threshold), where the preset value may be predefined or network-configured; for example, for a periodic reference signal, one assessment is performed based on a measurement result of each signal, and if the link quality is lower than the first threshold for N1_successive consecutive times, it is determined that the target event occurs, where N1_successive is a positive integer;
- The number of times that the link quality is lower than a second threshold within a first target time (or a first target window) is greater than or greater than or equal to a first count threshold;
- A difference between the link quality and a third threshold is greater than a first difference threshold; and
- The number of consecutive times that a difference between the link quality and the third threshold is greater than the first difference threshold is greater than or greater than or equal to a preset value (deto be noted as an E2 count threshold), where the preset value may be predefined or network-configured; for example, for a periodic reference signal, one assessment is performed based on a measurement result of each signal, and if the difference between the link quality and the third threshold is greater than the first difference threshold for N2_successive consecutive times, it is determined that the target event occurs, where N2_successive is a positive integer.

In some embodiments, the first terminal device assesses the link quality in one or more manners. For example, the first terminal device may assess the link quality based on Reference Signal Receiving Power (RSRP) of the reference signal. Alternatively, the first terminal device may assess the link quality based on Signal to Interference plus Noise Ratio (SINR) of the reference signal. Alternatively, the first terminal device may assess the link quality based on transmission quality of a control channel, for example, based on a hypothetical Block Error Rate (BLER).

When the first terminal device assesses the link quality based on the transmission quality of the control channel, different DMRSs have different impacts on control channel transmission, due to the following aspects:
- Different DMRSs may result in different available resources for control information transmission. For example, when DMRS and control information transmission use different REs, control information cannot use REs occupied by DMRS; when DMRS and control information transmission may share part or all of REs, more REs are available for control information; as another example, when DMRS and control information transmission use different REs, different DMRSs themselves may occupy different resources;
- Different DMRSs have different mutual interference with control information; and
- Different DMRSs have different channel estimation performance.

Therefore, when two DMRSs exist, it is necessary to determine a DMRS corresponding to link quality assessment. This may also be understood as determining which DMRS assumption is used to assess link quality, or which DMRS is assumed for link quality assessment, or which DMRS is used as an assumption for link quality assessment.

It is to be noted that some "DMRS" in embodiments of the present disclosure may be extendedly understood as a DMRS pattern, namely a time-frequency position of a DMRS, a DMRS type, a DMRS sequence, or a DMRS pattern. These terms may be regarded as equivalent and interchangeable concepts in embodiments of the present disclosure. Details are not repeatedly extended in embodiments of the present disclosure, but it should be understood that no limitation is imposed in embodiments of the present disclosure.

FIG. 6 is a flowchart of a method for determining a DMRS according to an exemplary embodiment of the present disclosure. The method is performed by a first terminal device, and includes:
Step 220: Determining a DMRS corresponding to a reference signal in a first reference signal group.

In some embodiments, the reference signal in the first reference signal group and the DMRS corresponding to the reference signal in the first reference signal group are used to assess first link quality. Alternatively, it may be understood that the first link quality is assessed in combination with the reference signal in the first reference signal group and the DMRS corresponding to the reference signal in the first reference signal group. The reference signal in the first reference signal group is used to assess the first link quality, and the DMRS corresponding to the reference signal is also used to assess the first link quality, that is, the first link quality is assessed based on the reference signal in the first reference signal group, or the first link quality is assessed based on the reference signal in the first reference signal group and the corresponding DMRS.

In some embodiments, the first link quality is link quality corresponding to the reference signal in the first reference signal group. Alternatively, it may be understood that the first link quality is link quality of a beam corresponding to the reference signal in the first reference signal group. For example, the first reference signal group is associated with TRP1, and each reference signal in the first reference signal group is associated with one beam of TRP1. The first link quality is used to indicate whether a target event occurs, for example, whether beam failure occurs.

Exemplarily, as shown in FIG. 7, each beam of TRP1 corresponds to one reference signal, and each beam covers a different communication range. The terminal device may assess link quality based on reference signals corresponding to different beams and DMRSs corresponding to the reference signals. For example, the terminal device may assess link quality of beam 1 based on a reference signal corresponding to beam 1, and/or assess link quality of beam 2 based on a reference signal corresponding to beam 2; or the terminal device may assess current link quality based on the reference signal corresponding to beam 1 and the reference signal corresponding to beam 2. For example, when the terminal device is within a communication area covered by beam 2, the link quality of beam 1 assessed based on the reference signal corresponding to beam 1 does not satisfy a link quality condition, that is, beam failure occurs. As another example, when the terminal device is within a certain communication area, if the link quality assessed based on the reference signal corresponding to beam 1 and the reference signal corresponding to beam 2 does not satisfy a link quality condition (for example, both beam 1 and beam 2 have poor links), it is determined that the target event (i.e., beam failure) occurs. As another example, the terminal device may assess link quality of beam 1 based on the reference signal corresponding to beam 1 and a DMRS corresponding to beam 1, and assess link quality of beam 2 based on the reference signal corresponding to beam 2 and a DMRS corresponding to beam 2. If two types of DMRS exist for the DMRS corresponding to beam 1/2, it is necessary to determine a DMRS corresponding to the reference signal in the first reference signal group, or determine a DMRS type or DMRS assumption corresponding to a beam associated with the reference signal in the first reference signal group, where the DMRS type or DMRS assumption is used to assess link quality of the beam. In this example, beams are introduced for simplicity of description. In a protocol, beams may not be considered or explicitly mentioned, and only reference signals are directly considered. For example, the "reference signal corresponding to beam 1" mentioned above may be directly replaced with "reference signal (RS)1", the "reference signal corresponding to beam 2" may be directly replaced with "reference signal (RS)2", the "link quality of beam 1" may be replaced with "link quality corresponding to RS1", the "link quality of beam 2" may be replaced with "link quality corresponding to RS2", and so on. In the present disclosure, "reference signal" and "link quality corresponding to the reference signal" are used for description, but they should also be understood as "reference signal corresponding to a beam" and "link quality of a beam", and details are not repeatedly described in embodiments of the present disclosure.

In some embodiments, in a wireless link environment, different DMRSs may influence final transmission performance. Some possible factors include one or more of the following: different DMRSs occupy different overheads, different DMRSs have different interference with data signals, and different DMRSs have different channel estimation performance. Therefore, when two types of DMRSs exist, it is necessary to determine which DMRS is used as an assumed DMRS for a control channel.

In some embodiments, the DMRS corresponding to the reference signal in the first reference signal group is determined to be a first DMRS or a second DMRS. The DMRS corresponding to the reference signal in the first reference signal group is a first-type DMRS or a second-type DMRS, where the first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the reference signal in the first reference signal group is determined to be the first DMRS. Alternatively, it is understood that the first DMRS corresponding to the reference signal in the first reference signal group is used as a DMRS assumption, or it is assumed that the first DMRS corresponding to the reference signal in the first reference signal group is used for assessing the first link quality. Optionally, the first DMRS is the first-type DMRS in this case.

In some embodiments, the DMRS corresponding to the reference signal in the first reference signal group is determined to be the second DMRS. Alternatively, it is understood that the second DMRS corresponding to the reference signal in the first reference signal group is used as a DMRS assumption, or it is assumed that the second DMRS corresponding to the reference signal in the first reference signal group is used for assessing the first link quality. Optionally, the second DMRS is the second-type DMRS in this case.

In the method provided in this embodiment, by determining the DMRS corresponding to the reference signal in the first reference signal group, the terminal device can determine which DMRS is used as a DMRS assumption. The link quality of a beam is assessed by determining an assumed DMRS for a control channel, thereby improving accuracy of link quality assessment when either one of two types of DMRSs may be used.

**In some embodiments,** the **reference signal in** the **first reference signal group is indicated by first indication information.**

Optionally, the first terminal device receives the first indication information transmitted by a network device or a second terminal device, where the first indication information is used to indicate or configure the reference signal in the first reference signal group. Optionally, the first indication information is further used to indicate parameter information related to a target event. For example, the first indication information is further used to indicate one or more of a first threshold, a first target time, a second threshold, a first count threshold, a third threshold, a first difference threshold, an E1 count threshold, and an E2 count threshold related to the target event. Optionally, the first indication information is transmitted through one or more of RRC signaling, MAC CE signaling, and DCI signaling.

It is to be noted that a communication protocol generally does not explicitly specify a correspondence between reference signals and beams. However, in an actual communication process, it may be simply understood that one reference signal corresponds to one beam. Therefore, when assessing link quality corresponding to a reference signal, link quality corresponding to a beam is actually assessed.

In a further embodiment based on the embodiment shown in FIG. 6, step 220 may be replaced with the following sub-step:
Step 221: Determining a DMRS corresponding to each reference signal in the first reference signal group indicated by first indication information.

The DMRS corresponding to each reference signal is used to assess link quality corresponding to each reference signal.

When the first indication information indicates a DMRS corresponding to each reference signal in the first reference signal group, the DMRS corresponding to each reference signal in the first reference signal group indicated by the first indication information is determined as the DMRS corresponding to each reference signal in the first reference signal group during link quality assessment.

The DMRS corresponding to each reference signal in the first reference signal group is the first DMRS or the second DMRS. The DMRS corresponding to each reference signal in the first reference signal group is the first-type DMRS or the second-type DMRS. Target DMRSs corresponding to different reference signals are the same or different. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS. In some embodiments, the first DMRS is the first-type DMRS, and the second DMRS is the second-type DMRS; or the first DMRS is the second-type DMRS, and the second DMRS is the second-type DMRS.

Exemplarily, assume that the first reference signal group includes three reference signals, namely a first reference signal, a second reference signal, and a third reference signal. When the first indication information indicates that the DMRS corresponding to the first reference signal is the first DMRS, the DMRS corresponding to the second reference signal is the first DMRS, and the DMRS corresponding to the third reference signal is the second DMRS, it is determined that link quality corresponding to the first reference signal is assessed using the first reference signal and the first DMRS corresponding to the first reference signal, link quality corresponding to the second reference signal is assessed using the second reference signal and the first DMRS corresponding to the second reference signal, and link quality corresponding to the third reference signal is assessed using the third reference signal and the second DMRS corresponding to the third reference signal.

Exemplarily, as shown in FIG. 7, beam 1 corresponds to the first reference signal, and beam 2 corresponds to the second reference signal. When the first indication information indicates that the DMRS corresponding to the first reference signal corresponding to beam 1 is the first DMRS and the DMRS corresponding to the second reference signal corresponding to beam 2 is the second DMRS, the first DMRS corresponding to the first reference signal is used as a DMRS assumption for assessing link quality of beam 1, and the second DMRS corresponding to the second reference signal is used as a DMRS assumption for assessing link quality of beam 2.

In the method provided in embodiments of the present disclosure, by determining the respective DMRS corresponding to each reference signal in the first reference signal group as the DMRS corresponding to each reference signal in the first reference signal group, which DMRS is used as an assumption can be flexibly determined, so that link quality can be more accurately determined. In the method, different DMRSs may be used as assumptions for different beams, thereby helping a communication system flexibly configure different DMRSs on different beams to achieve higher flexibility. When different beams correspond to different DMRSs, different DMRSs need to be considered to assess link quality of the two beams.

In a further embodiment based on the embodiment shown in FIG. 6, step 220 may be replaced with the following sub-step:
Step 222: When first indication information indicates a DMRS corresponding to the first reference signal group, determining the DMRS corresponding to the first reference signal group as the DMRS corresponding to each reference signal in the first reference signal group.

The DMRS corresponding to each reference signal is used to assess link quality corresponding to each reference signal.

The DMRS corresponding to the first reference signal group is the first DMRS or the second DMRS, and the DMRS corresponding to the first reference signal group is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information. In some embodiments, the first DMRS is the first-type DMRS, and the second DMRS is the second-type DMRS; or the first DMRS is the second-type DMRS, and the second DMRS is the second-type DMRS. The DMRS corresponding to the first reference signal group represents a DMRS configured in a granularity of a whole set, and each reference signal in the first reference signal group corresponds to the same DMRS.

In some embodiments, when the first indication information indicates that the DMRS corresponding to the first reference signal group is the first DMRS, the DMRS corresponding to each reference signal in the first reference signal group is determined to be the first DMRS. That is, the first DMRS is used to assess link quality corresponding to each reference signal in the first reference signal group.

In some embodiments, when the first indication information indicates that the DMRS corresponding to the first reference signal group is the second DMRS, the DMRS corresponding to each reference signal in the first reference signal group is determined to be the second DMRS. That is, the second DMRS is used to assess link quality corresponding to each reference signal in the first reference signal group.

Exemplarily, assume that the first reference signal group includes three reference signals, namely a first reference signal, a second reference signal, and a third reference signal. When the first indication information indicates that the DMRS corresponding to the first reference signal group is the first DMRS, it is determined that the DMRSs corresponding to the first reference signal, the second reference signal, and the third reference signal are all the first DMRS, link quality corresponding to the first reference signal is assessed using the first reference signal and the first DMRS, link quality corresponding to the second reference signal is assessed using the second reference signal and the first DMRS, and link quality corresponding to the third reference signal is assessed using the third reference signal and the first DMRS. Alternatively, when the first indication information indicates that the DMRS corresponding to the first reference signal group is the second DMRS, it is determined that the DMRSs corresponding to the first reference signal, the second reference signal, and the third reference signal are all the second DMRS, link quality corresponding to the first reference signal is assessed using the first reference signal and the second DMRS, link quality corresponding to the second reference signal is assessed using the second reference signal and the second DMRS, and link quality corresponding to the third reference signal is assessed using the third reference signal and the second DMRS.

Exemplarily, as shown in FIG. 7, beam 1 corresponds to the first reference signal, and beam 2 corresponds to the second reference signal. When the first indication information indicates that the DMRS corresponding to the first reference signal group is the first DMRS, the DMRS corresponding to the first reference signal corresponding to beam 1 is the first DMRS, and the DMRS corresponding to the second reference signal corresponding to beam 2 is also the first DMRS, then the first DMRS corresponding to the first reference signal group is used as a DMRS assumption for assessing link quality of beam 1 and beam 2.

In the method provided in embodiments of the present disclosure, by determining the DMRS corresponding to the first reference signal group as the DMRS corresponding to each reference signal in the first reference signal group, which DMRS is used to assess link quality of a beam can be determined, and signaling overhead is effectively reduced.

In a further embodiment based on the embodiment shown in FIG. 6, step 220 may be replaced with the following sub-step:
Step 223: Determining a DMRS corresponding to each reference signal in the first reference signal group based on a DMRS used by a control channel.

The DMRS corresponding to each reference signal is used to assess link quality corresponding to each reference signal.

In some embodiments, the first terminal device receives configuration information of the control channel, where the configuration information of the control channel includes the DMRS used by the control channel. Optionally, the DMRS used by the control channel is the first DMRS or the second DMRS, and the DMRS used by the control channel is the first-type DMRS or the second-type DMRS. The first DMRS may be the first-type DMRS or the second-type DMRS, and the second DMRS may be the second-type DMRS. In some embodiments, the first DMRS is the first-type DMRS, and the second DMRS is the second-type DMRS; or the first DMRS is the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, when the control channel uses the first DMRS, the first DMRS is determined as the DMRS corresponding to each reference signal in the first reference signal group. Then the first DMRS is used as a DMRS assumption for assessing link quality corresponding to each reference signal in the first reference signal group.

In some embodiments, when the control channel uses the second DMRS, the second DMRS is determined as the DMRS corresponding to each reference signal in the first reference signal group. Then the second DMRS is used as a DMRS assumption for assessing link quality corresponding to each reference signal in the first reference signal group.

In some embodiments, when the control channel does not use the first DMRS, the second DMRS is determined as the DMRS corresponding to each reference signal in the first reference signal group. Then the second DMRS is used as a DMRS assumption for assessing link quality corresponding to each reference signal in the first reference signal group. In some embodiments, when the control channel does not use the second DMRS, the first DMRS is determined as the DMRS corresponding to each reference signal in the first reference signal group. Then the first DMRS is used as a DMRS assumption for assessing link quality corresponding to each reference signal in the first reference signal group. For example, the first DMRS is the first-type DMRS, and the second DMRS is the second-type DMRS in this case.

In the method provided in embodiments of the present disclosure, the DMRS corresponding to each reference signal in the first reference signal group is determined based on the DMRS used by the control channel, without additional first indication information to indicate the DMRS, thereby effectively reducing signaling overhead.

In some embodiments, in a further embodiment based on the embodiment shown in FIG. 6, step 220 may be replaced with the following sub-step:
Step 224: Determining a target DMRS as a DMRS corresponding to each reference signal in the first reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information. In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the first reference signal group. Then the first DMRS is used as a DMRS assumption for assessing link quality corresponding to each reference signal in the first reference signal group.

In some embodiments, the second DMRS is determined as the DMRS corresponding to each reference signal in the first reference signal group. Then the second DMRS is used as a DMRS assumption for assessing link quality corresponding to each reference signal in the first reference signal group.

In the method provided in embodiments of the present disclosure, by determining a target DMRS as the DMRS corresponding to each reference signal in the first reference signal group, which DMRS is used as an assumption can be determined without indication of other indication information, thereby effectively reducing signaling overhead.

**In some embodiments,** the **first indication information does not indicate** the **reference signal in** the **first reference signal group.** The reference signal in the first reference signal group is determined based on configuration information of the control channel.

Optionally, the reference signal in the first reference signal group is determined based on a TCI state corresponding to a target CORESET in the control channel. When one TCI state corresponds to at least two reference signals, the reference signal in the first reference signal group is determined based on a reference signal corresponding to QCL typeD.

In a further embodiment based on the embodiment shown in FIG. 6, step 220 may be replaced with the following sub-step:
Step 225: When a first reference signal in the first reference signal group is determined based on a TCI state corresponding to a target CORESET in a control channel, determining a DMRS corresponding to the target CORESET as the DMRS corresponding to the first reference signal in the first reference signal group.

The DMRS corresponding to the first reference signal is used to assess link quality corresponding to the first reference signal.

In some embodiments, the DMRS corresponding to the target CORESET may also be understood as a DMRS adopted by a PDCCH transmitted in the target CORESET. The DMRS corresponding to the target CORESET is the first DMRS or the second DMRS, and the DMRS corresponding to the target CORESET is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information. In some embodiments, the first DMRS is the first-type DMRS, and the second DMRS is the second-type DMRS; or the first DMRS is the second-type DMRS, and the second DMRS is the second-type DMRS.

The target CORESET is a CORESET used to determine the first reference signal, and the first reference signal is determined based on a TCI state corresponding to the target CORESET in the control channel.

In some embodiments, when the DMRS corresponding to the target CORESET is the first DMRS, the DMRS corresponding to the first reference signal in the first reference signal group is determined to be the first DMRS. Then the first DMRS is used as a DMRS assumption for assessing link quality corresponding to the first reference signal. For example, the first DMRS is the first-type DMRS in this case.

In some embodiments, when the DMRS corresponding to the target CORESET is the second DMRS, the DMRS corresponding to the first reference signal in the first reference signal group is determined to be the second DMRS. Then the second DMRS is used as a DMRS assumption for assessing link quality corresponding to the first reference signal. For example, the second DMRS is the second-type DMRS in this case.

In the method provided in embodiments of the present disclosure, the DMRS corresponding to the first reference signal in the first reference signal group is determined with reference to the DMRS corresponding to the target CORESET, so that which DMRS is used as an assumption can be determined more accurately corresponding to an actual transmission process. Meanwhile, no additional first indication information is needed to indicate the DMRS, thereby effectively reducing signaling overhead.

In a further embodiment based on the embodiment shown in FIG. 6, step 220 may be replaced with the following sub-step:
Step 226: Determining a DMRS corresponding to each reference signal in the first reference signal group based on DMRSs corresponding to multiple CORESETs corresponding to the reference signal in the first reference signal group.

The DMRS corresponding to each reference signal is used to assess link quality corresponding to each reference signal.

In some embodiments, in a case where one or more CORESETs among multiple CORESETs corresponding to the reference signal in the first reference signal group correspond to the first DMRS, the first DMRS is determined as the DMRS corresponding to each reference signal in the first reference signal group. Then the first DMRS is used as a DMRS assumption for assessing link quality corresponding to each reference signal in the first reference signal group. For example, the first DMRS is the first-type DMRS in this case.

In some embodiments, in a case where one or more CORESETs among multiple CORESETs corresponding to the reference signal in the first reference signal group correspond to the second DMRS, the second DMRS is determined as the DMRS corresponding to each reference signal in the first reference signal group. Then the second DMRS is used as a DMRS assumption for assessing link quality corresponding to each reference signal in the first reference signal group. For example, the second DMRS is the second-type DMRS in this case.

In some embodiments, in a case where all of multiple CORESETs corresponding to the reference signal in the first reference signal group use the first DMRS, the first DMRS is determined as the DMRS corresponding to each reference signal in the first reference signal group. Then the first DMRS is used as a DMRS assumption for assessing link quality corresponding to each reference signal in the first reference signal group. For example, the first DMRS is the first-type DMRS in this case.

In some embodiments, in a case where all of multiple CORESETs corresponding to the reference signal in the first reference signal group use the second DMRS, the second DMRS is determined as the DMRS corresponding to each reference signal in the first reference signal group. Then the second DMRS is used as a DMRS assumption for assessing link quality corresponding to each reference signal in the first reference signal group. For example, the second DMRS is the second-type DMRS in this case. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information. In some embodiments, the first DMRS is the first-type DMRS, and the second DMRS is the second-type DMRS; or the first DMRS is the second-type DMRS, and the second DMRS is the second-type DMRS.

In the method provided in embodiments of the present disclosure, the DMRS corresponding to each reference signal in the first reference signal group is determined based on DMRSs corresponding to multiple CORESETs corresponding to the reference signal in the first reference signal group, so that which DMRS is used as an assumption can be determined, and signaling overhead is effectively reduced. Moreover, in a scenario where multiple CORESETs exist, the DMRS corresponding to each reference signal can also be reasonably determined.

In some embodiments, in a further embodiment based on the embodiment shown in FIG. 6, step 220 may be replaced with the following sub-step:
Step 227: Determining a target DMRS as a DMRS corresponding to each reference signal in the first reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information. In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the first reference signal group. Then the first DMRS is used as a DMRS assumption for assessing link quality corresponding to each reference signal in the first reference signal group.

In some embodiments, the second DMRS is determined as the DMRS corresponding to each reference signal in the first reference signal group. Then the second DMRS is used as a DMRS assumption for assessing link quality corresponding to each reference signal in the first reference signal group.

In the method provided in embodiments of the present disclosure, by determining the target DMRS as the DMRS corresponding to each reference signal in the first reference signal group, which DMRS is used as an assumption can be determined without indication of other indication information, thereby effectively reducing signaling overhead.

**In** some embodiments, the reference signal in the first reference signal group is determined based on a TCI state corresponding to a target search space in the control channel.

When one TCI state corresponds to at least two reference signals, the reference signal in the first reference signal group is determined based on a reference signal corresponding to QCL typeD. In a further embodiment based on the embodiment shown in FIG. 6, step 220 may be replaced with the following sub-step:
Step 228: When a second reference signal in the first reference signal group is determined based on a TCI state corresponding to a target search space in a control channel, determining a DMRS corresponding to the target search space as a DMRS corresponding to the second reference signal.

The DMRS corresponding to the second reference signal is used to assess link quality corresponding to the second reference signal.

In some embodiments, the DMRS corresponding to the target search space may also be understood as a DMRS adopted by a PDCCH transmitted in the target search space. The DMRS corresponding to the target search space is the first DMRS or the second DMRS, and the DMRS corresponding to the target search space is the first-type DMRS or the second-type DMRS. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS. In some embodiments, the first DMRS is the first-type DMRS, and the second DMRS is the second-type DMRS; or the first DMRS is the second-type DMRS, and the second DMRS is the second-type DMRS.

The second reference signal is determined based on a TCI state corresponding to the target search space in the control channel.

In some embodiments, when the DMRS corresponding to the target search space is the first DMRS, the DMRS corresponding to the second reference signal in the first reference signal group is determined to be the first DMRS. Then the first DMRS is used as a DMRS assumption for assessing link quality corresponding to the second reference signal. For example, the first DMRS is the first-type DMRS in this case.

In some embodiments, when the DMRS corresponding to the target search space is the second DMRS, the DMRS corresponding to the second reference signal in the first reference signal group is determined to be the second DMRS. Then the second DMRS is used as a DMRS assumption for assessing link quality corresponding to the second reference signal. For example, the second DMRS is the second-type DMRS in this case.

In the method provided in embodiments of the present disclosure, the DMRS corresponding to the second reference signal in the first reference signal group is determined with reference to the DMRS corresponding to the target search space, so that which DMRS is used as an assumption can be determined more accurately corresponding to an actual transmission process. Meanwhile, no additional first indication information is needed to indicate the DMRS, thereby effectively reducing signaling overhead.

In a further embodiment based on the embodiment shown in FIG. 6, step 220 may be replaced with the following sub-step:
Step 229: Determining a DMRS corresponding to each reference signal in the first reference signal group based on DMRSs corresponding to multiple search spaces corresponding to the reference signal in the first reference signal group.

The DMRS corresponding to each reference signal is used to assess link quality corresponding to each reference signal.

In some embodiments, in a case where one or more search spaces among multiple search spaces corresponding to the reference signal in the first reference signal group correspond to the first DMRS, the first DMRS is determined as the DMRS corresponding to each reference signal in the first reference signal group. Then the first DMRS is used as a DMRS assumption for assessing link quality corresponding to each reference signal in the first reference signal group. For example, the first DMRS is the first-type DMRS in this case.

In some embodiments, in a case where one or more search spaces among multiple search spaces corresponding to the reference signal in the first reference signal group correspond to the second DMRS, the second DMRS is determined as the DMRS corresponding to each reference signal in the first reference signal group. Then the second DMRS is used as a DMRS assumption for assessing link quality corresponding to each reference signal in the first reference signal group. For example, the second DMRS is the second-type DMRS in this case.

In some embodiments, in a case where all of multiple search spaces corresponding to the reference signal in the first reference signal group use the first DMRS, the first DMRS is determined as the DMRS corresponding to each reference signal in the first reference signal group. Then the first DMRS is used as a DMRS assumption for assessing link quality corresponding to each reference signal in the first reference signal group. For example, the first DMRS is the first-type DMRS in this case.

In some embodiments, in a case where all of multiple search spaces corresponding to the reference signal in the first reference signal group use the second DMRS, the second DMRS is determined as the DMRS corresponding to each reference signal in the first reference signal group. Then the second DMRS is used as a DMRS assumption for assessing link quality corresponding to each reference signal in the first reference signal group. For example, the second DMRS is the second-type DMRS in this case. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In the method provided in embodiments of the present disclosure, the DMRS corresponding to each reference signal in the first reference signal group is determined based on DMRSs corresponding to multiple search spaces corresponding to the reference signal in the first reference signal group, so that which DMRS is used as an assumption can be determined, and signaling overhead is effectively reduced. Moreover, in a scenario where multiple search spaces exist, the DMRS corresponding to each reference signal can also be reasonably determined.

In some embodiments, in a further embodiment based on the embodiment shown in FIG. 6, step 220 may be replaced with the following sub-step:

Step 230: Determining a target DMRS as a DMRS corresponding to each reference signal in the first reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the first reference signal group. Then the first DMRS is used as a DMRS assumption for assessing link quality corresponding to each reference signal in the first reference signal group.

In some embodiments, the second DMRS is determined as the DMRS corresponding to each reference signal in the first reference signal group. Then the second DMRS is used as a DMRS assumption for assessing link quality corresponding to each reference signal in the first reference signal group.

In the method provided in embodiments of the present disclosure, by determining the target DMRS as the DMRS corresponding to each reference signal in the first reference signal group, which DMRS is used as an assumption can be determined without indication of other indication information, thereby effectively reducing signaling overhead.

It is noted that any one of steps 221 to 230 may be implemented as a separate embodiment.

The foregoing embodiments are directed to a beam failure detection scenario for a single TRP. In some embodiments, a beam failure detection scenario for two TRPs further includes the following embodiments:

In some embodiments, for a case of two reference signal groups: a first reference signal group corresponds to one or more reference signals, and a second reference signal group corresponds to one or more reference signals. In this case, it is assumed that first indication information indicates which DMRS (the first DMRS or the second DMRS) is used by a reference signal corresponding to the first reference signal group and which DMRS (the first DMRS or the second DMRS) is used by a reference signal corresponding to the second reference signal group. Then, when assessing link quality based on the first reference signal group, the first terminal device assumes that the DMRS corresponding to the reference signal in the first reference signal group is used; and when assessing link quality based on the second reference signal group, the first terminal device assumes that the DMRS corresponding to the reference signal in the second reference signal group is used. Specifically, as described in the following embodiment:

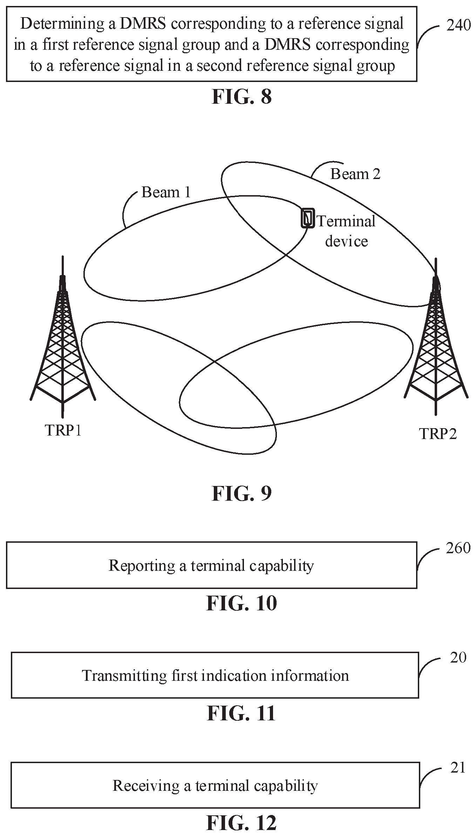

FIG. 8 is a flowchart of a method for determining a DMRS according to an exemplary embodiment of the present disclosure. The method is performed by a first terminal device, and includes:
Step 240: Determining a DMRS corresponding to a reference signal in a first reference signal group and a DMRS corresponding to a reference signal in a second reference signal group.

In some embodiments, a manner of determining the DMRS corresponding to the reference signal in the first reference signal group refers to steps 220 to 230. Details are not described again in the following embodiment.

In some embodiments, the reference signal in the second reference signal group and the DMRS corresponding to the reference signal in the second reference signal group are used to assess second link quality. Alternatively, it may be understood that the second link quality is assessed in combination with the reference signal in the second reference signal group and the DMRS corresponding to the reference signal in the second reference signal group. The reference signal in the second reference signal group is used to assess the second link quality, and the DMRS corresponding to the reference signal is also used to assess the second link quality, that is, the second link quality is assessed based on the reference signal in the second reference signal group, or the second link quality is assessed based on both the reference signal in the second reference signal group and the corresponding DMRS.

In some embodiments, the second link quality is link quality corresponding to the reference signal in the second reference signal group. Alternatively, it may be understood that the second link quality is link quality of a beam corresponding to the reference signal in the second reference signal group. For example, the second reference signal group is associated with TRP2, and each reference signal in the second reference signal group is associated with one beam of TRP2.

The second link quality is used to indicate whether a target event occurs, for example, whether beam failure occurs.

In some embodiments, the first terminal device assesses first link quality based on the reference signal in the first reference signal group, and/or assesses second link quality based on the reference signal in the second reference signal group. Exemplarily, as shown in FIG. 9, each beam of TRP1 corresponds to one reference signal in the first reference signal group, each beam of TRP2 also corresponds to one reference signal in the second reference signal group, and each beam covers a different communication range. The terminal device may assess link quality based on reference signals corresponding to different beams, and may also assess link quality based on DMRSs corresponding to different reference signals. For example, the terminal device may assess link quality based on a reference signal corresponding to beam 1 of TRP1, and/or assess link quality based on a reference signal corresponding to beam 2 of TRP2. When the terminal device is within a communication area covered by beam 2 of TRP2, the link quality assessed based on the reference signal corresponding to beam 1 of TRP1 does not satisfy a link quality condition, that is, beam failure occurs. As another example, the terminal device may assess link quality of beam 1 based on the reference signal corresponding to beam 1 and a DMRS corresponding to beam 1, and assess link quality of beam 2 based on the reference signal corresponding to beam 2 and a DMRS corresponding to beam 2. If two types of DMRS exist for the DMRS corresponding to beam 1/2, it is necessary to determine a DMRS corresponding to a reference signal associated with beam 1/2.

In some embodiments, the DMRS corresponding to the reference signal in the second reference signal group is determined to be the first DMRS or the second DMRS. The DMRS corresponding to the reference signal in the second reference signal group is the first-type DMRS or the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the reference signal in the second reference signal group is determined to be the first DMRS. Alternatively, it is understood that the first DMRS corresponding to the reference signal in the second reference signal group is used as an assumption, or it is assumed that the first DMRS corresponding to the reference signal in the second reference signal group is used for assessing the link quality. Optionally, the first DMRS is the first-type DMRS in this case.

In some embodiments, the DMRS corresponding to the reference signal in the second reference signal group is determined to be the second DMRS. Alternatively, it is understood that the second DMRS corresponding to the reference signal in the second reference signal group is used as an assumption, or it is assumed that the second DMRS corresponding to the reference signal in the second reference signal group is used for assessing the link quality. Optionally, the second DMRS is the second-type DMRS in this case.

In the method provided in this embodiment, by determining the DMRS corresponding to the reference signal in the second reference signal group, the terminal device can determine which DMRS is used as an assumption. By determining an assumed DMRS for a control channel, accuracy of link quality assessment is improved when either one of two types of DMRSs may be used.

In addition, when the DMRS corresponding to the reference signal in the first reference signal group and the DMRS corresponding to the reference signal in the second reference signal group are determined at the same time, multi-point transmission can be better matched.

**In some embodiments,** the **reference signal in** the **second reference signal group is indicated by first indication information.**

Optionally, the first terminal device receives the first indication information transmitted by a network device or a second terminal device, where the first indication information is used to indicate or configure the reference signal in the first reference signal group and the reference signal in the second reference signal group.

In a further embodiment based on the embodiment shown in FIG. 8, the step of determining the DMRS corresponding to the reference signal in the second reference signal group may be replaced with the following sub-step:
Step 241: Determining a DMRS corresponding to each reference signal in the second reference signal group indicated by first indication information.

When the first indication information indicates a DMRS corresponding to each reference signal in the second reference signal group, the DMRS corresponding to each reference signal in the second reference signal group indicated by the first indication information is determined as the DMRS corresponding to each reference signal in the second reference signal group during link quality assessment.

The DMRS corresponding to each reference signal in the second reference signal group is the first DMRS or the second DMRS, and DMRSs corresponding to different reference signals are the same or different. The DMRS corresponding to each reference signal in the second reference signal group may be the first-type DMRS or the second-type DMRS, where the first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

Exemplarily, assume that the second reference signal group includes three reference signals, namely a first reference signal, a second reference signal, and a third reference signal. When the first indication information indicates that the DMRS corresponding to the first reference signal is the first DMRS, the DMRS corresponding to the second reference signal is the first DMRS, and the DMRS corresponding to the third reference signal is the second DMRS, it is determined that the first DMRS corresponding to the first reference signal is used as a DMRS for assessing link quality of beam 1, the first DMRS corresponding to the second reference signal is used as a DMRS for assessing link quality of beam 2, and the second DMRS corresponding to the third reference signal is used as a DMRS for assessing link quality of beam 3. For example, the first DMRS is the first-type DMRS, and the second DMRS is the second-type DMRS in this case.

In the method provided in embodiments of the present disclosure, by determining the respective DMRS corresponding to each reference signal in the second reference signal group as the DMRS corresponding to each reference signal in the second reference signal group, which DMRS is used as an assumption can be flexibly determined, so that link quality can be more accurately determined. In the method, different DMRSs may be used as assumptions for different beams, thereby helping a communication system flexibly configure different DMRSs on different beams to achieve higher flexibility. When different beams correspond to different DMRS types, different DMRS types need to be considered to assess link quality of the two beams.

In a further embodiment based on the embodiment shown in FIG. 8, the step of determining the DMRS corresponding to the reference signal in the second reference signal group may be replaced with the following sub-step:
Step 242: In a case where first indication information indicates a DMRS corresponding to the second reference signal group, determining the DMRS corresponding to the second reference signal group as the DMRS corresponding to each reference signal in the second reference signal group.

The DMRS corresponding to each reference signal is used to assess link quality corresponding to each reference signal.

The DMRS corresponding to the second reference signal group is the first DMRS or the second DMRS. The DMRS corresponding to the second reference signal group is the first-type DMRS or the second-type DMRS, where the first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The DMRS corresponding to the second reference signal group represents a DMRS configured in a granularity of a whole set, and each reference signal in the second reference signal group corresponds to the same DMRS.

In some embodiments, when the first indication information indicates that the DMRS corresponding to the second reference signal group is the first DMRS, the DMRS corresponding to each reference signal in the second reference signal group is determined to be the first DMRS. That is, the first DMRS is used to assess link quality corresponding to each reference signal in the second reference signal group.

In some embodiments, when the first indication information indicates that the DMRS corresponding to the second reference signal group is the second DMRS, the DMRS corresponding to each reference signal in the second reference signal group is determined to be the second DMRS. That is, the second DMRS is used to assess link quality corresponding to each reference signal in the second reference signal group.

Exemplarily, assume that the second reference signal group includes three reference signals, namely a first reference signal, a second reference signal, and a third reference signal. When the first indication information indicates that the DMRS corresponding to the second reference signal group is the first DMRS, it is determined that the DMRSs corresponding to the first reference signal, the second reference signal, and the third reference signal are all the first DMRS, link quality corresponding to the first reference signal is assessed using the first reference signal and the first DMRS, link quality corresponding to the second reference signal is assessed using the second reference signal and the first DMRS, and link quality corresponding to the third reference signal is assessed using the third reference signal and the first DMRS. Alternatively, when the first indication information indicates that the DMRS corresponding to the second reference signal group is the second DMRS, it is determined that the DMRSs corresponding to the first reference signal, the second reference signal, and the third reference signal are all the second DMRS, link quality corresponding to the first reference signal is assessed using the first reference signal and the second DMRS, link quality corresponding to the second reference signal is assessed using the second reference signal and the second DMRS, and link quality corresponding to the third reference signal is assessed using the third reference signal and the second DMRS.

In the method provided in embodiments of the present disclosure, by determining the DMRS corresponding to the second reference signal group as the DMRS corresponding to each reference signal in the second reference signal group, which DMRS is used as an assumption can be determined, and signaling overhead is effectively reduced.

In a further embodiment based on the embodiment shown in FIG. 8, the step of determining the DMRS corresponding to the reference signal in the second reference signal group may be replaced with the following sub-step:
Step 243: Determining a DMRS corresponding to each reference signal in the second reference signal group based on a DMRS used by a control channel.

The DMRS corresponding to each reference signal is used to assess link quality corresponding to each reference signal.

In some embodiments, the first terminal device receives configuration information of the control channel, where the configuration information of the control channel includes the DMRS used by the control channel. Optionally, the DMRS used by the control channel is the first DMRS or the second DMRS.

In some embodiments, in a case where the control channel uses the first DMRS, the first DMRS is determined as the DMRS corresponding to each reference signal in the second reference signal group. Then the first DMRS is used as a DMRS assumption for assessing link quality corresponding to each reference signal in the second reference signal group.

In some embodiments, in a case where the control channel uses the second DMRS, the second DMRS is determined as the DMRS corresponding to each reference signal in the second reference signal group. Then the second DMRS is used as a DMRS assumption for assessing link quality corresponding to each reference signal in the second reference signal group.

In some embodiments, in a case where the control channel does not use the first DMRS, the second DMRS is determined as the DMRS corresponding to each reference signal in the second reference signal group. Then the second DMRS is used as a DMRS assumption for assessing link quality corresponding to each reference signal in the second reference signal group.

In some embodiments, in a case where the control channel does not use the second DMRS, the first DMRS is determined as the DMRS corresponding to each reference signal in the second reference signal group. Then the first DMRS is used as a DMRS assumption for assessing link quality corresponding to each reference signal in the second reference signal group.

The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In the method provided in embodiments of the present disclosure, the DMRS corresponding to each reference signal in the second reference signal group is determined based on the DMRS used by the control channel, without additional first indication information to indicate the DMRS, thereby effectively reducing signaling overhead.

In some embodiments, in a further embodiment based on the embodiment shown in FIG. 8, the step of determining the DMRS corresponding to the reference signal in the second reference signal group may be replaced with the following sub-step:
Step 244: Determining a target DMRS as a DMRS corresponding to each reference signal in the second reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the second reference signal group. Then the first DMRS is used as a DMRS assumption for assessing link quality corresponding to each reference signal in the second reference signal group.

In some embodiments, the second DMRS is determined as the DMRS corresponding to each reference signal in the second reference signal group. Then the second DMRS is used as a DMRS assumption for assessing link quality corresponding to each reference signal in the second reference signal group.

In the method provided in embodiments of the present disclosure, by determining the target DMRS as the DMRS corresponding to each reference signal in the second reference signal group, which DMRS is used as an assumption can be determined without indication of other indication information, thereby effectively reducing signaling overhead.

**In some embodiments,** the **first indication information does not indicate** the **reference signal in** the **second reference signal group.** The reference signal in the second reference signal group is determined based on configuration information of the control channel.

Optionally, the reference signal in the second reference signal group is determined based on a TCI state corresponding to a target CORESET in the control channel. In a case where one TCI state corresponds to at least two reference signals, the reference signal in the first reference signal group is determined based on a reference signal corresponding to QCL typeD.

In a further embodiment based on the embodiment shown in FIG. 8, the step of determining the DMRS corresponding to the reference signal in the second reference signal group may be replaced with the following sub-step:
Step 245: In a case where a first reference signal in the second reference signal group is determined based on a TCI state corresponding to a target CORESET in a control channel, determining a DMRS corresponding to the target CORESET as a DMRS corresponding to the first reference signal in the second reference signal group.

The DMRS corresponding to the first reference signal is used to assess link quality corresponding to the first reference signal.

In some embodiments, the DMRS corresponding to the target CORESET may also be understood as a DMRS adopted by a PDCCH transmitted in the target CORESET. The DMRS corresponding to the target CORESET is the first DMRS or the second DMRS.

The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target CORESET is a CORESET used to determine the first reference signal, and the first reference signal is determined based on a TCI state corresponding to the target CORESET in the control channel.

In some embodiments, in a case where the DMRS corresponding to the target CORESET is the first DMRS, the DMRS corresponding to the first reference signal in the second reference signal group is determined to be the first DMRS. Then the first DMRS is used as a DMRS assumption for assessing link quality corresponding to the first reference signal. For example, the first DMRS is the first-type DMRS in this case.

In some embodiments, in a case where the DMRS corresponding to the target CORESET is the second DMRS, the DMRS corresponding to the first reference signal in the second reference signal group is determined to be the second DMRS. Then the second DMRS is used as a DMRS assumption for assessing link quality corresponding to the first reference signal. For example, the second DMRS is the second-type DMRS in this case.

In the method provided in embodiments of the present disclosure, the DMRS corresponding to each reference signal in the second reference signal group is determined with reference to the DMRS corresponding to the target CORESET, so that which DMRS is used as an assumption can be determined more accurately corresponding to an actual transmission process. Meanwhile, no additional first indication information is needed to indicate the DMRS, thereby effectively reducing signaling overhead.

In a further embodiment based on the embodiment shown in FIG. 8, the step of determining the DMRS corresponding to the reference signal in the second reference signal group may be replaced with the following sub-step:
Step 246: Determining a DMRS corresponding to each reference signal in the second reference signal group based on DMRSs corresponding to multiple CORESETs corresponding to the reference signal in the second reference signal group.

The DMRS corresponding to each reference signal is used to assess link quality corresponding to each reference signal.

In some embodiments, in a case where one or more CORESETs among multiple CORESETs corresponding to the reference signal in the second reference signal group correspond to the first DMRS, the first DMRS is determined as the DMRS corresponding to each reference signal in the second reference signal group. Then the first DMRS is used as a DMRS assumption for assessing link quality corresponding to each reference signal in the second reference signal group. For example, the first DMRS is the first-type DMRS in this case.

In some embodiments, in a case where one or more CORESETs among multiple CORESETs corresponding to the reference signal in the second reference signal group correspond to the second DMRS, the second DMRS is determined as the DMRS corresponding to each reference signal in the second reference signal group. Then the second DMRS is used as a DMRS assumption for assessing link quality corresponding to each reference signal in the second reference signal group. For example, the second DMRS is the second-type DMRS in this case.

In some embodiments, in a case where all of multiple CORESETs corresponding to the reference signal in the second reference signal group use the first DMRS, the first DMRS is determined as the DMRS corresponding to each reference signal in the second reference signal group. Then the first DMRS is used as a DMRS assumption for assessing link quality corresponding to each reference signal in the second reference signal group. For example, the first DMRS is the first-type DMRS in this case.

In some embodiments, in a case where all of multiple CORESETs corresponding to the reference signal in the second reference signal group use the second DMRS, the second DMRS is determined as the DMRS corresponding to each reference signal in the second reference signal group. Then the second DMRS is used as a DMRS assumption for assessing link quality corresponding to each reference signal in the second reference signal group. For example, the second DMRS is the second-type DMRS in this case.

The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In the method provided in embodiments of the present disclosure, the DMRS corresponding to each reference signal in the second reference signal group is determined based on DMRSs corresponding to multiple CORESETs corresponding to the reference signal in the second reference signal group, so that which DMRS is used as an assumption can be determined, and signaling overhead is effectively reduced. Moreover, in a scenario where multiple CORESETs exist, the DMRS corresponding to each reference signal can also be reasonably determined.

In some embodiments, in a further embodiment based on the embodiment shown in FIG. 8, the step of determining the DMRS corresponding to the reference signal in the second reference signal group may be replaced with the following sub-step:
Step 247: Determining a target DMRS as a DMRS corresponding to each reference signal in the second reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the second reference signal group. Then the first DMRS is used as a DMRS assumption for assessing link quality corresponding to each reference signal in the second reference signal group.

In some embodiments, the second DMRS is determined as the DMRS corresponding to each reference signal in the second reference signal group. Then the second DMRS is used as a DMRS assumption for assessing link quality corresponding to each reference signal in the second reference signal group.

In the method provided in embodiments of the present disclosure, by determining the target DMRS as the DMRS corresponding to each reference signal in the second reference signal group, which DMRS is used as an assumption can be determined without indication of other indication information, thereby effectively reducing signaling overhead.

**In some embodiments, the reference signal in the second reference signal group is determined based on a TCI state corresponding to a target search space in the control channel.**

When one TCI state corresponds to at least two reference signals, the reference signal in the first reference signal group is determined based on a reference signal corresponding to QCL typeD.

In a further embodiment based on the embodiment shown in FIG. 8, the step of determining the DMRS corresponding to the reference signal in the second reference signal group may be replaced with the following sub-step:
Step 248: When a second reference signal in the second reference signal group is determined based on a TCI state corresponding to a target search space in a control channel, determining a DMRS corresponding to the target search space as a DMRS corresponding to the second reference signal in the second reference signal group.

The DMRS corresponding to the second reference signal is used to assess link quality corresponding to the second reference signal.

In some embodiments, the DMRS corresponding to the target search space may also be understood as a DMRS adopted by a PDCCH transmitted in the target search space. The DMRS corresponding to the target search space is the first DMRS or the second DMRS. The DMRS corresponding to the target search space is the first-type DMRS or the second-type DMRS. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

The second reference signal is determined based on the TCI state corresponding to the target search space in the control channel.

In some embodiments, when the DMRS corresponding to the target search space is the first DMRS, the DMRS corresponding to the second reference signal in the second reference signal group is determined to be the first DMRS. Then the first DMRS is used as a DMRS assumption for assessing link quality corresponding to the second reference signal. For example, the first DMRS is the first-type DMRS in this case.

In some embodiments, when the DMRS corresponding to the target search space is the second DMRS, the DMRS corresponding to the second reference signal in the second reference signal group is determined to be the second DMRS. Then the second DMRS is used as a DMRS assumption for assessing link quality corresponding to the second reference signal. For example, the second DMRS is the second-type DMRS in this case.

In the method provided in embodiments of the present disclosure, the DMRS corresponding to each reference signal in the second reference signal group is determined with reference to the DMRS corresponding to the target search space, so that which DMRS is used as an assumption can be determined more accurately corresponding to an actual transmission process. Meanwhile, no additional first indication information is needed to indicate the DMRS, thereby effectively reducing signaling overhead.

In a further embodiment based on the embodiment shown in FIG. 8, the step of determining the DMRS corresponding to the reference signal in the second reference signal group may be replaced with the following sub-step:
Step 249: Determining a DMRS corresponding to each reference signal in the second reference signal group based on DMRSs corresponding to multiple search spaces corresponding to the reference signal in the second reference signal group.

The DMRS corresponding to each reference signal is used to assess link quality corresponding to each reference signal.

In some embodiments, in a case where one or more search spaces among multiple search spaces corresponding to the reference signal in the second reference signal group correspond to the first DMRS, the first DMRS is determined as the DMRS corresponding to each reference signal in the second reference signal group. Then the first DMRS is used as a DMRS assumption for assessing link quality corresponding to each reference signal in the second reference signal group. For example, the first DMRS is the first-type DMRS in this case.

In some embodiments, in a case where one or more search spaces among multiple search spaces corresponding to the reference signal in the second reference signal group correspond to the second DMRS, the second DMRS is determined as the DMRS corresponding to each reference signal in the second reference signal group. Then the second DMRS is used as a DMRS assumption for assessing link quality corresponding to each reference signal in the second reference signal group. For example, the second DMRS is the second-type DMRS in this case.

In some embodiments, in a case where all of multiple search spaces corresponding to the reference signal in the second reference signal group use the first DMRS, the first DMRS is determined as the DMRS corresponding to each reference signal in the second reference signal group. Then the first DMRS is used as a DMRS assumption for assessing link quality corresponding to each reference signal in the second reference signal group. For example, the first DMRS is the first-type DMRS in this case.

In some embodiments, in a case where all of multiple search spaces corresponding to the reference signal in the second reference signal group use the second DMRS, the second DMRS is determined as the DMRS corresponding to each reference signal in the second reference signal group. Then the second DMRS is used as a DMRS assumption for assessing link quality corresponding to each reference signal in the second reference signal group. For example, the second DMRS is the second-type DMRS in this case.

The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In the method provided in embodiments of the present disclosure, the DMRS corresponding to each reference signal in the second reference signal group is determined based on DMRSs corresponding to multiple search spaces corresponding to the reference signal in the second reference signal group, so that which DMRS is used as an assumption can be determined, and signaling overhead is effectively reduced. Moreover, in a scenario where multiple search spaces exist, the DMRS corresponding to each reference signal can also be reasonably determined.

In some embodiments, in a further embodiment based on the embodiment shown in FIG. 8, the step of determining the DMRS corresponding to the reference signal in the second reference signal group may be replaced with the following sub-step:
Step 250: Determining a target DMRS as a DMRS corresponding to each reference signal in the second reference signal group.

The DMRS corresponding to each reference signal is used to assess link quality corresponding to each reference signal.

The target DMRS is the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each reference signal in the second reference signal group. Then the first DMRS is used as a DMRS assumption for assessing link quality corresponding to each reference signal in the second reference signal group.

In some embodiments, the second DMRS is determined as the DMRS corresponding to each reference signal in the second reference signal group. Then the second DMRS is used as a DMRS assumption for assessing link quality corresponding to each reference signal in the second reference signal group.

In the method provided in embodiments of the present disclosure, by determining the target DMRS as the DMRS corresponding to each reference signal in the second reference signal group, which DMRS is used as an assumption can be determined without indication of other indication information, thereby effectively reducing signaling overhead.

It is noted that any one of steps 241 to 250 may be implemented as a separate embodiment.

In addition, step 221 and step 241 may be implemented in combination as a new embodiment. Step 221 and step 242 may be implemented in combination as a new embodiment. Step 221 and step 243 may be implemented in combination as a new embodiment. Step 221 and step 244 may be implemented in combination as a new embodiment. Step 221 and step 245 may be implemented in combination as a new embodiment. Step 221 and step 246 may be implemented in combination as a new embodiment. Step 221 and step 247 may be implemented in combination as a new embodiment. Step 221 and step 248 may be implemented in combination as a new embodiment. Step 221 and step 249 may be implemented in combination as a new embodiment. Step 221 and step 250 may be implemented in combination as a new embodiment.

Step 222 and step 241 may be implemented in combination as a new embodiment. Step 222 and step 242 may be implemented in combination as a new embodiment. Step 222 and step 243 may be implemented in combination as a new embodiment. Step 222 and step 244 may be implemented in combination as a new embodiment. Step 222 and step 245 may be implemented in combination as a new embodiment. Step 222 and step 246 may be implemented in combination as a new embodiment. Step 222 and step 247 may be implemented in combination as a new embodiment. Step 222 and step 248 may be implemented in combination as a new embodiment. Step 222 and step 249 may be implemented in combination as a new embodiment. Step 222 and step 250 may be implemented in combination as a new embodiment.

Step 223 and step 241 may be implemented in combination as a new embodiment. Step 223 and step 242 may be implemented in combination as a new embodiment. Step 223 and step 243 may be implemented in combination as a new embodiment. Step 223 and step 244 may be implemented in combination as a new embodiment. Step 223 and step 245 may be implemented in combination as a new embodiment. Step 223 and step 246 may be implemented in combination as a new embodiment. Step 223 and step 247 may be implemented in combination as a new embodiment. Step 223 and step 248 may be implemented in combination as a new embodiment. Step 223 and step 249 may be implemented in combination as a new embodiment. Step 223 and step 250 may be implemented in combination as a new embodiment.

Step 224 and step 241 may be implemented in combination as a new embodiment. Step 224 and step 242 may be implemented in combination as a new embodiment. Step 224 and step 243 may be implemented in combination as a new embodiment. Step 224 and step 244 may be implemented in combination as a new embodiment. Step 224 and step 245 may be implemented in combination as a new embodiment. Step 224 and step 246 may be implemented in combination as a new embodiment. Step 224 and step 247 may be implemented in combination as a new embodiment. Step 224 and step 248 may be implemented in combination as a new embodiment. Step 224 and step 249 may be implemented in combination as a new embodiment. Step 224 and step 250 may be implemented in combination as a new embodiment.

Step 225 and step 241 may be implemented in combination as a new embodiment. Step 225 and step 242 may be implemented in combination as a new embodiment. Step 225 and step 243 may be implemented in combination as a new embodiment. Step 225 and step 244 may be implemented in combination as a new embodiment. Step 225 and step 245 may be implemented in combination as a new embodiment. Step 225 and step 246 may be implemented in combination as a new embodiment. Step 225 and step 247 may be implemented in combination as a new embodiment. Step 225 and step 248 may be implemented in combination as a new embodiment. Step 225 and step 249 may be implemented in combination as a new embodiment. Step 225 and step 250 may be implemented in combination as a new embodiment.

Step 226 and step 241 may be implemented in combination as a new embodiment. Step 226 and step 242 may be implemented in combination as a new embodiment. Step 226 and step 243 may be implemented in combination as a new embodiment. Step 226 and step 244 may be implemented in combination as a new embodiment. Step 226 and step 245 may be implemented in combination as a new embodiment. Step 226 and step 246 may be implemented in combination as a new embodiment. Step 226 and step 247 may be implemented in combination as a new embodiment. Step 226 and step 248 may be implemented in combination as a new embodiment. Step 226 and step 249 may be implemented in combination as a new embodiment. Step 226 and step 250 may be implemented in combination as a new embodiment.

Step 227 and step 241 may be implemented in combination as a new embodiment. Step 227 and step 242 may be implemented in combination as a new embodiment. Step 227 and step 243 may be implemented in combination as a new embodiment. Step 227 and step 244 may be implemented in combination as a new embodiment. Step 227 and step 245 may be implemented in combination as a new embodiment. Step 227 and step 246 may be implemented in combination as a new embodiment. Step 227 and step 247 may be implemented in combination as a new embodiment. Step 227 and step 248 may be implemented in combination as a new embodiment. Step 227 and step 249 may be implemented in combination as a new embodiment. Step 227 and step 250 may be implemented in combination as a new embodiment.

Step 228 and step 241 may be implemented in combination as a new embodiment. Step 228 and step 242 may be implemented in combination as a new embodiment. Step 228 and step 243 may be implemented in combination as a new embodiment. Step 228 and step 244 may be implemented in combination as a new embodiment. Step 228 and step 245 may be implemented in combination as a new embodiment. Step 228 and step 246 may be implemented in combination as a new embodiment. Step 228 and step 247 may be implemented in combination as a new embodiment. Step 228 and step 248 may be implemented in combination as a new embodiment. Step 228 and step 249 may be implemented in combination as a new embodiment. Step 228 and step 250 may be implemented in combination as a new embodiment.

FIG. 10 is a flowchart of a method for determining a DMRS according to an exemplary embodiment of the present disclosure. In a further embodiment based on the embodiment shown in FIG. 8, before steps 220 and 240, the method further includes:
**Step 260:** Reporting a terminal capability.

Optionally, a first terminal capability may be reported. The first terminal capability is used to indicate that the first terminal device supports using the first-type DMRS. The first-type DMRS is a DMRS that uses one or more same resource elements as control information. In embodiments of the present disclosure, the term "report" may be understood as transmit.

In some embodiments, the first terminal capability is transmitted by using RRC signaling, or the first terminal capability is transmitted by using MAC CE signaling.

In some embodiments, the first terminal capability is reported according to one or more of the following options:
- a first band;
- a first band combination;
- each band in the first band combination;
- each carrier on each band in the first band combination;
- a first target frequency range; and
- a first target terminal device.

Optionally, the first terminal capability is reported per band. That is, a terminal capability corresponding to a current band can be reported independently for different bands. This helps improve flexibility of the terminal device.

Optionally, the first terminal capability is reported per band combination. That is, a terminal capability corresponding to a current band combination can be reported independently for different band combinations. This helps improve flexibility of the terminal device.

Optionally, the first terminal capability is reported independently per band per band combination. That is, a terminal capability corresponding to a current band can be reported independently for different bands in different band combinations. This helps improve flexibility of the terminal device.

Optionally, the first terminal capability is reported independently per carrier (CC) per band per band combination. That is, a terminal capability corresponding to a current carrier can be reported independently for different carriers in different bands of different band combinations. This helps improve flexibility of the terminal device.

Optionally, the first terminal capability is reported per frequency range (FR). That is, a terminal capability corresponding to a current FR can be reported independently for different FRs. This helps improve flexibility of the terminal device.

Optionally, the first terminal capability is reported per terminal device. That is, different terminal devices can independently report terminal capabilities corresponding to the terminal devices. This can effectively reduce signaling overhead for reporting the terminal capability by the terminal device.

In some embodiments, the first terminal capability is further used to indicate one or more of the following options:
• a supported power parameter;
• a mode in which the first-type DMRS is supported;
• frequency domain density of the supported first-type DMRS; and
• time domain density of the supported first-type DMRS.

Optionally, a second terminal capability may be reported. The second terminal capability is used to indicate support for determining a DMRS corresponding to a reference signal in a reference signal group, where the reference signal group includes the first reference signal group and/or the second reference signal group.

Optionally, the second terminal capability is used to indicate support for determining a DMRS corresponding to a reference signal in the first reference signal group. The reference signal in the first reference signal group and the DMRS corresponding to the reference signal are used to assess first link quality. The first link quality is used to indicate whether a target event occurs, for example, whether beam failure occurs. The DMRS corresponding to the reference signal in the first reference signal group is the first DMRS or the second DMRS. The DMRS corresponding to the reference signal in the first reference signal group is the first-type DMRS or the second-type DMRS. The first-type DMRS is a DMRS that uses one or more same resource elements as control information, and the second-type DMRS is a DMRS that uses different resource elements from control information.

Optionally, the second terminal capability is used to indicate support for determining a DMRS corresponding to a reference signal in the second reference signal group. The reference signal in the second reference signal group and the DMRS corresponding to the reference signal are used to assess second link quality. The second link quality is used to indicate whether a target event occurs, for example, whether beam failure occurs. The DMRS corresponding to the reference signal in the second reference signal group is the first DMRS or the second DMRS. The DMRS corresponding to the reference signal in the second reference signal group is the first-type DMRS or the second-type DMRS. The first-type DMRS is a DMRS that uses one or more same resource elements as control information, and the second-type DMRS is a DMRS that uses different resource elements from control information.

In some embodiments, the first DMRS may be the first-type DMRS or the second-type DMRS, and the second DMRS may be the second-type DMRS. Optionally, the second terminal capability is used to indicate support for determining the DMRS corresponding to the reference signal in the first reference signal group and the DMRS corresponding to the reference signal in the second reference signal group.

In some embodiments, the first DMRS is the first-type DMRS, and the second DMRS is the second-type DMRS; or the first DMRS is the second-type DMRS, and the second DMRS is the second-type DMRS.

In some embodiments, the second terminal capability is transmitted by using RRC signaling, or the second terminal capability is transmitted by using MAC CE signaling.

In some embodiments, the second terminal capability is reported according to one or more of the following options:
- a second band;
- a second band combination;
- each band in the second band combination;
- each carrier on each band in the second band combination;
- a second target frequency range; and
- a second target terminal device.

Optionally, the second terminal capability is reported per band. That is, a terminal capability corresponding to a current band can be reported independently for different bands. This helps improve flexibility of the terminal device.

Optionally, the second terminal capability is reported per band combination. That is, a terminal capability corresponding to a current band combination can be reported independently for different band combinations. This helps improve flexibility of the terminal device.

Optionally, the second terminal capability is reported independently per band per band combination. That is, a terminal capability corresponding to a current band can be reported independently for different bands in different band combinations. This helps improve flexibility of the terminal device.

Optionally, the second terminal capability is reported independently per CC per band per band combination. That is, a terminal capability corresponding to a current carrier can be reported independently for different carriers in different bands of different band combinations. This helps improve flexibility of the terminal device.

Optionally, the second terminal capability is reported per FR. That is, a terminal capability corresponding to a current frequency range can be reported independently for different frequency ranges. This helps improve flexibility of the terminal device.

Optionally, the second terminal capability is reported per terminal device. That is, different terminal devices can independently report terminal capabilities corresponding to the terminal devices. This can effectively reduce signaling overhead for reporting the terminal capability by the terminal device.

Optionally, the first terminal capability and the second terminal capability may be reported together. Optionally, the first terminal capability and the second terminal capability may be reported by using a same option. For example, the first band corresponding to the first terminal capability and the second band corresponding to the second terminal capability are a same band.

FIG. 11 is a flowchart of a method for determining a DMRS according to an exemplary embodiment of the present disclosure. The method is performed by a second terminal device or a network device, and includes:
**Step 20:** transmitting first indication information.

In some embodiments, the first indication information is used to indicate a DMRS corresponding to a reference signal in a first reference signal group. The reference signal in the first reference signal group and the DMRS corresponding to the reference signal in the first reference signal group are used to assess first link quality. The DMRS corresponding to the reference signal in the first reference signal group is the first DMRS or the second DMRS. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the reference signal in the first reference signal group and the DMRS corresponding to the reference signal in the first reference signal group are used to assess the first link quality. Alternatively, it may be understood that the first link quality is assessed in combination with the reference signal in the first reference signal group and the DMRS corresponding to the reference signal in the first reference signal group. The reference signal in the first reference signal group is used to assess the first link quality, and the DMRS corresponding to the reference signal is also used to assess the first link quality.

In some embodiments, the first link quality is link quality corresponding to the reference signal in the first reference signal group. Alternatively, it may be understood that the first link quality is link quality of a beam corresponding to the reference signal in the first reference signal group. For example, the first reference signal group is associated with TRP1, and each reference signal in the first reference signal group is associated with one beam of TRP1.

The first link quality is used to indicate whether a target event occurs, for example, whether beam failure occurs.

In some embodiments, the first indication information is used to indicate a DMRS corresponding to each reference signal in the first reference signal group. The DMRS corresponding to each reference signal in the first reference signal group is the first DMRS or the second DMRS, and DMRSs corresponding to different reference signals are the same or different.

In some embodiments, the first indication information is used to indicate a DMRS corresponding to the first reference signal group. The DMRS corresponding to the first reference signal group is the first DMRS or the second DMRS.

In some embodiments, the first indication information is further used to indicate a DMRS corresponding to a reference signal in a second reference signal group. The reference signal in the second reference signal group and the DMRS corresponding to the reference signal in the second reference signal group are used to assess second link quality. The DMRS corresponding to the reference signal in the second reference signal group is the first DMRS or the second DMRS. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the reference signal in the second reference signal group and the DMRS corresponding to the reference signal in the second reference signal group are used to assess the second link quality. Alternatively, it may be understood that the second link quality is assessed in combination with the reference signal in the second reference signal group and the DMRS corresponding to the reference signal in the second reference signal group. The reference signal in the second reference signal group is used to assess the second link quality, and the DMRS corresponding to the reference signal is also used to assess the second link quality.

In some embodiments, the second link quality is link quality corresponding to the reference signal in the second reference signal group. Alternatively, it may be understood that the second link quality is link quality of a beam corresponding to the reference signal in the second reference signal group. For example, the second reference signal group is associated with TRP2, and each reference signal in the second reference signal group is associated with one beam of TRP2.

The second link quality is used to indicate whether a target event occurs, for example, whether beam failure occurs.

For details, functions of the first indication information are described in steps 221, 222, 241, and 242.

FIG. 12 is a flowchart of a method for determining a DMRS according to an exemplary embodiment of the present disclosure. The method is performed by a second terminal device or a network device, and includes:
**Step 21:** Receiving a terminal capability.

Optionally, a first terminal capability may be received, where the first terminal capability is used to indicate support for using the first-type DMRS.

Optionally, a second terminal capability may be received, where the second terminal capability is used to indicate support for determining a DMRS corresponding to a reference signal in a reference signal group, where the reference signal group includes the first reference signal group and/or the second reference signal group.

Specifically, for an implementation of the terminal capability, refer to step 260 described above.

It is noted that, generally, step 21 is performed before step 20.

In some embodiments, the first-type DMRS is a DMRS that uses at least one same resource element as control information. The second-type DMRS is a DMRS that uses different resource elements from control information.

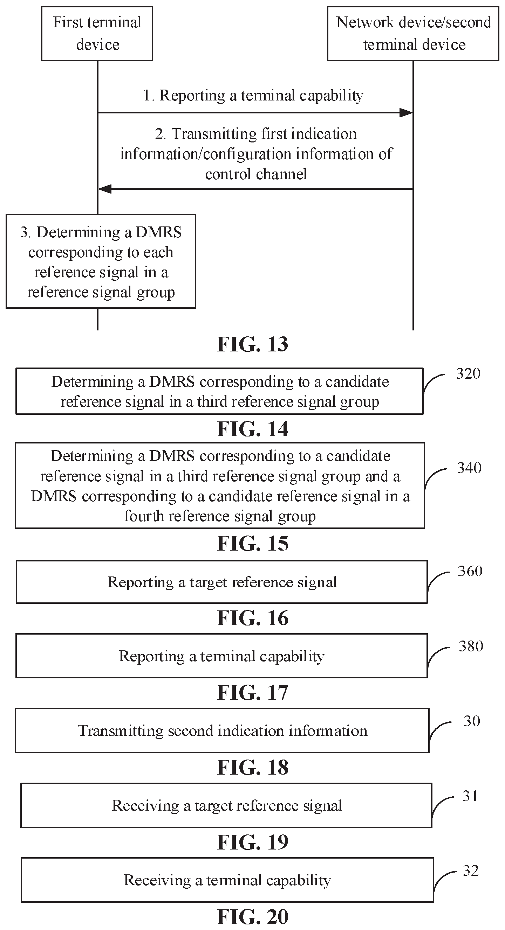

In some embodiments, FIG. 13 is a flowchart of a method for determining a DMRS according to an exemplary embodiment of the present disclosure. The method is jointly performed by a first terminal device, a second terminal device, and/or a network device, and the method further includes:
Step 1: The first terminal device reports a terminal capability to the second terminal device and/or the network device.

Specifically, for an implementation of the terminal capability, refer to step 210 described above.

Step 2: The second terminal device and/or the network device transmit first indication information and/or configuration information of a control channel.

Optionally, the first indication information is used to indicate or configure a reference signal in a reference signal group. Optionally, the configuration information of the control channel is used to indicate a reference signal in the reference signal group.

Step 3: The first terminal device determines a DMRS corresponding to each reference signal in the reference signal group.

The DMRS corresponding to each reference signal is used to assess link quality corresponding to each reference signal.

Optionally, the first terminal device determines a DMRS corresponding to each candidate reference signal in a first candidate reference signal group. For a specific determination manner, refer to step 220 described above. Optionally, the first terminal device determines a DMRS corresponding to each reference signal in a second reference signal group. For a specific determination manner, refer to step 240 described above.

The first terminal device assesses link quality based on the reference signal in the reference signal group.

The steps above are not necessarily all included, and may include one or more of them.

### For a scenario of discovery and reporting of a new beam:

In some embodiments, the first terminal device assesses link quality based on each reference signal in the first reference signal group and/or the second reference signal group and a DMRS corresponding to each reference signal in the first reference signal group and/or the second reference signal group, and then reports first reporting information to the network based on the link quality. If a target event occurs, for example, when beam failure is determined to occur, the first terminal device needs to report the first reporting information to the network device or the second terminal device. Optionally, the first reporting information may indicate a target reference signal and/or other information related to the target event, for example, occurrence of the target event or occurrence of beam failure. Exemplarily, as shown in FIG. 9, after the terminal device assesses link quality based on a reference signal corresponding to beam 1 of TRP1 and a DMRS corresponding to the reference signal corresponding to beam 1, and determines that beam failure occurs, the terminal device needs to re-determine a target reference signal that satisfies a link quality condition, for example, determine that a reference signal corresponding to beam 2 of TRP2 is the target reference signal that satisfies the link quality condition.

Optionally, the first reporting information is transmitted using a Random Access Channel (RACH), MAC CE signaling, or RRC signaling.

In some embodiments, the target reference signal is a signal that is selected from a third reference signal group and satisfies the link quality condition. The third reference signal group includes one or more candidate reference signals, and the third reference signal group is indicated by second indication information. Optionally, the first terminal device receives the second indication information transmitted by the network device or the second terminal device. Optionally, the second indication information is transmitted using one or more of RRC signaling, MAC CE signaling, and DCI signaling.

Optionally, the first indication information and the second indication information are a same piece of information, or the first indication information and the second indication information are transmitted using a same piece of signaling. This helps save signaling overhead. Optionally, the first indication information and the second indication information are different pieces of information, or the first indication information and the second indication information are transmitted using different pieces of signaling. Therefore, better flexibility can be achieved by using different pieces of information for indication.

The case that the link quality condition is satisfied includes one or more of the following options:
- link quality is greater than or equal to a fourth threshold;
- number of times that the link quality is greater than a fifth threshold within a second target time is greater than a second count threshold;
- a difference between the link quality and a sixth threshold is greater than a second difference threshold; and
- a maximum value of the link quality.

Optionally, the second indication information can be used to indicate a parameter related to the link quality condition. For example, the second indication information is used to indicate one or more of the fourth threshold, the second target time, the fifth threshold, the second count threshold, the sixth threshold, and the second difference threshold.

In some embodiments, the first terminal device assesses the link quality in one or more manners. For example, the first terminal device may assess the link quality based on RSRP of the reference signal, that is, assess third link quality based on RSRP corresponding to a candidate reference signal in the third reference signal group. Or, the first terminal device may assess the link quality based on SINR of the reference signal, that is, assess the third link quality based on SINR corresponding to the candidate reference signal in the third reference signal group. Or, the first terminal device may assess the link quality based on transmission quality of the control channel, that is, assess the third link quality based on transmission performance when a channel corresponding to the candidate reference signal in the third reference signal group is used to transmit the control channel, for example, assess the third link quality based on a hypothetical BLER.

When the first terminal device assesses the link quality based on the transmission quality of the control channel, different DMRSs have different impacts on transmission of the control channel. Therefore, when two types of DMRSs exist, a DMRS corresponding to assessment of the link quality needs to be determined. It can also be understood that, in some embodiments, it needs to be determined which DMRS assumption is used to assess the link quality, or which DMRS is assumed to be used for assessing the link quality, or which DMRS is used as an assumption for assessing the link quality.

FIG. 14 is a flowchart of a method for determining a DMRS according to an exemplary embodiment of the present disclosure. The method is performed by a first terminal device, and includes:
**Step 320:** Determining a DMRS corresponding to a candidate reference signal in a third reference signal group.

In some embodiments, the candidate reference signal in the third reference signal group and the DMRS corresponding to the candidate reference signal in the third reference signal group are used to assess third link quality. Alternatively, it may be understood that the third link quality is assessed in combination with the candidate reference signal in the third reference signal group and the DMRS corresponding to the candidate reference signal in the third reference signal group. The candidate reference signal in the third reference signal group is used to assess the third link quality, and the DMRS corresponding to the candidate reference signal is also used to assess the third link quality. That is, the third link quality is assessed based on the candidate reference signal in the third reference signal group, or the third link quality is assessed based on the candidate reference signal in the third reference signal group and the corresponding DMRS.

In some embodiments, the third link quality is link quality corresponding to the candidate reference signal in the third reference signal group. Alternatively, it may be understood that the third link quality is link quality of a beam corresponding to the candidate reference signal in the third reference signal group. The third link quality is used to select a target reference signal that satisfies the link quality condition from one or more candidate reference signals.

In some embodiments, the DMRS corresponding to the candidate reference signal in the third reference signal group is determined to be a first DMRS or a second DMRS. The DMRS corresponding to the candidate reference signal in the third reference signal group is a first-type DMRS or a second-type DMRS. The first-type DMRS is a DMRS that uses one or more same resource elements as control information, and the second-type DMRS is a DMRS that uses different resource elements from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the candidate reference signal in the third reference signal group is determined to be the first DMRS. Or it may be understood that the first DMRS corresponding to the candidate reference signal in the third reference signal group is used as a DMRS assumption, or it is assumed that the link quality is assessed using the first DMRS corresponding to the candidate reference signal in the third reference signal group.

In some embodiments, the DMRS corresponding to the candidate reference signal in the third reference signal group is determined to be the second DMRS. Or it may be understood that the second DMRS corresponding to the candidate reference signal in the third reference signal group is used as a DMRS assumption, or it is assumed that the link quality is assessed using the second DMRS corresponding to the candidate reference signal in the third reference signal group.

In the method provided in this embodiment, by determining a DMRS corresponding to a candidate reference signal in the third reference signal group, it can be determined which DMRS the first terminal device uses as a DMRS assumption. The link quality of the beam is assessed by determining the DMRS used by the assumed control channel, thereby improving accuracy of assessing the link quality when either of the two types of DMRSs may be used.

In a further embodiment based on the embodiment shown in FIG. 14, the step of determining the DMRS corresponding to the candidate reference signal in the third reference signal group may be replaced with the following sub-step:
Step 321: Determining a target DMRS as the DMRS corresponding to the candidate reference signal in the third reference signal group.

The DMRS corresponding to each candidate reference signal is used to assess link quality corresponding to each candidate reference signal.

The target DMRS includes the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each candidate reference signal in the third reference signal group. Then the first DMRS is used as a DMRS assumption for assessing link quality corresponding to each candidate reference signal in the third reference signal group.

In some embodiments, the second DMRS is determined as the DMRS corresponding to each candidate reference signal in the third reference signal group. Then the second DMRS is used as a DMRS assumption for assessing link quality corresponding to each candidate reference signal in the third reference signal group.

In the method provided in embodiments of the present disclosure, by determining the target DMRS as the DMRS corresponding to each candidate reference signal in the third reference signal group, which DMRS is used as an assumption can be determined, and signaling overhead is effectively reduced.

In a further embodiment based on the embodiment shown in FIG. 14, the step of determining the DMRS corresponding to the candidate reference signal in the third reference signal group may be replaced with the following sub-step:
Step 322: In a case where the second indication information indicates a DMRS corresponding to the third reference signal group, determining the DMRS corresponding to the third reference signal group as the DMRS corresponding to each candidate reference signal in the third reference signal group.

The DMRS corresponding to each candidate reference signal is used to assess link quality corresponding to each candidate reference signal.

The DMRS corresponding to the third reference signal group is the first DMRS or the second DMRS, and the DMRS corresponding to the third reference signal group is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The DMRS corresponding to the third reference signal group represents a DMRS configured in a granularity of a whole set, and each reference signal in the third reference signal group corresponds to a same DMRS.

In some embodiments, in a case where the second indication information indicates that the DMRS corresponding to the third reference signal group is the first DMRS, it is determined that the DMRS corresponding to the third reference signal group and used as the DMRS corresponding to each candidate reference signal in the third reference signal group is the first DMRS. That is, the first DMRS is used to assess link quality corresponding to each candidate reference signal in the third reference signal group.

In some embodiments, in a case where the second indication information indicates that the DMRS corresponding to the third reference signal group is the second DMRS, it is determined that the DMRS corresponding to the third reference signal group and used as the DMRS corresponding to each candidate reference signal in the third reference signal group is the second DMRS. That is, the second DMRS is used to assess link quality corresponding to each candidate reference signal in the third reference signal group.

Exemplarily, it is assumed that the third reference signal group includes three candidate reference signals: a first candidate reference signal, a second candidate reference signal, and a third candidate reference signal. In a case where the second indication information indicates that the DMRS corresponding to the third reference signal group is the first DMRS, it is determined that the DMRSs corresponding to the first candidate reference signal, the second candidate reference signal, and the third candidate reference signal are all the first DMRS, the first candidate reference signal and the first DMRS are used to assess link quality corresponding to the first candidate reference signal, the second candidate reference signal and the first DMRS are used to assess link quality corresponding to the second candidate reference signal, and the third candidate reference signal and the first DMRS are used to assess link quality corresponding to the third candidate reference signal. Or, in a case where the second indication information indicates that the DMRS corresponding to the third reference signal group is the second DMRS, it is determined that the DMRSs corresponding to the first candidate reference signal, the second candidate reference signal, and the third candidate reference signal are all the second DMRS, the first candidate reference signal and the second DMRS are used to assess link quality corresponding to the first candidate reference signal, the second candidate reference signal and the second DMRS are used to assess link quality corresponding to the second candidate reference signal, and the third candidate reference signal and the second DMRS are used to assess link quality corresponding to the third candidate reference signal.

In the method provided in embodiments of the present disclosure, by determining the DMRS corresponding to the third reference signal group as the DMRS corresponding to each candidate reference signal in the third reference signal group, which DMRS is used to assess link quality of a beam can be determined, and signaling overhead is effectively reduced.

In a further embodiment based on the embodiment shown in FIG. 14, the step of determining the DMRS corresponding to the candidate reference signal in the third reference signal group may be replaced with the following sub-step:
Step 323: Determining a DMRS corresponding to each candidate reference signal in the third reference signal group indicated by the second indication information.

The DMRS corresponding to each candidate reference signal is used to assess link quality corresponding to each candidate reference signal.

In a case where the second indication information indicates the DMRS corresponding to each candidate reference signal in the third reference signal group, the DMRS corresponding to each candidate reference signal in the third reference signal group indicated by the second indication information is determined as the DMRS corresponding to each candidate reference signal in the third reference signal group during link quality assessment.

The DMRS corresponding to each candidate reference signal in the third reference signal group is the first DMRS or the second DMRS. The DMRS corresponding to each candidate reference signal in the third reference signal group is the first-type DMRS or the second-type DMRS, and DMRSs corresponding to different candidate reference signals are the same or different. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

Exemplarily, it is assumed that the third reference signal group includes three candidate reference signals: a first candidate reference signal, a second candidate reference signal, and a third candidate reference signal. In a case where the second indication information indicates that the DMRS corresponding to the first candidate reference signal is the first DMRS, the DMRS corresponding to the second candidate reference signal is the first DMRS, and the DMRS corresponding to the third candidate reference signal is the second DMRS, it is determined that the first candidate reference signal and the first DMRS corresponding to the first candidate reference signal are used to assess link quality corresponding to the first candidate reference signal, the second candidate reference signal and the first DMRS corresponding to the second candidate reference signal are used to assess link quality corresponding to the second candidate reference signal, and the third candidate reference signal and the second DMRS corresponding to the third candidate reference signal are used to assess link quality corresponding to the third candidate reference signal.

In the method provided in embodiments of the present disclosure, by determining the DMRS corresponding to each candidate reference signal in the third reference signal group as the DMRS corresponding to each candidate reference signal in the third reference signal group, which DMRS is used as an assumption can be flexibly determined, so that the link quality can be determined more accurately.

It is to be noted that any one of steps 321 to 323 may be implemented as a separate embodiment.

The foregoing embodiments are for a scenario of discovery and reporting of a new beam of a single TRP. In some embodiments, a scenario of discovery and reporting of a new beam of two TRPs further includes the following embodiments.

In some embodiments, for a case of two reference signal groups: the third reference signal group corresponds to one or more candidate reference signals, and a fourth reference signal group corresponds to one or more candidate reference signals. In this case, it is assumed that the second indication information indicates which DMRS (the first DMRS or the second DMRS) is used by the candidate reference signal corresponding to the third reference signal group and which DMRS (the first DMRS or the second DMRS) is used by the candidate reference signal corresponding to the fourth reference signal group. When assessing link quality based on the third reference signal group, the first terminal device assumes to use the DMRS corresponding to the reference signal in the third reference signal group. When assessing link quality based on the fourth reference signal group, the first terminal device assumes to use the DMRS corresponding to the reference signal in the fourth reference signal group. Specifically, as described in the following embodiment:

FIG. 15 is a flowchart of a method for determining a DMRS according to an exemplary embodiment of the present disclosure. The method is performed by a first terminal device, and includes:

**Step 340:** Determining a DMRS corresponding to a candidate reference signal in a third reference signal group and a DMRS corresponding to a candidate reference signal in a fourth reference signal group.

In some embodiments, fourth link quality is assessed based on the candidate reference signal in the fourth reference signal group, for example, the fourth link quality is assessed based on RSRP, SINR, hypothetical BLER, or the like corresponding to the candidate reference signal in the fourth reference signal group.

In some embodiments, the candidate reference signal in the fourth reference signal group and the DMRS corresponding to the candidate reference signal in the fourth reference signal group are used to assess fourth link quality. Alternatively, it may be understood that the fourth link quality is assessed in combination with the candidate reference signal in the fourth reference signal group and the DMRS corresponding to the candidate reference signal in the fourth reference signal group. The candidate reference signal in the fourth reference signal group is used to assess the fourth link quality, and the DMRS corresponding to the candidate reference signal is also used to assess the fourth link quality. That is, the fourth link quality is assessed based on the candidate reference signal in the fourth reference signal group, or the fourth link quality is assessed based on the candidate reference signal in the fourth reference signal group and the corresponding DMRS.

In some embodiments, the fourth link quality is link quality corresponding to the candidate reference signal in the fourth reference signal group. Alternatively, it may be understood that the fourth link quality is link quality of a beam corresponding to the candidate reference signal in the fourth reference signal group. The fourth link quality is used to select a target reference signal that satisfies the link quality condition from one or more candidate reference signals.

In some embodiments, the DMRS corresponding to the candidate reference signal in the fourth reference signal group is determined to be the first DMRS or the second DMRS. The DMRS corresponding to the candidate reference signal in the fourth reference signal group is the first-type DMRS or the second-type DMRS. The first-type DMRS is a DMRS that uses one or more same resource elements as control information, and the second-type DMRS is a DMRS that uses different resource elements from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the candidate reference signal in the fourth reference signal group is determined to be the first DMRS. Or it may be understood that the first DMRS corresponding to the candidate reference signal in the fourth reference signal group is used as a DMRS assumption, or it is assumed that the link quality is assessed using the first DMRS corresponding to the candidate reference signal in the fourth reference signal group.

In some embodiments, the DMRS corresponding to the candidate reference signal in the fourth reference signal group is determined to be the second DMRS. Or it may be understood that the second DMRS corresponding to the candidate reference signal in the fourth reference signal group is used as a DMRS assumption, or it is assumed that the link quality is assessed using the second DMRS corresponding to the candidate reference signal in the fourth reference signal group.

In the method provided in this embodiment, by determining the DMRS corresponding to the candidate reference signal in the fourth reference signal group, it can be determined which DMRS the first terminal device uses as a DMRS assumption. The link quality of a beam is assessed by determining the DMRS used by the assumed control channel, thereby improving accuracy of assessing the link quality when either of the two types of DMRSs may be used.

In a further embodiment based on the embodiment shown in FIG. 15, the step of determining the DMRS corresponding to the candidate reference signal in the third reference signal group may be replaced with the following sub-step:
Step 341: Determining a target DMRS as the DMRS corresponding to the candidate reference signal in the fourth reference signal group.

The DMRS corresponding to each candidate reference signal is used to assess link quality corresponding to each candidate reference signal.

The target DMRS includes the first DMRS or the second DMRS, where the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, or the target DMRS corresponds to a default DMRS type.

In some embodiments, the first DMRS is determined as the DMRS corresponding to each candidate reference signal in the fourth reference signal group. Then the first DMRS is used as a DMRS assumption for assessing link quality corresponding to each candidate reference signal in the fourth reference signal group.

In some embodiments, the second DMRS is determined as the DMRS corresponding to each candidate reference signal in the fourth reference signal group. Then the second DMRS is used as a DMRS assumption for assessing link quality corresponding to each candidate reference signal in the fourth reference signal group.

In the method provided in embodiments of the present disclosure, by determining the target DMRS as the DMRS corresponding to each candidate reference signal in the fourth reference signal group, which DMRS is used as an assumption can be determined, and signaling overhead is effectively reduced.

In a further embodiment based on the embodiment shown in FIG. 15, the step of determining the DMRS corresponding to the candidate reference signal in the fourth reference signal group may be replaced with the following sub-step:
Step 342: In a case where the second indication information indicates a DMRS corresponding to the fourth reference signal group, determining a DMRS corresponding to the fourth reference signal group as a DMRS corresponding to each candidate reference signal in the fourth reference signal group.

The DMRS corresponding to each candidate reference signal is used to assess link quality corresponding to each candidate reference signal.

The DMRS corresponding to the fourth reference signal group is the first DMRS or the second DMRS, and the DMRS corresponding to the fourth reference signal group is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The DMRS corresponding to the fourth reference signal group represents a DMRS configured in a granularity of a whole set, and each reference signal in the fourth reference signal group corresponds to a same DMRS.

In some embodiments, in a case where the second indication information indicates that the DMRS corresponding to the fourth reference signal group is the first DMRS, it is determined that the DMRS corresponding to the fourth reference signal group and used as the DMRS corresponding to each candidate reference signal in the fourth reference signal group is the first DMRS. That is, the first DMRS is used to assess link quality corresponding to each candidate reference signal in the fourth reference signal group.

In some embodiments, in a case where the second indication information indicates that the DMRS corresponding to the fourth reference signal group is the second DMRS, it is determined that the DMRS corresponding to the fourth reference signal group and used as the DMRS corresponding to each candidate reference signal in the fourth reference signal group is the second DMRS. That is, the second DMRS is used to assess link quality corresponding to each candidate reference signal in the fourth reference signal group.

Exemplarily, it is assumed that the fourth reference signal group includes three candidate reference signals: a first candidate reference signal, a second candidate reference signal, and a third candidate reference signal. When the second indication information indicates that the DMRS corresponding to the fourth reference signal group is the first DMRS, it is determined that the DMRSs corresponding to the first candidate reference signal, the second candidate reference signal, and the third candidate reference signal are all the first DMRS, the first candidate reference signal and the first DMRS are used to assess link quality corresponding to the first candidate reference signal, the second candidate reference signal and the first DMRS are used to assess link quality corresponding to the second candidate reference signal, and the third candidate reference signal and the first DMRS are used to assess link quality corresponding to the third candidate reference signal. Or, when the second indication information indicates that the DMRS corresponding to the fourth reference signal group is the second DMRS, it is determined that the DMRSs corresponding to the first candidate reference signal, the second candidate reference signal, and the third candidate reference signal are all the second DMRS, the first candidate reference signal and the second DMRS are used to assess link quality corresponding to the first candidate reference signal, the second candidate reference signal and the second DMRS are used to assess link quality corresponding to the second candidate reference signal, and the third candidate reference signal and the second DMRS are used to assess link quality corresponding to the third candidate reference signal.

In the method provided in embodiments of the present disclosure, by determining the DMRS corresponding to the fourth reference signal group as the DMRS corresponding to each candidate reference signal in the fourth reference signal group, which DMRS is used to assess link quality of a beam can be determined, and signaling overhead is effectively reduced.

In a further embodiment based on the embodiment shown in FIG. 15, the step of determining the DMRS corresponding to the candidate reference signal in the fourth reference signal group may be replaced with the following sub-step:
Step 343: Determining a DMRS corresponding to each candidate reference signal in the fourth reference signal group indicated by second indication information.

The DMRS corresponding to each candidate reference signal is used to assess link quality corresponding to each candidate reference signal.

In a case where the second indication information indicates the DMRS corresponding to each candidate reference signal in the fourth reference signal group, the DMRS corresponding to each candidate reference signal in the fourth reference signal group indicated by the second indication information is determined as the DMRS corresponding to each candidate reference signal in the fourth reference signal group during link quality assessment.

The DMRS corresponding to each candidate reference signal in the fourth reference signal group is the first DMRS or the second DMRS. The DMRS corresponding to each candidate reference signal in the third reference signal group is the first-type DMRS or the second-type DMRS, and DMRSs corresponding to different candidate reference signals are the same or different. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

Exemplarily, it is assumed that the fourth reference signal group includes three candidate reference signals: a first candidate reference signal, a second candidate reference signal, and a third candidate reference signal. When the second indication information indicates that the DMRS corresponding to the first candidate reference signal is the first DMRS, the DMRS corresponding to the second candidate reference signal is the first DMRS, and the DMRS corresponding to the third candidate reference signal is the second DMRS, it is determined that link quality corresponding to the first candidate reference signal is assessed using the first candidate reference signal and the first DMRS corresponding to the first candidate reference signal, link quality corresponding to the second candidate reference signal is assessed using the second candidate reference signal and the first DMRS corresponding to the second candidate reference signal, and link quality corresponding to the third candidate reference signal is assessed using the third candidate reference signal and the second DMRS corresponding to the third candidate reference signal.

In the method provided in embodiments of the present disclosure, by determining the DMRS corresponding to each candidate reference signal in the fourth reference signal group as the DMRS corresponding to each candidate reference signal in the fourth reference signal group, a DMRS used as an assumption can be flexibly determined, so that the link quality can be determined more accurately.

It is to be noted that any one of steps 341 to 343 may be implemented as a separate embodiment.

In addition, step 321 and step 341 may be combined and implemented as a new embodiment. Step 321 and step 342 may be combined and implemented as a new embodiment. Step 321 and step 343 may be combined and implemented as a new embodiment. Step 322 and step 341 may be combined and implemented as a new embodiment. Step 322 and step 342 may be combined and implemented as a new embodiment. Step 322 and step 343 may be combined and implemented as a new embodiment. Step 323 and step 341 may be combined and implemented as a new embodiment. Step 323 and step 342 may be combined and implemented as a new embodiment. Step 323 and step 343 may be combined and implemented as a new embodiment.

FIG. 16 is a flowchart of a method for determining a DMRS according to an exemplary embodiment of the present disclosure. The method is performed by a first terminal device, and further includes:
**Step 360:** Reporting a target reference signal.

The target reference signal is a reference signal that is selected from one or more candidate reference signals and satisfies a link quality condition. A DMRS corresponding to the target reference signal is a first DMRS or a second DMRS, and the DMRS corresponding to the target reference signal is a first-type DMRS or a second-type DMRS. The first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

The DMRS corresponding to the target reference signal is used to assess link quality corresponding to the target reference signal.

In some embodiments, the target reference signal and the DMRS corresponding to the target reference signal are reported. That is, the target reference signal and the DMRS corresponding to the target reference signal are reported at the same time.

In some embodiments, in a case where the DMRS corresponding to the target reference signal is the first DMRS, the target reference signal and the first DMRS are reported. Optionally, the first DMRS is the first-type DMRS in this case.

In some embodiments, in a case where the DMRS corresponding to the target reference signal is the second DMRS, the target reference signal and the second DMRS are reported. Optionally, the second DMRS is the second-type DMRS in this case.

In the method provided in embodiments of the present disclosure, by reporting the target reference signal and the DMRS corresponding to the target reference signal at the same time, the first terminal device can perform reporting based on its own situation, which helps match subsequent communication transmission and improve transmission performance.

FIG. 17 is a flowchart of a method for determining a DMRS according to an exemplary embodiment of the present disclosure. In a further embodiment based on the embodiment shown in FIG. 16, before step 320, step 340, and step 360, the method further includes:

### Step 380: Reporting a terminal capability.

Optionally, a third terminal capability is reported. The third terminal capability is used to indicate that the first terminal device supports using the first-type DMRS. The first-type DMRS is a DMRS that uses one or more same resource elements as control information.

In some embodiments, the third terminal capability is transmitted using RRC signaling, or the third terminal capability is transmitted using MAC CE signaling.

In some embodiments, the third terminal capability is reported according to one or more of the following options:
- a first band;
- a first band combination;
- each band in the first band combination;
- each carrier on each band in the first band combination;
- a first target frequency range; and
- a first target terminal device.

Optionally, the third terminal capability is reported per band. That is, a terminal capability corresponding to a current band can be independently reported for different bands. This helps improve flexibility of the terminal device.

Optionally, the third terminal capability is reported per band combination. That is, a terminal capability corresponding to a current band combination can be independently reported for different band combinations. This helps improve flexibility of the terminal device.

Optionally, the third terminal capability is independently reported per band per band combination. That is, a terminal capability corresponding to a current band can be independently reported for different bands in different band combinations. This helps improve flexibility of the terminal device.

Optionally, the third terminal capability is independently reported per CC per band per band combination. That is, a terminal capability corresponding to a current carrier can be independently reported for different carriers in different bands in different band combinations. This helps improve flexibility of the terminal device.

Optionally, the third terminal capability is reported per FR. That is, a terminal capability corresponding to a current frequency range can be independently reported for different frequency ranges. This helps improve flexibility of the terminal device.

Optionally, the third terminal capability is reported per terminal device. That is, different terminal devices can independently report a terminal capability corresponding to the terminal device. This can effectively reduce signaling overhead for reporting the terminal capability by the terminal device.

In some embodiments, the third terminal capability is further used to indicate one or more of the following options:
- a supported power parameter;
- a mode in which the first-type DMRS is supported;
- a frequency domain density at which the first-type DMRS is supported; and
- a time domain density at which the first-type DMRS is supported.

Optionally, a fourth terminal capability is reported. The fourth terminal capability is used to indicate support for determining a DMRS corresponding to a candidate reference signal in a reference signal group, and the reference signal group includes the third reference signal group and/or the fourth reference signal group.

Optionally, the fourth terminal capability is used to indicate support for determining a DMRS corresponding to a candidate reference signal in the third reference signal group. The candidate reference signal in the third reference signal group and the DMRS corresponding to the candidate reference signal are used to assess third link quality. The third link quality is used to select a target reference signal that satisfies the link quality condition from one or more candidate reference signals. The DMRS corresponding to the candidate reference signal in the third reference signal group is the first DMRS or the second DMRS, and the DMRS corresponding to the candidate reference signal in the third reference signal group is the first-type DMRS or the second-type DMRS. The first-type DMRS is a DMRS that uses one or more same resource elements as control information, and the second-type DMRS is a DMRS that uses different resource elements from control information.

Optionally, the fourth terminal capability is used to indicate support for determining a DMRS corresponding to a candidate reference signal in the fourth reference signal group. The candidate reference signal in the fourth reference signal group and the DMRS corresponding to the candidate reference signal are used to assess fourth link quality. The fourth link quality is used to select a target reference signal that satisfies the link quality condition from one or more candidate reference signals. The DMRS corresponding to the candidate reference signal in the fourth reference signal group is the first DMRS or the second DMRS, and the DMRS corresponding to the candidate reference signal in the fourth reference signal group is the first-type DMRS or the second-type DMRS. The first-type DMRS is a DMRS that uses one or more same resource elements as control information, and the second-type DMRS is a DMRS that uses different resource elements from control information.

In some embodiments, the first DMRS may be the first-type DMRS or the second-type DMRS, and the second DMRS may be the second-type DMRS. Optionally, the fourth terminal capability is used to indicate support for determining the DMRS corresponding to the candidate reference signal in the third reference signal group and the DMRS corresponding to the candidate reference signal in the fourth reference signal group.

In some embodiments, the first DMRS is the first-type DMRS, and the second DMRS is the second-type DMRS; or the first DMRS is the second-type DMRS, and the second DMRS is the second-type DMRS.

In some embodiments, the fourth terminal capability is transmitted using RRC signaling, or the fourth terminal capability is transmitted using MAC CE signaling.

In some embodiments, the fourth terminal capability is reported according to one or more of the following options:
- a second band;
- a second band combination;
- each band in the second band combination;
- each carrier on each band in the second band combination;
- a second target frequency range; and
- a second target terminal device.

Optionally, the fourth terminal capability is reported per band. That is, different bands can independently report a terminal capability corresponding to the band. This helps improve flexibility of the terminal device.

Optionally, the fourth terminal capability is reported per band combination. That is, different band combinations can independently report a terminal capability corresponding to the band combination. This helps improve flexibility of the terminal device.

Optionally, the fourth terminal capability is independently reported per band per band combination. That is, different bands in different band combinations can independently report a terminal capability corresponding to the band. This helps improve flexibility of the terminal device.

Optionally, the fourth terminal capability is independently reported per carrier per band per band combination. That is, different carriers in different bands in different band combinations can independently report a terminal capability corresponding to the carrier. This helps improve flexibility of the terminal device.

Optionally, the fourth terminal capability is reported per frequency range. That is, different frequency ranges can independently report a terminal capability corresponding to the frequency range. This helps improve flexibility of the terminal device.

Optionally, the fourth terminal capability is reported per terminal device. That is, different terminal devices can independently report terminal capabilities corresponding to the terminal devices. This can effectively reduce signaling overhead for reporting the terminal capability by the terminal device.

Optionally, the third terminal capability and the fourth terminal capability may be reported together. Optionally, the third terminal capability and the fourth terminal capability may be reported by using a same option. For example, the first band corresponding to the third terminal capability and the second band corresponding to the fourth terminal capability are a same band.

It is to be noted that step 360 may be performed before step 310, or after step 310 and before step 320, or after step 320 and before step 340, or after step 340, which is not limited in embodiments of the present disclosure.

FIG. 18 is a flowchart of a method for determining a DMRS according to an exemplary embodiment of the present disclosure. The method is performed by a second terminal device or a network device, and includes:
**Step 30:** transmitting second indication information.

In some embodiments, the second indication information is used to indicate a DMRS corresponding to a candidate reference signal in the third reference signal group. The candidate reference signal in the third reference signal group and the DMRS corresponding to the candidate reference signal in the third reference signal group are used to assess third link quality, and the DMRS corresponding to the candidate reference signal in the third reference signal group is the first DMRS or the second DMRS. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the candidate reference signal in the third reference signal group and the DMRS corresponding to the candidate reference signal in the third reference signal group are used to assess third link quality. Alternatively, it may be understood that the third link quality is assessed in combination with the candidate reference signal in the third reference signal group and the DMRS corresponding to the candidate reference signal in the third reference signal group. The candidate reference signal in the third reference signal group is used to assess the third link quality, and the DMRS corresponding to the candidate reference signal is also used to assess the third link quality.

In some embodiments, the third link quality is link quality corresponding to the candidate reference signal in the third reference signal group. Alternatively, it may be understood that the third link quality is link quality of a beam corresponding to the candidate reference signal in the third reference signal group. The third link quality is used to select a target reference signal that satisfies the link quality condition from one or more candidate reference signals.

In some embodiments, the second indication information is used to indicate a DMRS corresponding to the third reference signal group. The DMRS corresponding to the third reference signal group is the first-type DMRS or the second-type DMRS.

In some embodiments, the second indication information is used to indicate a DMRS corresponding to each candidate reference signal in the third reference signal group. The DMRS corresponding to each candidate reference signal in the third reference signal group is the first DMRS or the second DMRS, and DMRSs corresponding to different candidate reference signals are the same or different.

In some embodiments, the second indication information is further used to indicate a DMRS corresponding to a candidate reference signal in the fourth reference signal group. The candidate reference signal in the fourth reference signal group and the DMRS corresponding to the candidate reference signal in the fourth reference signal group are used to assess fourth link quality, and the DMRS corresponding to the candidate reference signal in the fourth reference signal group is the first DMRS or the second DMRS. The first DMRS may be the first-type DMRS or the second-type DMRS, and the second DMRS may be the second-type DMRS.

In some embodiments, the candidate reference signal in the fourth reference signal group and the DMRS corresponding to the candidate reference signal in the fourth reference signal group are used to assess fourth link quality. Alternatively, it may be understood that the fourth link quality is assessed in combination with the candidate reference signal in the fourth reference signal group and the DMRS corresponding to the candidate reference signal in the fourth reference signal group. The candidate reference signal in the fourth reference signal group is used to assess the fourth link quality, and the DMRS corresponding to the candidate reference signal is also used to assess the fourth link quality.

In some embodiments, the fourth link quality is link quality corresponding to the candidate reference signal in the fourth reference signal group. Alternatively, it may be understood that the fourth link quality is link quality of a beam corresponding to the candidate reference signal in the fourth reference signal group. The fourth link quality is used to select a target reference signal that satisfies the link quality condition from one or more candidate reference signals.

Specifically, for functions of the second indication information, refer to step 323 and step 343 described above.

FIG. 19 is a flowchart of a method for determining a DMRS according to an exemplary embodiment of the present disclosure. The method is performed by a second terminal device or a network device, and includes:
**Step 31:** Receiving a target reference signal.

In some embodiments, the second terminal device or the network device receives information corresponding to the target reference signal. The target reference signal is a reference signal that is selected from one or more candidate reference signals and satisfies the link quality condition. The DMRS corresponding to the target reference signal is the first DMRS or the second DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

The DMRS corresponding to the target reference signal is used to assess link quality corresponding to the target reference signal.

In some embodiments, the target reference signal and the DMRS corresponding to the target reference signal are received. The DMRS corresponding to the target reference signal is the first DMRS or the second DMRS.

FIG. 20 is a flowchart of a method for determining a DMRS according to an exemplary embodiment of the present disclosure. The method is performed by a second terminal device or a network device, and includes:
**Step 32:** Receiving a terminal capability.

Optionally, a third terminal capability is received, where the third terminal capability is used to indicate support for using the first-type DMRS.

Optionally, a fourth terminal capability is received, where the fourth terminal capability is used to indicate support for determining a DMRS corresponding to a candidate reference signal in the third reference signal group.

Specifically, for an implementation of the terminal capability, refer to step 380 described above.

It is to be noted that, generally, step 32 is performed before step 30.

In some embodiments, the first-type DMRS is a DMRS that uses at least one same resource element as control information. The second-type DMRS is a DMRS that uses different resource elements from control information.

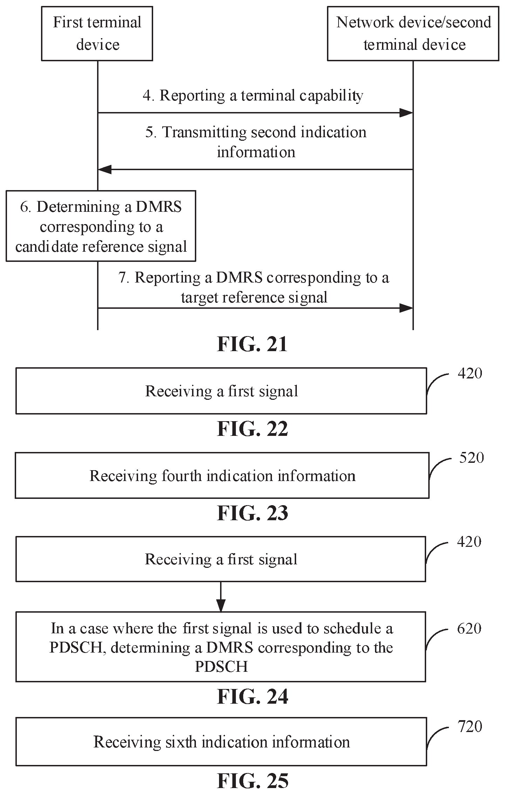

In some embodiments, FIG. 21 is a flowchart of a method for determining a DMRS according to an exemplary embodiment of the present disclosure. The method is jointly performed by a first terminal device, a second terminal device, and/or a network device, and further includes:
Step 4: The first terminal device reports a terminal capability to the second terminal device and/or the network device.

Specifically, for an implementation of the terminal capability, refer to step 310 described above.

Step 5: The second terminal device and/or the network device transmits second indication information.

Optionally, the second indication information is used to indicate or configure a candidate reference signal in a reference signal group.

Step 6: The first terminal device determines a DMRS corresponding to a candidate reference signal.

Optionally, the first terminal device determines a DMRS corresponding to each candidate reference signal in the third reference signal group. For a specific determination manner, refer to step 320 described above. Optionally, the first terminal device determines a DMRS corresponding to each candidate reference signal in the fourth reference signal group. For a specific determination manner, refer to step 340 described above.

The first terminal device assesses link quality based on the candidate reference signal in the reference signal group.

Step 7: The first terminal device reports a DMRS corresponding to a target reference signal to the second terminal device and/or the network device.

The target reference signal is a reference signal that is selected from one or more candidate reference signals and satisfies the link quality condition. Specifically, for the DMRS corresponding to the target reference signal, refer to step 360 described above.

The above steps are not necessarily all included, and may include one or more of them.

FIG. 22 is a flowchart of a method for determining a DMRS according to an exemplary embodiment of the present disclosure. The method is performed by a first terminal device, and includes:
**Step 420:** Receiving a first signal.

The first signal may be a signal (for example, a reference signal RS), a channel (for example, a PDSCH or a PDCCH), or information transmitted by a channel (for example, DCI transmitted by a PDCCH).

In some embodiments, the first signal is a response signal transmitted by a network device or a second terminal device to the first terminal device. The first signal is used to respond to first reporting information. Optionally, the first reporting information may include a target reference signal. The first reporting information is reported by the first terminal device to the network device or the second terminal device. The target reference signal is a reference signal that is selected by the first terminal device from all candidate reference signals and satisfies the link quality condition.

In some embodiments, the target reference signal is the target reference signal reported in step 360 described above. That is, the target reference signal is a signal that is selected from one or more candidate reference signals based on the third link quality and/or the fourth link quality described above and that satisfies the link quality condition. Alternatively, it may be understood that link quality corresponding to the target reference signal is assessed based on the target reference signal and the DMRS corresponding to the target reference signal.

In some embodiments, the link quality corresponding to the target reference signal is not assessed based on the DMRS corresponding to the target reference signal. That is, the link quality corresponding to the target reference signal is determined based on RSRP of the target reference signal, or the link quality corresponding to the target reference signal is determined based on SINR of the target reference signal.

In some embodiments, a port of the first signal is quasi co-located (QCL) with the target reference signal, or a DMRS corresponding to the first signal is QCL with the target reference signal.

In some embodiments, the first signal is a PDCCH, or the first signal is DCI. In this case, the first terminal device receives the first signal based on a first search space, the first search space is indicated by indication information, and the indication information is transmitted by the first network device or the second terminal device to the first terminal device. The first search space corresponds to a first CORESET. Optionally, the first CORESET does not correspond to a search space other than the first search space. Optionally, the first CORESET may further correspond to another search space. When the first CORESET corresponds to another search space, the another search space may be QCL with another signal.

Optionally, the indication information may be transmitted using one or more of RRC signaling, MAC CE signaling, and DCI signaling.

It is to be noted that the indication information mentioned herein, including beam indication information, DMRS indication information, first indication information, second indication information, third indication information, and other possible indication information, may all be different indication information; or a part thereof may be the same indication information and another part thereof may be different indication information; or all thereof may be the same indication information.

In some embodiments, the first signal is transmitted based on a first DMRS, or the first signal is transmitted based on a second DMRS. The first signal is transmitted based on a first-type DMRS, or the first signal is transmitted based on a second-type DMRS. The first-type DMRS is a DMRS that uses one or more same resource elements as control information, and the second-type DMRS is a DMRS that uses different resource elements from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the case that the first signal is transmitted based on the first DMRS may also be understood as that a DMRS corresponding to the first signal is the first DMRS, or that the first signal adopts the first DMRS as a used DMRS. Similarly, the case that the first signal is transmitted based on the second DMRS may also be understood as that a DMRS corresponding to the first signal is the second DMRS, or that the first signal adopts the second DMRS as a used DMRS. For example, when the first signal is a PDCCH, the PDCCH is transmitted based on the first DMRS, that is, a DMRS corresponding to the PDCCH is the first DMRS, or the PDCCH adopts the first DMRS as a used DMRS; the PDCCH is transmitted based on the second DMRS, that is, a DMRS corresponding to the PDCCH is the second DMRS, or the PDCCH adopts the second DMRS as a used DMRS.

In some embodiments, the first signal is transmitted based on a default DMRS. The default DMRS is the first DMRS or the second DMRS, and the default DMRS is the first-type DMRS or the second-type DMRS. Optionally, the default DMRS is a DMRS used by a control channel. For example, when the DMRS used by the control channel is the first DMRS, the default DMRS is the first DMRS; and when the DMRS used by the control channel is the second DMRS, the default DMRS is the second DMRS.

In some embodiments, the first signal is transmitted based on a DMRS indicated by third indication information. The DMRS indicated by the third indication information is the first DMRS or the second DMRS, and the DMRS indicated by the third indication information is the first-type DMRS or the second-type DMRS. The third indication information is transmitted by a network device or a second terminal device to the first terminal device. The third indication information is used to indicate that the first signal is transmitted based on the first DMRS or the second DMRS. Optionally, the third indication information indicates that the first signal is transmitted based on the first DMRS. Optionally, the third indication information indicates that the first signal is transmitted based on the second DMRS.

In some embodiments, the first signal is transmitted based on a DMRS corresponding to a target reference signal. When the first terminal device reports the DMRS corresponding to the target reference signal to the network device or the second terminal device, the network device or the second terminal device can select the DMRS corresponding to the target reference signal to transmit the first signal. Optionally, when the first terminal device reports that the DMRS corresponding to the target reference signal is the first DMRS to the network device or the second terminal device, the network device or the second terminal device chooses to use the first DMRS to transmit the first signal. Optionally, when the first terminal device reports that the DMRS corresponding to the target reference signal is the second DMRS to the network device or the second terminal device, the network device or the second terminal device chooses to use the second DMRS to transmit the first signal.

In the method provided in this embodiment, when two types of DMRSs exist, the first signal transmitted based on the first DMRS or the first signal transmitted based on the second DMRS is received, and determination of the type of DMRS based on which the first signal is transmitted further helps ensure stability of subsequent communication.

In a further embodiment based on the embodiment shown in FIG. 22, FIG. 23 is a flowchart of a method for determining a DMRS according to an exemplary embodiment of the present disclosure. The method is performed by a first terminal device, and further includes:
**Step 520:** Receiving fourth indication information.

In some embodiments, the fourth indication information is used to indicate one or more of a receiver, a receiver algorithm, and an AI model used for receiving the first signal. Optionally, the fourth indication information includes one or more of the following options:
- a first receiver identifier;
- a first algorithm identifier;
- a first model identifier; and
- a first functionality flag or first functionality configuration information.

The first receiver identifier is used to indicate the receiver used for receiving the first signal, the first algorithm identifier is used to indicate the receiver algorithm used for receiving the first signal, the first model identifier is used to indicate the AI model used for receiving the first signal, and the first functionality flag or the first functionality configuration information is used to indicate or activate a current corresponding functionality.

In the method provided in this embodiment, a manner for receiving the first signal is directly determined by receiving the fourth indication information, so that communication transmission between the first terminal device and a network device or between the first terminal device and a second terminal device can be implemented more efficiently.

In a further embodiment based on the embodiment shown in FIG. 22, FIG. 24 is a flowchart of a method for determining a DMRS according to an exemplary embodiment of the present disclosure. The method is performed by a first terminal device, and further includes:
**Step 620:** In a case where the first signal is used to schedule a PDSCH, determining a DMRS corresponding to the PDSCH.

In some embodiments, the DMRS corresponding to the PDSCH is the first DMRS or the second DMRS, and the DMRS corresponding to the PDSCH is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, when the first signal is used to schedule the PDSCH, the DMRS corresponding to the PDSCH is determined as the first DMRS. In other words, the first DMRS is used as a DMRS assumption, or it is assumed that the first DMRS is used as the DMRS corresponding to the PDSCH. For example, the first DMRS is the first-type DMRS in this case.

In some embodiments, when the first signal is used to schedule the PDSCH, the DMRS corresponding to the PDSCH is determined as the second DMRS. In other words, the second DMRS is used as a DMRS assumption, or it is assumed that the second DMRS is used as the DMRS corresponding to the PDSCH. For example, the second DMRS is the second-type DMRS in this case.

In some embodiments, the first signal includes first DCI. In some embodiments, when the first DCI is used to schedule the PDSCH, the DMRS corresponding to the PDSCH is determined as the first DMRS. In some embodiments, when the first DCI is used to schedule the PDSCH, the DMRS corresponding to the PDSCH is determined as the second DMRS.

In the method provided in this embodiment, the DMRS corresponding to the PDSCH can be determined when the first DCI schedules the PDSCH, thereby preventing communication confusion when two types of DMRSs exist.

In a further embodiment based on the embodiment shown in FIG. 24, the foregoing step of determining the DMRS corresponding to the PDSCH may be replaced with the following sub-steps:
Step 621: Determining the DMRS corresponding to the PDSCH as a previously used DMRS, or determining the DMRS corresponding to the PDSCH as a DMRS indicated by fifth indication information.

In some embodiments, the previously used DMRS is the first DMRS or the second DMRS, and the previously used DMRS is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the previously used DMRS is a DMRS used by the PDSCH last time or a DMRS used by the PDSCH most recently.

In some embodiments, in a case where the DMRS used by the PDSCH last time is the first DMRS, the DMRS corresponding to the PDSCH is determined as the first DMRS. In other words, it is assumed that the first DMRS is used as the DMRS corresponding to the PDSCH. For example, the first DMRS is the first-type DMRS in this case.

In some embodiments, in a case where the DMRS used by the PDSCH last time is the second DMRS, the DMRS corresponding to the PDSCH is determined as the second DMRS. In other words, it is assumed that the second DMRS is used as the DMRS corresponding to the PDSCH. For example, the second DMRS is the second-type DMRS in this case.

In some embodiments, when the fifth indication information indicates the first DMRS, the DMRS corresponding to the PDSCH is determined as the first DMRS.

In some embodiments, when the fifth indication information indicates the second DMRS, the DMRS corresponding to the PDSCH is determined as the second DMRS.

In the method provided in this embodiment, a process of determining the DMRS corresponding to the PDSCH is not affected by other processes, which facilitates further network optimization.

In a further embodiment based on the embodiment shown in FIG. 24, the foregoing step of determining the DMRS corresponding to the PDSCH may be replaced with the following sub-steps:
Step 622: Determining a target DMRS as the DMRS corresponding to the PDSCH.

The target DMRS is the first DMRS or the second DMRS. In this case, the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, in other words, the target DMRS corresponds to a default DMRS type.

In some embodiments, the first DMRS is determined as the DMRS corresponding to the PDSCH. In other words, it is assumed that the first DMRS is used as the DMRS corresponding to the PDSCH.

In some embodiments, the second DMRS is determined as the DMRS corresponding to the PDSCH. In other words, it is assumed that the second DMRS is used as the DMRS corresponding to the PDSCH.

In the method provided in this embodiment, the target DMRS is directly determined as the DMRS corresponding to the PDSCH, which can effectively save signaling overhead.

In a further embodiment based on the embodiment shown in FIG. 24, the foregoing step of determining the DMRS corresponding to the PDSCH may be replaced with the following sub-steps:
Step 623: Determining a DMRS corresponding to the first signal as the DMRS corresponding to the PDSCH.

In some embodiments, the DMRS corresponding to the first signal is the first DMRS or the second DMRS, and the DMRS corresponding to the first signal is the first-type DMRS or the second-type DMRS. The first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, when the DMRS corresponding to the first signal is the first DMRS, the DMRS corresponding to the PDSCH is determined as the first DMRS. In other words, it is assumed that the first DMRS corresponding to the first signal is used as the DMRS corresponding to the PDSCH.

In some embodiments, when the DMRS corresponding to the first signal is the second DMRS, the DMRS corresponding to the PDSCH is determined as the second DMRS. In other words, it is assumed that the second DMRS corresponding to the first signal is used as the DMRS corresponding to the PDSCH.

It is to be noted that when the DMRS corresponding to the first signal is determined as the DMRS corresponding to the PDSCH, the DMRS corresponding to the first signal and the DMRS corresponding to the PDSCH are not necessarily completely identical DMRSs. It should be understood that when the DMRS corresponding to the first signal is a non-orthogonal DMRS, the DMRS corresponding to the PDSCH is also a non-orthogonal DMRS; and when the DMRS corresponding to the first signal is an orthogonal DMRS, the DMRS corresponding to the PDSCH is also an orthogonal DMRS. However, the DMRS corresponding to the first signal and the DMRS corresponding to the PDSCH may be different, for example, different DMRS patterns or different DMRS sequences.

In the method provided in this embodiment, the DMRS corresponding to the PDSCH is determined based on the DMRS corresponding to the first signal, so that a control channel and a data channel in a communication system can adopt similar DMRS patterns, thereby simplifying subsequent processing of a terminal device.

It is to be noted that any one of steps 621 to 623 may be implemented as a separate embodiment.

In a further embodiment based on the embodiment shown in FIG. 24, FIG. 25 is a flowchart of a method for determining a DMRS according to an exemplary embodiment of the present disclosure. The method is performed by a first terminal device, and further includes:
**Step 720:** Receiving sixth indication information.

In some embodiments, the sixth indication information indicates one or more of a receiver, a receiver algorithm, and an AI model for receiving the PDSCH. Optionally, the sixth indication information includes one or more of the following options:
- a second receiver identifier;
- a second algorithm identifier;
- a second model identifier; and
- a second functionality flag or second functionality configuration information.

The second receiver identifier is used to indicate the receiver used for receiving the PDSCH, the second algorithm identifier is used to indicate the receiver algorithm used for receiving the PDSCH, the second model identifier is used to indicate the AI model used for receiving the PDSCH, and the second functionality flag or the second functionality configuration information is used to indicate or activate a current corresponding functionality.

In the method provided in this embodiment, a manner for receiving the PDSCH is directly determined by receiving the sixth indication information, so that communication transmission between the first terminal device and a network device or between the first terminal device and a second terminal device can be implemented more efficiently.

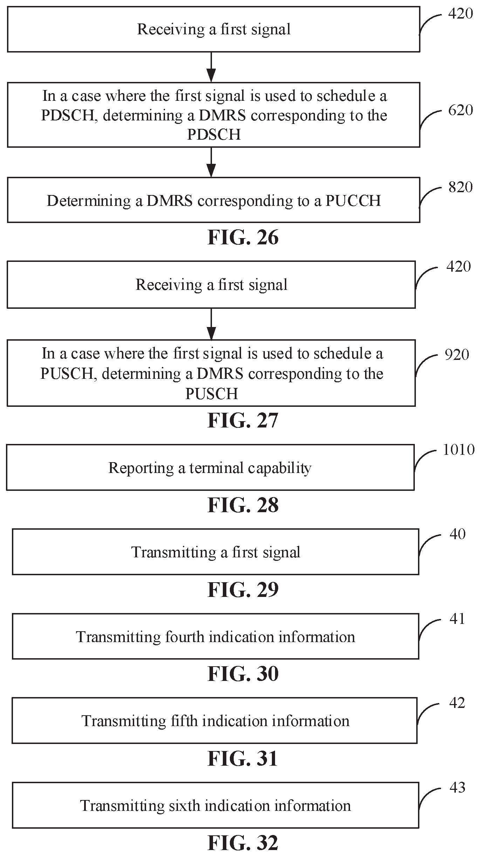

In some embodiments, when the first DCI is used to schedule the PDSCH, a response signal corresponding to the PDSCH may be transmitted through a PUCCH. In a further embodiment based on the embodiment shown in FIG. 24, as shown in FIG. 26, the method further includes:
**Step 820:** Determining a DMRS corresponding to a PUCCH.

In some embodiments, the PUCCH is used to transmit a second signal corresponding to the PDSCH. Optionally, the second signal is an acknowledgement/non-acknowledgement signal corresponding to the PDSCH, and the PDSCH is scheduled by the foregoing first signal.

In some embodiments, when the first signal is used to schedule the PDSCH, the DMRS corresponding to the PUCCH is determined. The DMRS corresponding to the PUCCH is the first DMRS or the second DMRS, and the DMRS corresponding to the PUCCH is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the PUCCH is determined as the first DMRS. In other words, the first DMRS is used as a DMRS assumption, or it is assumed that the first DMRS is used as the DMRS corresponding to the PUCCH. For example, the first DMRS here is the first-type DMRS.

In some embodiments, the DMRS corresponding to the PUCCH is determined as the second DMRS. In other words, the second DMRS is used as a DMRS assumption, or it is assumed that the second DMRS is used as the DMRS corresponding to the PUCCH. For example, the second DMRS here is the second-type DMRS.

In the method provided in this embodiment, the DMRS corresponding to the PUCCH can be determined when two types of DMRSs exist, thereby ensuring stability of the communication system.

In a further embodiment based on the embodiment shown in FIG. 26, the foregoing step 820 may be replaced with the following sub-steps:
Step 821: Determining the DMRS corresponding to the PUCCH as a previously used DMRS, or determining the DMRS corresponding to the PUCCH as a DMRS indicated by seventh indication information.

In some embodiments, the previously used DMRS is the first DMRS or the second DMRS, and the previously used DMRS is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the previously used DMRS is a DMRS used by the PUCCH last time or a DMRS used by the PUCCH most recently.

In some embodiments, in a case where the DMRS used by the PUCCH last time is the first DMRS, the DMRS corresponding to the PUCCH is determined as the first DMRS. In other words, it is assumed that the first DMRS is used as the DMRS corresponding to the PUCCH. For example, the first DMRS is the first-type DMRS in this case.

In some embodiments, in a case where the DMRS used by the PUCCH last time is the second DMRS, the DMRS corresponding to the PUCCH is determined as the second DMRS. In other words, it is assumed that the second DMRS is used as the DMRS corresponding to the PUCCH. For example, the second DMRS is the second-type DMRS in this case.

In some embodiments, when the seventh indication information indicates the first DMRS, the DMRS corresponding to the PDSCH is determined as the first DMRS.

In some embodiments, when the seventh indication information indicates the second DMRS, the DMRS corresponding to the PDSCH is determined as the second DMRS.

In the method provided in this embodiment, a process of determining the DMRS corresponding to the PUCCH is not affected by other processes, which facilitates further network optimization.

In a further embodiment based on the embodiment shown in FIG. 26, the foregoing step 820 may be replaced with the following sub-steps:
Step 822: Determining a target DMRS as the DMRS corresponding to the PUCCH.

The target DMRS is the first DMRS or the second DMRS. In this case, the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, in other words, the target DMRS corresponds to a default DMRS type.

In some embodiments, the first DMRS is determined as the DMRS corresponding to the PUCCH. In other words, it is assumed that the first DMRS is used as the DMRS corresponding to the PUCCH.

In some embodiments, the second DMRS is determined as the DMRS corresponding to the PUCCH. In other words, it is assumed that the second DMRS is used as the DMRS corresponding to the PUCCH.

In the method provided in this embodiment, the target DMRS is directly determined as the DMRS corresponding to the PUCCH, which can effectively save signaling overhead.

In a further embodiment based on the embodiment shown in FIG. 26, the foregoing step 820 may be replaced with the following sub-steps:
Step 823: Determining a DMRS corresponding to the first signal as the DMRS corresponding to the PUCCH.

In some embodiments, the DMRS corresponding to the first signal is the first DMRS or the second DMRS, and the DMRS corresponding to the first signal is the first-type DMRS or the second-type DMRS. The first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, when the DMRS corresponding to the first signal is the first DMRS, the DMRS corresponding to the PUCCH is determined as the first DMRS. In other words, it is assumed that the first DMRS corresponding to the first signal is used as the DMRS corresponding to the PUCCH.

In some embodiments, when the DMRS corresponding to the first signal is the second DMRS, the DMRS corresponding to the PUCCH is determined as the second DMRS. In other words, it is assumed that the second DMRS corresponding to the first signal is used as the DMRS corresponding to the PUCCH.

It is to be noted that when the DMRS corresponding to the first signal is determined as the DMRS corresponding to the PUCCH, the DMRS corresponding to the first signal and the DMRS corresponding to the PUCCH are not necessarily completely identical DMRSs. It should be understood that when the DMRS corresponding to the first signal is a non-orthogonal DMRS, the DMRS corresponding to the PUCCH is also a non-orthogonal DMRS; when the DMRS corresponding to the first signal is an orthogonal DMRS, the DMRS corresponding to the PUCCH is also an orthogonal DMRS. However, the DMRS corresponding to the first signal and the DMRS corresponding to the PUCCH may be different, for example, different DMRS patterns or different DMRS sequences.

In the method provided in this embodiment, the DMRS corresponding to the PUCCH is determined based on the DMRS corresponding to the first signal, so that a control channel and a data channel in a communication system can adopt similar DMRS patterns, thereby simplifying subsequent processing of a terminal device.

It is to be noted that any one of steps 821 to 823 may be implemented as a separate embodiment.

In a further embodiment based on the embodiment shown in FIG. 22, FIG. 27 is a flowchart of a method for determining a DMRS according to an exemplary embodiment of the present disclosure. The method is performed by a first terminal device, and further includes:
**Step 920:** In a case where the first signal is used to schedule a PUSCH, determining a DMRS corresponding to the PUSCH.

In some embodiments, the DMRS corresponding to the PUSCH is the first DMRS or the second DMRS, and the DMRS corresponding to the PUSCH is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, in a case where the first signal is used to schedule the PUSCH, the DMRS corresponding to the PUSCH is determined to be a first DMRS. In other words, the first DMRS is used as a DMRS assumption, or it is assumed that the first DMRS is used as the DMRS corresponding to the PUSCH. For example, the first DMRS is a first-type DMRS in this case. In some embodiments, in a case where the first signal is used to schedule the PUSCH, the DMRS corresponding to the PUSCH is determined to be a second DMRS. In other words, the second DMRS is used as a DMRS assumption, or it is assumed that the second DMRS is used as the DMRS corresponding to the PUSCH. For example, the second DMRS is a second-type DMRS in this case.

In some embodiments, the first signal includes second DCI. In some embodiments, when the second DCI is used to schedule the PUSCH, the DMRS corresponding to the PUSCH is determined to be the first DMRS. In some embodiments, when the second DCI is used to schedule the PUSCH, the DMRS corresponding to the PUSCH is determined to be the second DMRS.

In the method provided in this embodiment, the DMRS corresponding to the PUSCH can be determined when the second DCI schedules the PUSCH, thereby preventing communication confusion when two types of DMRSs exist.

In a further embodiment based on the embodiment shown in FIG. 27, the foregoing step of determining the DMRS corresponding to the PUSCH may be replaced with the following sub-steps:
Step 921: Determining the DMRS corresponding to the PUSCH as a previously used DMRS, or determining the DMRS corresponding to the PUSCH as a DMRS indicated by eighth indication information.

In some embodiments, the previously used DMRS is the first DMRS or the second DMRS, and the previously used DMRS is the first-type DMRS or the second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the previously used DMRS is a DMRS used by the PUSCH last time or a DMRS used by the PUSCH most recently.

In some embodiments, in a case where the DMRS used by the PUSCH last time is the first DMRS, the DMRS corresponding to the PUSCH is determined as the first DMRS. In other words, it is assumed that the first DMRS is used as the DMRS corresponding to the PUSCH. For example, the first DMRS is the first-type DMRS in this case.

In some embodiments, in a case where the DMRS used by the PUSCH last time is the second DMRS, the DMRS corresponding to the PUSCH is determined as the second DMRS. In other words, it is assumed that the second DMRS is used as the DMRS corresponding to the PUSCH. For example, the second DMRS is the second-type DMRS in this case.

In some embodiments, when the eighth indication information indicates the first DMRS, the DMRS corresponding to the PUSCH is determined as the first DMRS.

In some embodiments, when the eighth indication information indicates the second DMRS, the DMRS corresponding to the PUSCH is determined as the second DMRS.

In the method provided in this embodiment, a process of determining the DMRS corresponding to the PUSCH is not affected by other processes, which facilitates further network optimization.

In a further embodiment based on the embodiment shown in FIG. 27, the foregoing step of determining the DMRS corresponding to the PUSCH may be replaced with the following sub-steps:
Step 922: Determining a target DMRS as the DMRS corresponding to the PUSCH.

The target DMRS is the first DMRS or the second DMRS. In this case, the first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

The target DMRS is a default DMRS, in other words, the target DMRS corresponds to a default DMRS type.

In some embodiments, the first DMRS is determined as the DMRS corresponding to the PUSCH. In other words, it is assumed that the first DMRS is used as the DMRS corresponding to the PUSCH.

In some embodiments, the second DMRS is determined as the DMRS corresponding to the PUSCH. In other words, it is assumed that the second DMRS is used as the DMRS corresponding to the PUSCH.

In the method provided in this embodiment, the target DMRS is directly determined as the DMRS corresponding to the PUSCH, which can effectively save signaling overhead.

In a further embodiment based on the embodiment shown in FIG. 27, the foregoing step of determining the DMRS corresponding to the PUSCH may be replaced with the following sub-steps:
Step 923: Determining a DMRS corresponding to the first signal as the DMRS corresponding to the PUSCH.

In some embodiments, the DMRS corresponding to the first signal is the first DMRS or the second DMRS, and the DMRS corresponding to the first signal is the first-type DMRS or the second-type DMRS. The first DMRS is the first-type DMRS or the second-type DMRS, and the second DMRS is the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, when the DMRS corresponding to the first signal is the first DMRS, the DMRS corresponding to the PUSCH is determined as the first DMRS. In other words, it is assumed that the first DMRS corresponding to the first signal is used as the DMRS corresponding to the PUSCH.

In some embodiments, when the DMRS corresponding to the first signal is the second DMRS, the DMRS corresponding to the PUSCH is determined as the second DMRS. In other words, it is assumed that the second DMRS corresponding to the first signal is used as the DMRS corresponding to the PUSCH.

It is to be noted that when the DMRS corresponding to the first signal is determined as the DMRS corresponding to the PUSCH, the DMRS corresponding to the first signal and the DMRS corresponding to the PUSCH are not necessarily completely identical DMRSs. It should be understood that when the DMRS corresponding to the first signal is a non-orthogonal DMRS, the DMRS corresponding to the PUSCH is also a non-orthogonal DMRS; when the DMRS corresponding to the first signal is an orthogonal DMRS, the DMRS corresponding to the PUSCH is also an orthogonal DMRS. However, the DMRS corresponding to the first signal and the DMRS corresponding to the PUSCH may be different, for example, different DMRS patterns or different DMRS sequences.

In the method provided in this embodiment, the DMRS corresponding to the PUSCH is determined based on the DMRS corresponding to the first signal, so that a control channel and a data channel in a communication system can adopt similar DMRS patterns, thereby simplifying subsequent processing of a terminal device.

It is to be noted that any one of steps 921 to 923 may be implemented as a separate embodiment.

FIG. 28 is a flowchart of a method for determining a DMRS according to an exemplary embodiment of the present disclosure. In a further embodiment based on the embodiment shown in FIG. 22, before step 420, the method further includes:
**Step 1010:** Reporting a terminal capability.

Optionally, a fifth terminal capability is reported. The fifth terminal capability is used to indicate that a first terminal device supports use of the first-type DMRS. The first-type DMRS is a DMRS that uses one or more same resource elements as control information.

In some embodiments, the fifth terminal capability is transmitted using RRC signaling, or the fifth terminal capability is transmitted using MAC CE signaling.

In some embodiments, the fifth terminal capability is reported according to one or more of the following options:
- a first band;
- a first band combination;
- each band in the first band combination;
- each carrier on each band in the first band combination;
- a first target frequency range; and
- a first target terminal device.

Optionally, the fifth terminal capability is reported per band. In other words, a terminal capability corresponding to a current band can be independently reported for different bands, which helps improve flexibility of the terminal device.

Optionally, the fifth terminal capability is reported per band combination. In other words, a terminal capability corresponding to a current band combination can be independently reported for different band combinations, which helps improve flexibility of the terminal device.

Optionally, the fifth terminal capability is independently reported per band per band combination. In other words, a terminal capability corresponding to a current band can be independently reported for different bands in different band combinations, which helps improve flexibility of the terminal device.

Optionally, the fifth terminal capability is independently reported per carrier per band per band combination. In other words, a terminal capability corresponding to a current carrier can be independently reported for different carriers in different bands of different band combinations, which helps improve flexibility of the terminal device.

Optionally, the fifth terminal capability is reported per frequency range. In other words, a terminal capability corresponding to a current frequency range can be independently reported for different frequency ranges, which helps improve flexibility of the terminal device.

Optionally, the fifth terminal capability is reported per terminal device. In other words, different terminal devices can independently report terminal capabilities corresponding to the terminal devices, which can effectively reduce signaling overhead of reporting, by a terminal device, a terminal capability.

In some embodiments, the fifth terminal capability is further used to indicate one or more of the following options:
- a supported power parameter;
- a mode in which the first-type DMRS is supported;
- a frequency-domain density of the supported first-type DMRS; and
- a time-domain density of the supported first-type DMRS.

Optionally, a sixth terminal capability is reported. The sixth terminal capability is used to indicate support for determining a DMRS.

Optionally, the sixth terminal capability is used to indicate support for determining, when first DCI is used to schedule a PDSCH, a DMRS corresponding to the PDSCH. Optionally, the sixth terminal capability is used to indicate support for determining, when the first DCI is used to schedule the PDSCH, a DMRS corresponding to a PUCCH. Optionally, the sixth terminal capability is used to indicate support for determining, when second DCI is used to schedule a PUSCH, a DMRS corresponding to the PUSCH.

In some embodiments, the sixth terminal capability is transmitted using RRC signaling, or the sixth terminal capability is transmitted using MAC CE signaling.

In some embodiments, the sixth terminal capability is reported according to one or more of the following options:
- a second band;
- a second band combination;
- each band in the second band combination;
- each carrier on each band in the second band combination;
- a second target frequency range; and
- a second target terminal device.

Optionally, the sixth terminal capability is reported per band. In other words, different bands can independently report terminal capabilities corresponding to the bands, which helps improve flexibility of the terminal device.

Optionally, the sixth terminal capability is reported per band combination. In other words, different band combinations can independently report terminal capabilities corresponding to the band combinations, which helps improve flexibility of the terminal device.

Optionally, the sixth terminal capability is independently reported per band per band combination. In other words, different bands in different band combinations can independently report terminal capabilities corresponding to the bands, which helps improve flexibility of the terminal device.

Optionally, the sixth terminal capability is independently reported per carrier per band per band combination. In other words, different carriers in different bands of different band combinations can independently report terminal capabilities corresponding to the carriers, which helps improve flexibility of the terminal device.

Optionally, the sixth terminal capability is reported per frequency range. In other words, different frequency ranges can independently report terminal capabilities corresponding to the frequency ranges, which helps improve flexibility of the terminal device.

Optionally, the sixth terminal capability is reported per terminal device. In other words, different terminal devices can independently report terminal capabilities corresponding to the terminal devices, which can effectively reduce signaling overhead of reporting, by a terminal device, a terminal capability.

Optionally, the fifth terminal capability and the sixth terminal capability may be reported together; optionally, the fifth terminal capability and the sixth terminal capability may be reported using a same option, for example, the first band corresponding to the fifth terminal capability and the second band corresponding to the sixth terminal capability are a same band.

FIG. 29 is a flowchart of a method for determining a DMRS according to an exemplary embodiment of the present disclosure. The method is performed by a second terminal device or a network device, and includes:
**Step 40:** transmitting a first signal.

The first signal may be a signal (for example, a reference signal (RS)), a channel (for example, a PDSCH or a PDCCH), or information transmitted by a channel (for example, DCI transmitted by a PDCCH).

In some embodiments, the first signal is used to respond to first report information. Optionally, the first report information may include a target reference signal, the target reference signal being a reference signal that meets a link quality condition among all candidate reference signals. The first signal is transmitted based on a first DMRS, or the first signal is transmitted based on a second DMRS. The first DMRS may be a first-type DMRS or a second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the target reference signal is the target reference signal reported in step 360. In other words, the target reference signal is a signal that is selected from one or more candidate reference signals based on third link quality and/or fourth link quality and meets the link quality condition. Alternatively, it may be understood that link quality corresponding to the target reference signal is assessed based on the target reference signal and a DMRS corresponding to the target reference signal.

In some embodiments, the link quality corresponding to the target reference signal is not assessed based on the DMRS corresponding to the target reference signal. In other words, the link quality corresponding to the target reference signal is determined based on RSRP of the target reference signal, or the link quality corresponding to the target reference signal is determined based on SINR of the target reference signal.

In some embodiments, a port of the first signal is quasi-co-located (QCL) with the target reference signal, or a DMRS corresponding to the first signal is quasi-co-located (QCL) with the target reference signal.

In some embodiments, the first signal is a PDCCH, or the first signal is DCI. In this case, the first terminal device receives the first signal based on a first search space, the first search space is indicated by indication information, and the indication information is transmitted by a first network device or the second terminal device to the first terminal device. The first search space corresponds to a first CORESET. Optionally, the first CORESET does not correspond to another search space other than the first search space. Optionally, the first CORESET may further correspond to another search space, and when the first CORESET corresponds to another search space, the another search space may be quasi-co-located (QCL) with another signal.

Optionally, the indication information may be transmitted using one or more of RRC signaling, MAC CE signaling, and DCI signaling.

It is to be noted that the indication information mentioned in the present disclosure, including beam indication information, DMRS indication information, first indication information, second indication information, third indication information, and other possible indication information, may all be different indication information; or a part thereof may be the same indication information and another part thereof may be different indication information; or all thereof may be the same indication information.

In some embodiments, the first signal is transmitted based on a first DMRS, or the first signal is transmitted based on a second DMRS. The first DMRS may be a first-type DMRS or a second-type DMRS, and the second DMRS may be the second-type DMRS. The first-type DMRS is a DMRS that uses one or more same resource elements as control information, and the second-type DMRS is a DMRS that uses different resource elements from control information.

In some embodiments, the first signal is transmitted based on a default DMRS, and the default DMRS is the first DMRS or the second DMRS. Optionally, the default DMRS is a DMRS used by a control channel. For example, when the DMRS used by the control channel is the first DMRS, the default DMRS is the first DMRS; when the DMRS used by the control channel is the second DMRS, the default DMRS is the second DMRS.

In some embodiments, the first signal is transmitted based on a DMRS indicated by third indication information. The DMRS indicated by the third indication information is the first DMRS or the second DMRS. The third indication information is transmitted by a network device or the second terminal device to the first terminal device. The third indication information is used to indicate that the first signal is transmitted based on the first DMRS or the second DMRS. Optionally, the third indication information indicates that the first signal is transmitted based on the first DMRS. Optionally, the third indication information indicates that the first signal is transmitted based on the second DMRS.

In some embodiments, the first signal is transmitted based on a DMRS corresponding to a target reference signal. When the first terminal device reports the DMRS corresponding to the target reference signal to the network device or the second terminal device, the network device or the second terminal device can select the DMRS corresponding to the target reference signal to transmit the first signal. Optionally, when the first terminal device reports that the DMRS corresponding to the target reference signal is the first DMRS to the network device or the second terminal device, the network device or the second terminal device chooses to use the first DMRS to transmit the first signal. Optionally, when the first terminal device reports that the DMRS corresponding to the target reference signal is the second DMRS to the network device or the second terminal device, the network device or the second terminal device chooses to use the second DMRS to transmit the first signal.

FIG. 30 is a flowchart of a method for determining a DMRS according to an exemplary embodiment of the present disclosure. The method is performed by a second terminal device or a network device, and includes:
**Step 41:** transmitting fourth indication information.

In some embodiments, the fourth indication information is used to indicate one or more of a receiver, a receiver algorithm, and an AI model used for receiving the first signal. Optionally, the fourth indication information includes one or more of the following options:
- a first receiver identifier;
- a first algorithm identifier;
- a first model identifier; and
- a first functionality flag or first functionality configuration information.

The first receiver identifier is used to indicate the receiver used for receiving the first signal, the first algorithm identifier is used to indicate the receiver algorithm used for receiving the first signal, the first model identifier is used to indicate the AI model used for receiving the first signal, and the first functionality flag or the first functionality configuration information is used to indicate or activate a current corresponding functionality.

FIG. 31 is a flowchart of a method for determining a DMRS according to an exemplary embodiment of the present disclosure. The method is performed by a second terminal device or a network device, and includes:
**Step 42:** transmitting fifth indication information.

In some embodiments, the fifth indication information is used to indicate a DMRS corresponding to a PDSCH scheduled by the first signal. The DMRS corresponding to the PDSCH is a first DMRS or a second DMRS.

In some embodiments, the first signal includes first DCI.

FIG. 32 is a flowchart of a method for determining a DMRS according to an exemplary embodiment of the present disclosure. The method is performed by a second terminal device or a network device, and includes:
**Step 43:** transmitting sixth indication information.

In some embodiments, the sixth indication information indicates one or more of a receiver, a receiver algorithm, and an AI model for receiving the PDSCH. Optionally, the sixth indication information includes one or more of the following options:
- a second receiver identifier;
- a second algorithm identifier;
- a second model identifier; and
- a second functionality flag or second functionality configuration information.

The second receiver identifier is used to indicate the receiver used for receiving the PDSCH, the second algorithm identifier is used to indicate the receiver algorithm used for receiving the PDSCH, the second model identifier is used to indicate the AI model used for receiving the PDSCH, and the second functionality flag or the second functionality configuration information is used to indicate or activate a current corresponding functionality.

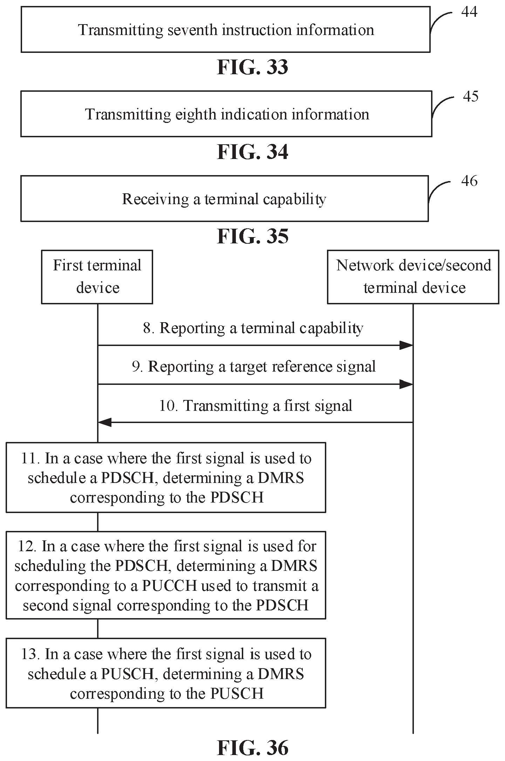

FIG. 33 is a flowchart of a method for determining a DMRS according to an exemplary embodiment of the present disclosure. The method is performed by a second terminal device or a network device, and includes:
**Step 44:** transmitting seventh indication information.

In some embodiments, the seventh indication information is used to indicate a DMRS corresponding to a PUCCH. The PUCCH is used to transmit a second signal corresponding to a PDSCH, and the DMRS corresponding to the PUCCH is a first DMRS or a second DMRS.

FIG. 34 is a flowchart of a method for determining a DMRS according to an exemplary embodiment of the present disclosure. The method is performed by a second terminal device or a network device, and includes:
**Step 45:** transmitting eighth indication information.

In some embodiments, the eighth indication information is used to indicate a DMRS corresponding to a PUSCH scheduled by the first signal. The DMRS corresponding to the PUSCH is a first DMRS or a second DMRS.

In some embodiments, the first signal includes second DCI.

FIG. 35 is a flowchart of a method for determining a DMRS according to an exemplary embodiment of the present disclosure. The method is performed by a second terminal device or a network device, and includes:
**Step 46:** Receiving a terminal capability.

Optionally, a fifth terminal capability is received, the fifth terminal capability being used to indicate support for using a first-type DMRS.

Optionally, a sixth terminal capability is received, the sixth terminal capability being used to indicate support for determining a DMRS.

For specific implementation of the terminal capability, refer to step 1010.

In some embodiments, the first-type DMRS is a DMRS that uses at least one same resource element as control information. The second-type DMRS is a DMRS that uses different resource elements from control information.

In some embodiments, FIG. 36 is a flowchart of a method for determining a DMRS according to an exemplary embodiment of the present disclosure. The method is jointly performed by a first terminal device, a second terminal device, and/or a network device, and further includes:
Step 8: The first terminal device reports a terminal capability to the second terminal device and/or the network device;

For specific implementation of the terminal capability, refer to step 410.

Step 9: The first terminal device reports a target reference signal to the second terminal device and/or the network device;
Optionally, the target reference signal is the target reference signal reported in step 360. In other words, the target reference signal is a signal that is selected from one or more candidate reference signals based on third link quality and/or fourth link quality and meets a link quality condition. Alternatively, it may be understood that link quality corresponding to the target reference signal is assessed based on the target reference signal and a DMRS corresponding to the target reference signal.

Optionally, the link quality corresponding to the target reference signal is not assessed based on the DMRS corresponding to the target reference signal. In other words, the link quality corresponding to the target reference signal is determined based on RSRP of the target reference signal, or the link quality corresponding to the target reference signal is determined based on SINR of the target reference signal.

Step 10: The second terminal device and/or the network device transmit a first signal to the first terminal device;
For specific implementation of the first signal, refer to step 420.

Step 11: In a case where the first signal is used to schedule a PDSCH, the first terminal device determines a DMRS corresponding to the PDSCH;
For specific implementation of determining the DMRS corresponding to the PDSCH, refer to step 620.

Step 12: In a case where the first signal is used to schedule the PDSCH, the first terminal device determines a DMRS corresponding to a PUCCH used to transmit a second signal corresponding to the PDSCH;
For specific implementation of determining the DMRS corresponding to the PUCCH, refer to step 820.

Step 13: In a case where the first signal is used to schedule a PUSCH, the first terminal device determines a DMRS corresponding to the PUSCH.

For specific implementation of determining the DMRS corresponding to the PUSCH, refer to step 920.

The foregoing steps are not necessarily all included, and one or more of the steps may be included.

It is to be noted that the embodiments shown in FIG. 6 to FIG. 24 may be freely combined, and the embodiments of the present disclosure are not limited thereto, and combination cases are not listed one by one herein.

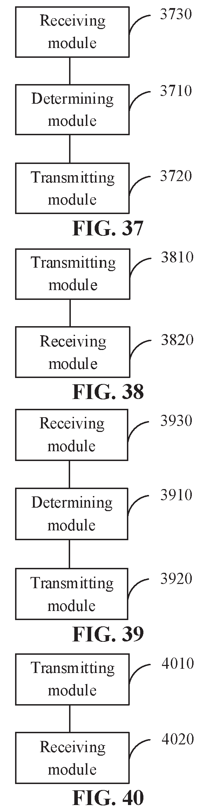

FIG. 37 is a structural block diagram of an apparatus for determining a DMRS according to an exemplary embodiment of the present disclosure. The apparatus includes:
a determining module 3710, configured to determine a DMRS corresponding to a reference signal in a first reference signal group.

In some embodiments, the reference signal in the first reference signal group and the DMRS corresponding to the reference signal in the first reference signal group are used to assess first link quality. Alternatively, it may be understood that the first link quality is assessed in combination with the reference signal in the first reference signal group and the DMRS corresponding to the reference signal in the first reference signal group. The reference signal in the first reference signal group is used to assess the first link quality, and the DMRS corresponding to the reference signal is also used to assess the first link quality, that is, the first link quality is assessed based on the reference signal in the first reference signal group, or the first link quality is assessed based on the reference signal in the first reference signal group and the corresponding DMRS.

In some embodiments, the first link quality is link quality corresponding to the reference signal in the first reference signal group. Alternatively, it may be understood that the first link quality is link quality of a beam corresponding to the reference signal in the first reference signal group. For example, the first reference signal group is associated with TRP1, and each reference signal in the first reference signal group is associated with one beam of TRP1. The first link quality is used to indicate whether a target event occurs, for example, whether beam failure occurs.

In some embodiments, in a wireless link environment, different DMRSs influence final transmission performance. Some possible factors include one or more of the following: different DMRSs occupy different overheads, different DMRSs have different interference conditions with data signals, and different DMRSs have different channel estimation performance. Therefore, when two types of DMRSs exist, it is necessary to determine which type of DMRS is used as a DMRS used by an assumed control channel.

In some embodiments, the DMRS corresponding to the reference signal in the first reference signal group is determined to be a first DMRS or a second DMRS. The DMRS corresponding to the reference signal in the first reference signal group is a first-type DMRS or a second-type DMRS, the first-type DMRS is a DMRS that uses one or more same resource elements as control information, and the second-type DMRS is a DMRS that uses different resource elements from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the reference signal in the first reference signal group is determined to be the first DMRS. In other words, the first DMRS corresponding to the reference signal in the first reference signal group is used as a DMRS assumption, or it is assumed that link quality is assessed using the first DMRS corresponding to the reference signal in the first reference signal group. Optionally, the first DMRS is the first-type DMRS in this case.

In some embodiments, the DMRS corresponding to the reference signal in the first reference signal group is determined to be the second DMRS. In other words, the second DMRS corresponding to the reference signal in the first reference signal group is used as a DMRS assumption, or it is assumed that link quality is assessed using the second DMRS corresponding to the reference signal in the first reference signal group. Optionally, the second DMRS here is the second-type DMRS.

In some embodiments, the reference signal in the first reference signal group is indicated by first indication information.

Optionally, the apparatus may receive the first indication information transmitted by a network device or a second terminal device, the first indication information being used to indicate or configure the reference signal in the first reference signal group.

Optionally, the first indication information is further used to indicate parameter information related to the target event. For example, the first indication information is further used to indicate one or more of a first threshold, first target time, a second threshold, a first count threshold, a third threshold, a first difference threshold, an E1-th count threshold, and an E2-th count threshold that are related to a target event.

Optionally, the first indication information is transmitted using one or more of RRC signaling, MAC CE signaling, and DCI signaling.

It is to be noted that a correspondence between a reference signal and a beam is generally not explicitly specified in a communication protocol. However, in an actual communication process, it may be simply understood that one reference signal corresponds to one beam. Therefore, when link quality corresponding to a reference signal is assessed, link quality corresponding to a beam is actually assessed.

**The determining module 3710 is further configured to** determine a DMRS corresponding to each reference signal in the first reference signal group indicated by the first indication information.

**The determining module 3710 is further configured to:** in a case where first indication information indicates a DMRS corresponding to the first reference signal group, determine the DMRS corresponding to the first reference signal group as a DMRS corresponding to each reference signal in the first reference signal group.

**The determining module 3710 is further configured to** determine, based on a DMRS used by a control channel, the DMRS corresponding to each reference signal in the first reference signal group.

**The determining module 3710 is further configured to** determine a target DMRS as the DMRS corresponding to each reference signal in the first reference signal group.

**In some embodiments, the first indication information does not indicate the reference signal in the first reference signal group.** The reference signal in the first reference signal group is determined based on configuration information of the control channel.

**The determining module 3710 is further configured to:** in a case where a first reference signal in the first reference signal group is determined based on a TCI state corresponding to a target CORESET in the control channel, determine a DMRS corresponding to the target CORESET as a DMRS corresponding to the first reference signal in the first reference signal group.

**The determining module 3710 is further configured to** determine, based on DMRSs corresponding to a plurality of CORESETs corresponding to the reference signal in the first reference signal group, the DMRS corresponding to each reference signal in the first reference signal group.

**The determining module 3710 is further configured to** determine a target DMRS as the DMRS corresponding to each reference signal in the first reference signal group.

**In some embodiments, the reference signal in the first reference signal group is determined based on a TCI state corresponding to a target search space in the control channel.**

**The determining module 3710 is further configured to:** in a case where a second reference signal in the first reference signal group is determined based on the TCI state corresponding to the target search space in the control channel, determine a DMRS corresponding to the target search space as a DMRS corresponding to the second reference signal.

**The determining module 3710 is further configured to** determine, based on DMRSs corresponding to a plurality of search spaces corresponding to the reference signal in the first reference signal group, the DMRS corresponding to each reference signal in the first reference signal group.

**The determining module 3710 is further configured to** determine a target DMRS as the DMRS corresponding to each reference signal in the first reference signal group.

For specific implementation of determining the DMRS corresponding to each reference signal in the first reference signal group, refer to step 220 to step 230.

**The determining module 3710 is further configured to** determine the DMRS corresponding to the reference signal in the first reference signal group and a DMRS corresponding to a reference signal in a second reference signal group.

In some embodiments, the reference signal in the second reference signal group and the DMRS corresponding to the reference signal in the second reference signal group are used to assess second link quality. Alternatively, it may be understood that the second link quality is assessed in combination with the reference signal in the second reference signal group and the DMRS corresponding to the reference signal in the second reference signal group. The reference signal in the second reference signal group is used to assess the second link quality, and the DMRS corresponding to the reference signal is also used to assess the second link quality, that is, the second link quality is assessed based on the reference signal in the second reference signal group, or the second link quality is assessed based on the reference signal in the second reference signal group and the corresponding DMRS.

In some embodiments, the second link quality is link quality corresponding to the reference signal in the second reference signal group. Alternatively, it may be understood that the second link quality is link quality of a beam corresponding to the reference signal in the second reference signal group. For example, the second reference signal group is associated with TRP2, and each reference signal in the second reference signal group is associated with one beam of TRP2.

The second link quality is used to indicate whether a target event occurs, for example, whether beam failure occurs.

In some embodiments, the apparatus may assess the first link quality based on the reference signal in the first reference signal group, and/or assess the second link quality based on the reference signal in the second reference signal group.

In some embodiments, the DMRS corresponding to the reference signal in the second reference signal group is determined to be the first DMRS or the second DMRS. The DMRS corresponding to the reference signal in the second reference signal group is the first-type DMRS or the second-type DMRS. The first-type DMRS is a DMRS that uses one or more same resource elements as control information, and the second-type DMRS is a DMRS that uses different resource elements from control information.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the reference signal in the second reference signal group is determined to be the first DMRS. In other words, the first DMRS corresponding to the reference signal in the second reference signal group is used as an assumption, or it is assumed that link quality is assessed using the first DMRS corresponding to the reference signal in the second reference signal group. Optionally, the first DMRS here is the first-type DMRS.

In some embodiments, the DMRS corresponding to the reference signal in the second reference signal group is determined to be the second DMRS. In other words, the second DMRS corresponding to the reference signal in the second reference signal group is used as an assumption, or it is assumed that link quality is assessed using the second DMRS corresponding to the reference signal in the second reference signal group. Optionally, the second DMRS here is the second-type DMRS.

**In some embodiments, the reference signal in the second reference signal group is indicated by the first indication information.**

Optionally, the apparatus may receive the first indication information transmitted by the network device or the second terminal device, the first indication information being used to indicate or configure the reference signal in the first reference signal group and the reference signal in the second reference signal group.

**The determining module 3710 is further configured to** determine a DMRS corresponding to each reference signal in the second reference signal group indicated by the first indication information.

**The determining module 3710 is further configured to:** in a case where the first indication information indicates a DMRS corresponding to the second reference signal group, determine the DMRS corresponding to the second reference signal group as the DMRS corresponding to each reference signal in the second reference signal group.

**The determining module 3710 is further configured to** determine, based on the DMRS used by the control channel, the DMRS corresponding to each reference signal in the second reference signal group.

**The determining module 3710 is further configured to** determine a target DMRS as the DMRS corresponding to each reference signal in the second reference signal group.

In some embodiments, the first indication information does not indicate the reference signal in the second reference signal group. The reference signal in the second reference signal group is determined based on configuration information of the control channel.

**The determining module 3710 is further configured to:** in a case where a first reference signal in the second reference signal group is determined based on a TCI state corresponding to a target CORESET in the control channel, determine a DMRS corresponding to the target CORESET as a DMRS corresponding to the first reference signal in the second reference signal group.

**The determining module 3710 is further configured to** determine, based on DMRSs corresponding to a plurality of CORESETs corresponding to the reference signal in the second reference signal group, the DMRS corresponding to each reference signal in the second reference signal group.

**The determining module 3710 is further configured to** determine the target DMRS as the DMRS corresponding to each reference signal in the second reference signal group.

In some embodiments, the reference signal in the second reference signal group is determined based on a TCI state corresponding to a target search space in the control channel.

**The determining module 3710 is further configured to:** in a case where a second reference signal in the second reference signal group is determined based on the TCI state corresponding to the target search space in the control channel, determine a DMRS corresponding to the target search space as a DMRS corresponding to the second reference signal in the second reference signal group.

**The determining module 3710 is further configured to** determine, based on DMRSs corresponding to a plurality of search spaces corresponding to the reference signal in the second reference signal group, the DMRS corresponding to each reference signal in the second reference signal group.

**The determining module 3710 is further configured to** determine the target DMRS as the DMRS corresponding to each reference signal in the second reference signal group.

For specific implementation of determining the DMRS corresponding to each reference signal in the second reference signal group, refer to step 240 to step 250.

In some embodiments, the apparatus may further include:
**a transmitting module 3720, configured to** report a terminal capability.

For specific implementation of reporting the terminal capability, refer to step 210.

In some embodiments, the apparatus may further include:
**a receiving module 3730, configured to** receive first indication information.

It should be to be noted that when the apparatus provided in the foregoing embodiment implements its functions, the division of the foregoing functional modules is merely used as an example for illustration. In actual applications, the foregoing functions may be allocated to be completed by different functional modules according to actual needs, that is, content structure of a device is divided into different functional modules, to complete all or part of the foregoing described functions.

FIG. 38 is a structural block diagram of an apparatus for determining a DMRS according to an exemplary embodiment of the present disclosure. The apparatus includes:
a transmitting module 3810, configured to transmit first indication information.

In some embodiments, the first indication information is used to indicate a DMRS corresponding to a reference signal in a first reference signal group. The reference signal in the first reference signal group and the DMRS corresponding to the reference signal in the first reference signal group are used to assess first link quality, and the DMRS corresponding to the reference signal in the first reference signal group is a first DMRS or a second DMRS. The first DMRS may be a first-type DMRS or a second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the reference signal in the first reference signal group and the DMRS corresponding to the reference signal in the first reference signal group are used to assess the first link quality. Alternatively, it may be understood that the first link quality is assessed in combination with the reference signal in the first reference signal group and the DMRS corresponding to the reference signal in the first reference signal group. The reference signal in the first reference signal group is used to assess the first link quality, and the DMRS corresponding to the reference signal is also used to assess the first link quality.

In some embodiments, the first link quality is link quality corresponding to the reference signal in the first reference signal group. Alternatively, it may be understood that the first link quality is link quality of a beam corresponding to the reference signal in the first reference signal group. For example, the first reference signal group is associated with TRP1, and each reference signal in the first reference signal group is associated with one beam of TRP1.

The first link quality is used to indicate whether a target event occurs, for example, whether beam failure occurs.

In some embodiments, the first indication information is used to indicate a DMRS corresponding to each reference signal in the first reference signal group. The DMRS corresponding to each reference signal in the first reference signal group is the first DMRS or the second DMRS, and DMRSs corresponding to different reference signals are the same or different.

In some embodiments, the first indication information is used to indicate a DMRS corresponding to the first reference signal group. The DMRS corresponding to the first reference signal group is the first DMRS or the second DMRS.

In some embodiments, the first indication information is further configured to indicate a DMRS corresponding to a reference signal in the second reference signal group. The reference signal in the second reference signal group and the DMRS corresponding to the reference signal in the second reference signal group are used to assess a second link quality, and the DMRS corresponding to the reference signal in the second reference signal group is a first DMRS or a second DMRS.

In some embodiments, the reference signal in the second reference signal group and the DMRS corresponding to the reference signal in the second reference signal group are used to assess a second link quality. Alternatively, it may be understood that the second link quality is assessed by combining the reference signal in the second reference signal group and the DMRS corresponding to the reference signal in the second reference signal group. The reference signal in the second reference signal group is used to assess the second link quality, and the DMRS corresponding to the reference signal is also used to assess the second link quality.

In some embodiments, the second link quality is a link quality corresponding to the reference signal in the second reference signal group. Alternatively, it may be understood that the second link quality is a link quality of a beam corresponding to the reference signal in the second reference signal group. For example, the second reference signal group is associated with TRP2, and each reference signal in the second reference signal group is associated with one beam of TRP2.

The second link quality is used to indicate whether a target event occurs, such as whether a beam failure occurs.

Specifically, functions of the first indication information are detailed in the foregoing steps 221, 222, 241, and 242.

In some embodiments, the foregoing apparatus may further include:
a receiving module 3820, configured to receive a terminal capability.

Optionally, a first terminal capability is received, where the first terminal capability is configured to indicate support for using a first-type DMRS;

Optionally, a second terminal capability is received, where the second terminal capability is configured to indicate support for determining a DMRS corresponding to a reference signal in a reference signal group. The reference signal group includes a first reference signal group and/or a second reference signal group.

Specifically, implementations of the terminal capability are detailed in the foregoing step 260.

In some embodiments, the first-type DMRS is a DMRS that uses at least one same resource element as control information. The second-type DMRS is a DMRS that uses a different resource element from control information.

It should be to be noted that when the apparatus provided in the foregoing embodiments implements its functions, the division of the foregoing functional modules is only used as an example for description. In practical applications, the foregoing functions may be allocated to be completed by different functional modules according to actual needs, that is, an internal structure of a device is divided into different functional modules to complete all or part of the functions described above.

FIG. 39 shows a structural block diagram of an apparatus for determining a DMRS according to an exemplary embodiment of the present disclosure. The apparatus includes:
a determining module 3910, configured to determine a DMRS corresponding to a candidate reference signal in a third reference signal group.

In some embodiments, the candidate reference signal in the third reference signal group and the DMRS corresponding to the candidate reference signal in the third reference signal group are used to assess a third link quality. Alternatively, it may be understood that the third link quality is assessed by combining the candidate reference signal in the third reference signal group and the DMRS corresponding to the candidate reference signal in the third reference signal group. The candidate reference signal in the third reference signal group is used to assess the third link quality, and the DMRS corresponding to the candidate reference signal is also used to assess the third link quality. That is, the third link quality is assessed based on the candidate reference signal in the third reference signal group, or the third link quality is assessed based on the candidate reference signal in the third reference signal group and the corresponding DMRS.

In some embodiments, the third link quality is a link quality corresponding to the candidate reference signal in the third reference signal group. Alternatively, it may be understood that the third link quality is a link quality of a beam corresponding to the candidate reference signal in the third reference signal group. The third link quality is used to select a target reference signal that meets a link quality condition from one or more candidate reference signals.

In some embodiments, the DMRS corresponding to the candidate reference signal in the third reference signal group is determined to be a first DMRS or a second DMRS. The DMRS corresponding to the candidate reference signal in the third reference signal group is a first-type DMRS or a second-type DMRS. The first-type DMRS is a DMRS that uses one or more same resource elements as control information, and the second-type DMRS is a DMRS that uses a different resource element from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the candidate reference signal in the third reference signal group is determined to be the first DMRS. Alternatively, it may be understood that the first DMRS corresponding to the candidate reference signal in the third reference signal group is used as a DMRS assumption, or it is assumed that the first DMRS corresponding to the candidate reference signal in the third reference signal group is used to assess the link quality.

In some embodiments, the DMRS corresponding to the candidate reference signal in the third reference signal group is determined to be the second DMRS. Alternatively, it may be understood that the second DMRS corresponding to the candidate reference signal in the third reference signal group is used as a DMRS assumption, or it is assumed that the second DMRS corresponding to the candidate reference signal in the third reference signal group is used to assess the link quality.

**The determining module 3910 is further configured to** determine a target DMRS as the DMRS corresponding to the candidate reference signal in the third reference signal group.

**The determining module 3910 is further configured to,** in a case where second indication information indicates that there is a DMRS corresponding to the third reference signal group, determine the DMRS corresponding to the third reference signal group as the DMRS corresponding to each candidate reference signal in the third reference signal group.

**The determining module 3910 is further configured to** determine a DMRS corresponding to each candidate reference signal in the third reference signal group indicated by the second indication information.

Specifically, an implementation of determining the DMRS corresponding to the candidate reference signal in the third reference signal group is detailed in the foregoing steps 320 to 323.

**The determining module 3910 is further configured to** determine the DMRS corresponding to the candidate reference signal in the third reference signal group and a DMRS corresponding to a candidate reference signal in a fourth reference signal group.

In some embodiments, the candidate reference signal in the fourth reference signal group and the DMRS corresponding to the candidate reference signal in the fourth reference signal group are used to assess a fourth link quality. Alternatively, it may be understood that the fourth link quality is assessed by combining the candidate reference signal in the fourth reference signal group and the DMRS corresponding to the candidate reference signal in the fourth reference signal group. The candidate reference signal in the fourth reference signal group is used to assess the fourth link quality, and the DMRS corresponding to the candidate reference signal is also used to assess the fourth link quality. That is, the fourth link quality is assessed based on the candidate reference signal in the fourth reference signal group, or the fourth link quality is assessed based on the candidate reference signal in the fourth reference signal group and the corresponding DMRS.

In some embodiments, the fourth link quality is a link quality corresponding to the candidate reference signal in the fourth reference signal group. Alternatively, it may be understood that the fourth link quality is a link quality of a beam corresponding to the candidate reference signal in the fourth reference signal group. The fourth link quality is used to select a target reference signal that meets a link quality condition from one or more candidate reference signals.

In some embodiments, the DMRS corresponding to the candidate reference signal in the fourth reference signal group is determined to be a first DMRS or a second DMRS. The DMRS corresponding to the candidate reference signal in the fourth reference signal group is a first-type DMRS or a second-type DMRS. The first-type DMRS is a DMRS that uses one or more same resource elements as control information, and the second-type DMRS is a DMRS that uses a different resource element from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the candidate reference signal in the fourth reference signal group is determined to be the first DMRS. Alternatively, it may be understood that the first DMRS corresponding to the candidate reference signal in the fourth reference signal group is used as a DMRS assumption, or it is assumed that the first DMRS corresponding to the candidate reference signal in the fourth reference signal group is used to assess the link quality.

In some embodiments, the DMRS corresponding to the candidate reference signal in the fourth reference signal group is determined to be the second DMRS. Alternatively, it may be understood that the second DMRS corresponding to the candidate reference signal in the fourth reference signal group is used as a DMRS assumption, or it is assumed that the second DMRS corresponding to the candidate reference signal in the fourth reference signal group is used to assess the link quality.

**The determining module 3910 is further configured to** determine a target DMRS as the DMRS corresponding to the candidate reference signal in the fourth reference signal group.

**The determining module 3910 is further configured to,** in a case where the second indication information indicates that there is a DMRS corresponding to the fourth reference signal group, determine the DMRS corresponding to the fourth reference signal group as the DMRS corresponding to each candidate reference signal in the fourth reference signal group.

**The determining module 3910 is further configured to** determine a DMRS corresponding to each candidate reference signal in the fourth reference signal group indicated by the second indication information.

Specifically, an implementation of determining the DMRS corresponding to the candidate reference signal in the fourth reference signal group is detailed in the foregoing steps 340 to 343.

In some embodiments, the foregoing apparatus may further include:
**a transmitting module 3920, configured to** report a target reference signal.

The target reference signal is a reference signal that is selected from one or more candidate reference signals and meets a link quality condition. A DMRS corresponding to the target reference signal is a first DMRS or a second DMRS, and the DMRS corresponding to the target reference signal is a first-type DMRS or a second-type DMRS. The first-type DMRS is a DMRS that uses one or more same resource elements as control information, and the second-type DMRS is a DMRS that uses a different resource element from control information. The first DMRS may be the first-type DMRS or the second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

The DMRS corresponding to the target reference signal is used to assess a link quality corresponding to the target reference signal.

In some embodiments, the target reference signal and the DMRS corresponding to the target reference signal are reported. That is, the target reference signal and the DMRS corresponding to the target reference signal are reported at the same time.

In some embodiments, in a case where the DMRS corresponding to the target reference signal is the first DMRS, the target reference signal and the first DMRS are reported. Optionally, the first DMRS is the first-type DMRS in this case.

In some embodiments, in a case where the DMRS corresponding to the target reference signal is the second DMRS, the target reference signal and the second DMRS are reported. Optionally, the second DMRS is the second-type DMRS in this case.

**The transmitting module 3920 is further configured to** report a terminal capability.

Specifically, an implementation of reporting the terminal capability is detailed in the foregoing step 310.

In some embodiments, the foregoing apparatus may further include:
**a receiving module 3930, configured to** receive second indication information.

It should be to be noted that when the apparatus provided in the foregoing embodiments implements its functions, the division of the foregoing functional modules is used as an example for description only. In practical applications, the foregoing functions may be allocated to be completed by different functional modules according to actual needs, that is, an internal structure of a device is divided into different functional modules to complete all or part of the functions described above.

FIG. 40 shows a structural block diagram of an apparatus for determining a DMRS according to an exemplary embodiment of the present disclosure. The apparatus includes:
**a transmitting module 4010, configured to** transmit second indication information.

In some embodiments, the second indication information is configured to indicate a DMRS corresponding to a candidate reference signal in a third reference signal group. The candidate reference signal in the third reference signal group and the DMRS corresponding to the candidate reference signal in the third reference signal group are used to assess a third link quality, and the DMRS corresponding to the candidate reference signal in the third reference signal group is a first DMRS or a second DMRS. The first DMRS may be a first-type DMRS or a second-type DMRS, and the second DMRS may be the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, the candidate reference signal in the third reference signal group and the DMRS corresponding to the candidate reference signal in the third reference signal group are used to assess the third link quality. Alternatively, it may be understood that the third link quality is assessed by combining the candidate reference signal in the third reference signal group and the DMRS corresponding to the candidate reference signal in the third reference signal group. The candidate reference signal in the third reference signal group is used to assess the third link quality, and the DMRS corresponding to the candidate reference signal is also used to assess the third link quality.

In some embodiments, the third link quality is a link quality corresponding to the candidate reference signal in the third reference signal group. Alternatively, it may be understood that the third link quality is a link quality of a beam corresponding to the candidate reference signal in the third reference signal group. The third link quality is used to select a target reference signal that meets a link quality condition from one or more candidate reference signals.

In some embodiments, the second indication information is configured to indicate a DMRS corresponding to the third reference signal group. The DMRS corresponding to the third reference signal group is a first DMRS or a second DMRS.

In some embodiments, the second indication information is configured to indicate a DMRS corresponding to each candidate reference signal in the third reference signal group. The DMRS corresponding to each candidate reference signal in the third reference signal group is a first DMRS or a second DMRS, and DMRSs corresponding to different candidate reference signals are the same or different.

In some embodiments, the second indication information is further configured to indicate a DMRS corresponding to a candidate reference signal in a fourth reference signal group. The candidate reference signal in the fourth reference signal group and the DMRS corresponding to the candidate reference signal in the fourth reference signal group are used to assess a fourth link quality, and the DMRS corresponding to the candidate reference signal in the fourth reference signal group is a first DMRS or a second DMRS.

In some embodiments, the candidate reference signal in the fourth reference signal group and the DMRS corresponding to the candidate reference signal in the fourth reference signal group are used to assess the fourth link quality. Alternatively, it may be understood that the fourth link quality is assessed by combining the candidate reference signal in the fourth reference signal group and the DMRS corresponding to the candidate reference signal in the fourth reference signal group. The candidate reference signal in the fourth reference signal group is used to assess the fourth link quality, and the DMRS corresponding to the candidate reference signal is also used to assess the fourth link quality.

In some embodiments, the fourth link quality is a link quality corresponding to the candidate reference signal in the fourth reference signal group. Alternatively, it may be understood that the fourth link quality is a link quality of a beam corresponding to the candidate reference signal in the fourth reference signal group. The fourth link quality is used to select a target reference signal that meets a link quality condition from one or more candidate reference signals.

Specifically, functions of the second indication information are detailed in the foregoing steps 323 and 343.

In some embodiments, the apparatus may further include:
**a receiving module 4020, configured to** receive a target reference signal.

The target reference signal is a reference signal that is selected from one or more candidate reference signals and meets a link quality condition. A DMRS corresponding to the target reference signal is a first DMRS or a second DMRS. The first DMRS may be a first-type DMRS or a second-type DMRS, and the second DMRS may be the second-type DMRS. The first-type DMRS is a DMRS that uses one or more same resource elements as control information, and the second-type DMRS is a DMRS that uses a different resource element from control information.

The DMRS corresponding to the target reference signal is used to assess a link quality corresponding to the target reference signal.

In some embodiments, the target reference signal and the DMRS corresponding to the target reference signal are received. The DMRS corresponding to the target reference signal is a first DMRS or a second DMRS.

**The receiving module 4020 is further configured to** receive a terminal capability.

Optionally, a third terminal capability is received, where the third terminal capability is configured to indicate support for using a first-type DMRS.

Optionally, a fourth terminal capability is received, where the fourth terminal capability is configured to indicate support for determining a DMRS corresponding to a candidate reference signal in a third reference signal group.

Specifically, implementations of the terminal capability are detailed in the foregoing step 380.

In some embodiments, the first-type DMRS is a DMRS that uses at least one same resource element as control information. The second-type DMRS is a DMRS that uses a different resource element from control information.

It should be to be noted that when the apparatus provided in the foregoing embodiments implements its functions, the division of the foregoing functional modules is used as an example for description only. In practical applications, the foregoing functions may be allocated to be completed by different functional modules according to actual needs, that is, an internal structure of a device is divided into different functional modules to complete all or part of the functions described above.

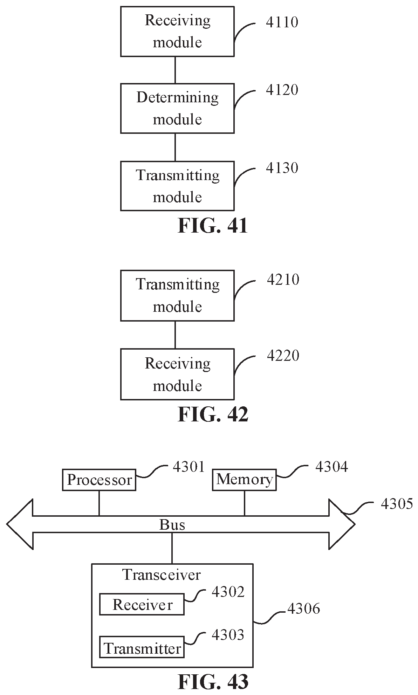

FIG. 41 shows a structural block diagram of an apparatus for determining a DMRS according to an exemplary embodiment of the present disclosure. The apparatus includes:
**a receiving module 4110, configured to** receive a first signal.

The first signal may be a certain signal (for example, a reference signal RS), a certain channel (for example, PDSCH, PDCCH), or information transmitted on a certain channel (for example, DCI transmitted on PDCCH).

In some embodiments, the first signal is a response signal transmitted by a network device or a second terminal device to a first terminal device. The first signal is used to respond to first report information. Optionally, the first report information may include a target reference signal. The first report information is reported by the first terminal device to the network device or the second terminal device. The target reference signal is a reference signal that is selected by the first terminal device from all candidate reference signals and meets a link quality condition.

In some embodiments, the target reference signal is the target reference signal reported in the foregoing step 360. That is, the target reference signal is a signal that is selected from one or more candidate reference signals based on the foregoing third link quality and/or fourth link quality and meets a link quality condition. Alternatively, it may be understood that a link quality corresponding to the target reference signal is assessed based on the target reference signal and a DMRS corresponding to the target reference signal.

In some embodiments, the link quality corresponding to the target reference signal is not assessed based on the DMRS corresponding to the target reference signal. That is, the link quality corresponding to the target reference signal is determined based on RSRP of the target reference signal, or the link quality corresponding to the target reference signal is determined based on SINR of the target reference signal.

In some embodiments, a port of the first signal is quasi co-located (QCL) with the target reference signal, or a DMRS corresponding to the first signal is quasi co-located (QCL) with the target reference signal.

In some embodiments, the first signal is a PDCCH, or the first signal is a DCI. In this case, the first terminal device receives the first signal based on a first search space, where the first search space is indicated by indication information transmitted by a first network device or a second terminal device to the first terminal device. The first search space corresponds to a first CORESET. Optionally, the first CORESET does not correspond to another search space other than the first search space. Optionally, the first CORESET may further correspond to another search space. When the first CORESET corresponds to another search space, the another search space may be quasi co-located with another signal.

Optionally, the indication information may be transmitted through one or more of RRC signaling, MAC CE signaling, and DCI signaling.

It is to be noted that the indication information mentioned in the present disclosure, including beam indication information, DMRS indication information, first indication information, second indication information, third indication information, and other possible indication information, may all be different indication information; or some may be the same indication information and others may be different indication information; or all may be the same indication information.

In some embodiments, the first signal is transmitted based on a first DMRS, or the first signal is transmitted based on a second DMRS. The first signal is transmitted based on a first-type DMRS, or the first signal is transmitted based on a second-type DMRS. The first-type DMRS is a DMRS that uses one or more same resource elements as control information, and the second-type DMRS is a DMRS that uses a different resource element from control information. The first DMRS is the first-type DMRS or the second-type DMRS, and the second DMRS is the second-type DMRS.

In some embodiments, the first DMRS is the first-type DMRS, and the second DMRS is the second-type DMRS; or the first DMRS is the second-type DMRS, and the second DMRS is the second-type DMRS.

In some embodiments, that the first signal is transmitted based on the first DMRS may also be understood as that a DMRS corresponding to the first signal is the first DMRS, or that the first signal uses the first DMRS as a used DMRS. Similarly, that the first signal is transmitted based on the second DMRS may also be understood as that a DMRS corresponding to the first signal is the second DMRS, or that the first signal uses the second DMRS as a used DMRS. For example, when the first signal is a PDCCH, that the PDCCH is transmitted based on the first DMRS means that a DMRS corresponding to the PDCCH is the first DMRS, or the PDCCH uses the first DMRS as a used DMRS; that the PDCCH is transmitted based on the second DMRS means that a DMRS corresponding to the PDCCH is the second DMRS, or the PDCCH uses the second DMRS as a used DMRS.

In some embodiments, the first signal is transmitted based on a default DMRS, where the default DMRS is a first DMRS or a second DMRS, and the default DMRS is a first-type DMRS or a second-type DMRS. Optionally, the default DMRS is a DMRS used based on a control channel. For example, when a DMRS used by the control channel is the first DMRS, the default DMRS is the first DMRS; when a DMRS used by the control channel is the second DMRS, the default DMRS is the second DMRS.

In some embodiments, the first signal is transmitted based on a DMRS indicated by third indication information, where the DMRS indicated by the third indication information is a first DMRS or a second DMRS, and the DMRS indicated by the third indication information is a first-type DMRS or a second-type DMRS. The third indication information is transmitted by a network device or a second terminal device to a first terminal device. The third indication information is configured to indicate that the first signal is transmitted based on the first DMRS or the second DMRS. Optionally, the third indication information indicates that the first signal is transmitted based on the first DMRS. Optionally, the third indication information indicates that the first signal is transmitted based on the second DMRS.

In some embodiments, the first signal is transmitted based on a DMRS corresponding to a target reference signal. When the first terminal device reports the DMRS corresponding to the target reference signal to the network device or the second terminal device, the network device or the second terminal device may select the DMRS corresponding to the target reference signal to transmit the first signal. Optionally, when the first terminal device reports to the network device or the second terminal device that the DMRS corresponding to the target reference signal is the first DMRS, the network device or the second terminal device chooses to use the first DMRS to transmit the first signal. Optionally, when the first terminal device reports to the network device or the second terminal device that the DMRS corresponding to the target reference signal is the second DMRS, the network device or the second terminal device chooses to use the second DMRS to transmit the first signal.

**The receiving module 4110 is further configured to** receive fourth indication information.

Specifically, an implementation of the fourth indication information is detailed in the foregoing step 520.

In some embodiments, the foregoing apparatus may further include:
**a determining module 4120, configured to,** in a case where the first signal is used to schedule a PDSCH, determine a DMRS corresponding to the PDSCH.

In some embodiments, the DMRS corresponding to the PDSCH is a first DMRS or a second DMRS, and the DMRS corresponding to the PDSCH is a first-type DMRS or a second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses a different resource element from control information.

In some embodiments, the first DMRS is the first-type DMRS, and the second DMRS is the second-type DMRS; or the first DMRS is the second-type DMRS, and the second DMRS is the second-type DMRS.

In some embodiments, when the first signal is used to schedule the PDSCH, the DMRS corresponding to the PDSCH is determined to be the first DMRS. Alternatively, it may be understood that the first DMRS is used as a DMRS assumption, or it is assumed that the first DMRS is used as the DMRS corresponding to the PDSCH. For example, the first DMRS is the first-type DMRS in this case.

In some embodiments, in a case where the first signal is used to schedule the PDSCH, the DMRS corresponding to the PDSCH is determined to be the second DMRS. Alternatively, it may be understood that the second DMRS is used as a DMRS assumption, or it is assumed that the second DMRS is used as the DMRS corresponding to the PDSCH. For example, the second DMRS is the second-type DMRS in this case.

In some embodiments, the first signal includes first DCI. In some embodiments, when the first DCI is used to schedule the PDSCH, the DMRS corresponding to the PDSCH is determined to be the first DMRS. In some embodiments, when the first DCI is used to schedule the PDSCH, the DMRS corresponding to the PDSCH is determined to be the second DMRS.

**The determining module 4120 is further configured to** determine the DMRS corresponding to the PDSCH as a previously used DMRS, or determine the DMRS corresponding to the PDSCH as a DMRS indicated by fifth indication information.

**The determining module 4120 is further configured to** determine a target DMRS as the DMRS corresponding to the PDSCH.

**The determining module 4120 is further configured to** determine a DMRS corresponding to the first signal as the DMRS corresponding to the PDSCH.

Specifically, an implementation of determining the DMRS corresponding to the PDSCH is detailed in the foregoing steps 620 to 623.

**The receiving module 4110 is further configured to** receive sixth indication information.

Specifically, an implementation of the sixth indication information is detailed in the foregoing step 720.

**The determining module 4120 is further configured to** determine a DMRS corresponding to a PUCCH.

In some embodiments, the PUCCH is used to transmit a second signal corresponding to the PDSCH. Optionally, the second signal is an acknowledgement/non-acknowledgement signal corresponding to the PDSCH, and the PDSCH is scheduled by the foregoing first signal.

In some embodiments, when the first signal is used to schedule the PDSCH, the DMRS corresponding to the PUCCH is determined. The DMRS corresponding to the PUCCH is a first DMRS or a second DMRS, and the DMRS corresponding to the PUCCH is a first-type DMRS or a second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses a different resource element from control information.

In some embodiments, the first DMRS is the first-type DMRS, and the second DMRS is the second-type DMRS; or the first DMRS is the second-type DMRS, and the second DMRS is the second-type DMRS.

In some embodiments, the DMRS corresponding to the PUCCH is determined to be the first DMRS. Alternatively, it may be understood that the first DMRS is used as a DMRS assumption, or it is assumed that the first DMRS is used as the DMRS corresponding to the PUCCH. For example, the first DMRS here is the first-type DMRS.

In some embodiments, the DMRS corresponding to the PUCCH is determined to be the second DMRS. Or, it may be understood that the second DMRS is used as a DMRS assumption, or it is assumed that the second DMRS is used as the DMRS corresponding to the PUCCH. For example, the second DMRS here is the second-type DMRS.

**The determining module 4120 is further configured to** determine the DMRS corresponding to the PUCCH as a previously used DMRS, or determine the DMRS corresponding to the PUCCH as a DMRS indicated by seventh indication information.

**The determining module 4120 is further configured to** determine a target DMRS as the DMRS corresponding to the PUCCH.

**The determining module 4120 is further configured to** determine a DMRS corresponding to the first signal as the DMRS corresponding to the PUCCH.

Specifically, an implementation of determining the DMRS corresponding to the PUCCH is detailed in the foregoing steps 820 to 823.

**The determining module 4120 is further configured to,** in a case where the first signal is used to schedule a PUSCH, determine a DMRS corresponding to the PUSCH.

In some embodiments, the DMRS corresponding to the PUSCH is a first DMRS or a second DMRS, and the DMRS corresponding to the PUSCH is a first-type DMRS or a second-type DMRS. The first DMRS may be the first-type DMRS or the second-type DMRS, and the second DMRS may be the second-type DMRS. The first-type DMRS is a DMRS that uses one or more same resource elements as control information, and the second-type DMRS is a DMRS that uses a different resource element from control information.

In some embodiments, the first DMRS is the first-type DMRS, and the second DMRS is the second-type DMRS; or the first DMRS is the second-type DMRS, and the second DMRS is the second-type DMRS.

In some embodiments, in a case where the first signal is used to schedule the PUSCH, the DMRS corresponding to the PUSCH is determined to be the first DMRS. Alternatively, it may be understood that the first DMRS is used as a DMRS assumption, or it is assumed that the first DMRS is used as the DMRS corresponding to the PUSCH. For example, the first DMRS is the first-type DMRS in this case.

In some embodiments, in a case where the first signal is used to schedule the PUSCH, the DMRS corresponding to the PUSCH is determined to be the second DMRS. Alternatively, it may be understood that the second DMRS is used as a DMRS assumption, or it is assumed that the second DMRS is used as the DMRS corresponding to the PUSCH. For example, the second DMRS is the second-type DMRS in this case.

In some embodiments, the first signal includes second DCI. In some embodiments, when the second DCI is used to schedule the PUSCH, the DMRS corresponding to the PUSCH is determined to be the first DMRS. In some embodiments, when the second DCI is used to schedule the PUSCH, the DMRS corresponding to the PUSCH is determined to be the second DMRS.

**The determining module 4120 is further configured to** determine the DMRS corresponding to the PUSCH as a previously used DMRS, or determine the DMRS corresponding to the PUSCH as a DMRS indicated by eighth indication information.

**The determining module 4120 is further configured to** determine a target DMRS as the DMRS corresponding to the PUSCH.

**The determining module 4120 is further configured to** determine a DMRS corresponding to the first signal as the DMRS corresponding to the PUSCH.

Specifically, an implementation of determining the DMRS corresponding to the PUSCH is detailed in the foregoing steps 920 to 923.

In some embodiments, the foregoing apparatus may further include:
**a transmitting module 4130,** configured to report a terminal capability.

Specifically, an implementation of reporting the terminal capability is detailed in the foregoing step 410.

It should be to be noted that when the apparatus provided in the foregoing embodiments implements its functions, the division of the foregoing functional modules is used as an example for description only. In practical applications, the foregoing functions may be allocated to be completed by different functional modules according to actual needs, that is, an internal structure of a device is divided into different functional modules to complete all or part of the functions described above.

FIG. 42 shows a structural block diagram of an apparatus for determining a DMRS according to an exemplary embodiment of the present disclosure. The apparatus includes:
**a transmitting module 4210, configured to** transmit a first signal.

The first signal may be a certain signal (for example, a reference signal RS), a certain channel (for example, PDSCH, PDCCH), or information transmitted on a certain channel (for example, DCI transmitted on PDCCH).

In some embodiments, the first signal is used to respond to first report information. Optionally, the first report information may include a target reference signal, where the target reference signal is a reference signal that meets a link quality condition among all candidate reference signals. The first signal is transmitted based on a first DMRS, or the first signal is transmitted based on a second DMRS. The first DMRS may be a first-type DMRS or a second-type DMRS, and the second DMRS may be the second-type DMRS. In some embodiments, the first DMRS is the first-type DMRS, and the second DMRS is the second-type DMRS; or the first DMRS is the second-type DMRS, and the second DMRS is the second-type DMRS.

In some embodiments, the target reference signal is the target reference signal reported in the foregoing step 360. That is, the target reference signal is a signal that is selected from one or more candidate reference signals based on the foregoing third link quality and/or fourth link quality and meets a link quality condition. Alternatively, it may be understood that a link quality corresponding to the target reference signal is assessed based on the target reference signal and a DMRS corresponding to the target reference signal.

In some embodiments, the link quality corresponding to the target reference signal is not assessed based on the DMRS corresponding to the target reference signal. That is, the link quality corresponding to the target reference signal is determined based on RSRP of the target reference signal, or the link quality corresponding to the target reference signal is determined based on SINR of the target reference signal. In some embodiments, a port of the first signal is quasi co-located (QCL) with the target reference signal, or a DMRS corresponding to the first signal is quasi co-located (QCL) with the target reference signal.

In some embodiments, the first signal is a PDCCH, or the first signal is a DCI. In this case, the first terminal device receives the first signal based on a first search space, where the first search space is indicated by indication information transmitted by a first network device or a second terminal device to the first terminal device. The first search space corresponds to a first CORESET. Optionally, the first CORESET does not correspond to another search space other than the first search space. Optionally, the first CORESET may further correspond to another search space. When the first CORESET corresponds to another search space, the another search space may be quasi co-located (QCL) with another signal.

Optionally, the indication information may be transmitted through one or more of RRC signaling, MAC CE signaling, and DCI signaling.

It is to be noted that the indication information mentioned in the present disclosure, including beam indication information, DMRS indication information, first indication information, second indication information, third indication information, and other possible indication information, may all be different indication information; or some may be the same indication information and others may be different indication information; or all may be the same indication information.

In some embodiments, the first signal is transmitted based on a first DMRS, or the first signal is transmitted based on a second DMRS. The first DMRS may be a first-type DMRS or a second-type DMRS, and the second DMRS may be the second-type DMRS. The first-type DMRS is a DMRS that uses one or more same resource elements as control information, and the second-type DMRS is a DMRS that uses a different resource element from control information.

In some embodiments, the first signal is transmitted based on a default DMRS, where the default DMRS is a first DMRS or a second DMRS. Optionally, the default DMRS is a DMRS used based on a control channel. For example, when a DMRS used by the control channel is the first DMRS, the default DMRS is the first DMRS; when a DMRS used by the control channel is the second DMRS, the default DMRS is the second DMRS.

In some embodiments, the first signal is transmitted based on a DMRS indicated by third indication information, where the DMRS indicated by the third indication information is a first DMRS or a second DMRS. The third indication information is transmitted by the apparatus to the first terminal device. The third indication information is configured to indicate that the first signal is transmitted based on the first DMRS or the second DMRS. Optionally, the third indication information indicates that the first signal is transmitted based on the first DMRS. Optionally, the third indication information indicates that the first signal is transmitted based on the second DMRS.

In some embodiments, the first signal is transmitted based on a DMRS corresponding to a target reference signal. When the first terminal device reports the DMRS corresponding to the target reference signal to the apparatus, the apparatus may select the DMRS corresponding to the target reference signal to transmit the first signal. Optionally, when the first terminal device reports to the apparatus that the DMRS corresponding to the target reference signal is the first DMRS, the apparatus chooses to use the first DMRS to transmit the first signal. Optionally, when the first terminal device reports to the apparatus that the DMRS corresponding to the target reference signal is the second DMRS, the apparatus chooses to use the second DMRS to transmit the first signal.

**The transmitting module 4210 is further configured to** transmit fourth indication information.

In some embodiments, the fourth indication information is configured to indicate one or more of a receiver, a receiver algorithm, and an AI model used for receiving the first signal. Optionally, the fourth indication information includes one or more of the following options:
a first receiver identifier;
a first algorithm identifier;
a first model identifier; and
a first functionality flag or first functionality configuration information.

The first receiver identifier is configured to indicate the receiver used for receiving the first signal, the first algorithm identifier is configured to indicate the receiver algorithm used for receiving the first signal, the first model identifier is configured to indicate the AI model used for receiving the first signal, and the first functionality flag or the first functionality configuration information is configured to indicate or activate a current corresponding functionality.

**The transmitting module 4210 is further configured to** transmit fifth indication information.

In some embodiments, the fifth indication information is configured to indicate a DMRS corresponding to a PDSCH scheduled by the first signal. The DMRS corresponding to the PDSCH is a first DMRS or a second DMRS.

In some embodiments, the first signal includes first DCI.

**The transmitting module 4210 is further configured to** transmit sixth indication information.

In some embodiments, the sixth indication information indicates one or more of a receiver, a receiver algorithm, and an AI model used for receiving the PDSCH. Optionally, the sixth indication information includes one or more of the following options:
a second receiver identifier;
a second algorithm identifier;
a second model identifier; and
a second functionality flag or second functionality configuration information.

The second receiver identifier is configured to indicate the receiver used for receiving the PDSCH, the second algorithm identifier is configured to indicate the receiver algorithm used for receiving the PDSCH, the second model identifier is configured to indicate the AI model used for receiving the PDSCH, and the second functionality flag or the second functionality configuration information is configured to indicate or activate a current corresponding functionality.

**The transmitting module 4210 is further configured to** transmit seventh indication information.

In some embodiments, the seventh indication information is configured to indicate a DMRS corresponding to a PUCCH. The PUCCH is used to transmit a second signal corresponding to a PDSCH, and the DMRS corresponding to the PUCCH is a first DMRS or a second DMRS.

**The transmitting module 4210 is further configured to** transmit eighth indication information.

In some embodiments, the eighth indication information is configured to indicate a DMRS corresponding to a PUSCH scheduled by the first signal. The DMRS corresponding to the PUSCH is a first DMRS or a second DMRS.

In some embodiments, the first signal includes second DCI.

In some embodiments, the foregoing apparatus may further include:
**a receiving module 4220, configured to** receive a terminal capability.

Optionally, a fifth terminal capability is received, where the fifth terminal capability is configured to indicate support for using a first-type DMRS.

Optionally, a sixth terminal capability is received, where the sixth terminal capability is configured to indicate support for determining a DMRS.

Specifically, implementations of the terminal capability are detailed in the foregoing step 1010.

In some embodiments, the first-type DMRS is a DMRS that uses at least one same resource element as control information. The second-type DMRS is a DMRS that uses a different resource element from control information.

It should be to be noted that when the apparatus provided in the foregoing embodiments implements its functions, only the division of the foregoing functional modules is used as an example for description. In practical applications, the foregoing functions may be allocated to be completed by different functional modules according to actual needs, that is, an internal structure of a device is divided into different functional modules to complete all or part of the functions described above.

FIG. 43 shows a schematic structural diagram of a communications device according to an embodiment of the present disclosure. The communications device may include: a processor 4301, a receiver 4302, a transmitter 4303, a memory 4304, and a bus 4305.

The processor 4301 includes one or more processing cores, and the processor 4301 may execute various functional applications and information processing by running software programs and modules.

The receiver 4302 and the transmitter 4303 may be implemented as a transceiver 4306, and the transceiver 4306 may be a communications chip.

Optionally, a fifth terminal capability is received, where the fifth terminal capability is configured to indicate support for using a first-type DMRS.

Optionally, a sixth terminal capability is received, where the sixth terminal capability is configured to indicate support for determining a DMRS.

Specifically, implementations of the terminal capability are detailed in the foregoing step 1010.

In some embodiments, the first-type DMRS is a DMRS that uses at least one same resource element as control information. The second-type DMRS is a DMRS that uses a different resource element from control information.

It should be to be noted that when the apparatus provided in the foregoing embodiments implements its functions, only the division of the foregoing functional modules is used as an example for description. In practical applications, the foregoing functions may be allocated to be completed by different functional modules according to actual needs, that is, an internal structure of a device is divided into different functional modules to complete all or part of the functions described above.

FIG. 43 shows a schematic structural diagram of a communications device according to an embodiment of the present disclosure. The communications device may include: a processor 4301, a receiver 4302, a transmitter 4303, a memory 4304, and a bus 4305.

The processor 4301 includes one or more processing cores, and may execute various functional applications and information processing by running software programs and modules.

The receiver 4302 and the transmitter 4303 may be implemented as a transceiver 4306, and the transceiver 4306 may be a communications chip.

The memory 4304 is connected to the processor 4301 via the bus 4305. The memory 4304 is configured to store a computer program, and the processor 4301 is configured to execute the computer program to implement the steps performed by an Ambient IoT device, a terminal device, or a network device in the foregoing method embodiments.

In addition, the memory 4304 may be implemented by any type of volatile or non-volatile storage device or a combination thereof, including but not limited to: RAM (Random-Access Memory), ROM (Read-Only Memory), EPROM (Erasable Programmable Read-Only Memory), EEPROM (Electrically Erasable Programmable Read-Only Memory), flash memory or other solid-state storage technologies, CD-ROM (Compact Disc Read-Only Memory), DVD (Digital Video Disc) or other optical storage, magnetic cassettes, magnetic tape, magnetic disk storage or other magnetic storage devices.

An embodiment of the present disclosure further provides a computer-readable storage medium, where a computer program is stored in the storage medium, and the computer program may be executed by a processor of a terminal device or a network device to implement the steps in the foregoing DMRS determination methods. In some embodiments, the computer-readable storage medium may include: ROM (Read-Only Memory), RAM (Random-Access Memory), SSD (Solid State Drives), an optical disk, or the like. The random-access memory may include ReRAM (Resistance Random Access Memory) and DRAM (Dynamic Random Access Memory).

An embodiment of the present disclosure further provides a chip, where the chip includes a programmable logic circuit and/or program instructions, and is configured to implement the steps in the foregoing DMRS determination method when running on a terminal or a network device.

An embodiment of the present disclosure further provides a computer program product or a computer program, where the computer program product or the computer program includes computer instructions, the computer instructions are stored in a computer-readable storage medium, and a processor of a terminal device or a network device may read and execute the computer instructions from the computer-readable storage medium to implement the steps in the foregoing DMRS determination methods.

A person skilled in the art may appreciate that the functions described in the embodiments of the present disclosure may be implemented in hardware, software, firmware, or any combination thereof in one or more of the foregoing examples. When implemented in software, the functions may be stored on or transmitted over a computer-readable medium as one or more instructions or code on the computer-readable medium. Computer-readable media includes computer storage media and communication media including any medium that facilitates transfer of a computer program from one place to another. A storage media may be any available media that can be accessed by a general purpose or special purpose computer.

The foregoing descriptions are merely exemplary embodiments of the present disclosure and are not intended to limit the present disclosure. Any modifications, equivalent replacements, improvements, or the like made within the spirit and principles of the present disclosure shall fall within the protection scope of the present disclosure.

## Claims

1. A method for determining a demodulation reference signal (DMRS), performed by a first terminal device, the method comprising:
determining a DMRS corresponding to a reference signal in a first reference signal group;
wherein the reference signal in the first reference signal group and the DMRS corresponding to the reference signal in the first reference signal group are used to assess a first link quality; the DMRS corresponding to the reference signal in the first reference signal group is a first DMRS or a second DMRS; the first DMRS is a first-type DMRS or a second-type DMRS; and the second DMRS is the second-type DMRS.

2. The method of claim 1, wherein the determining a DMRS corresponding to a reference signal in a first reference signal group comprises:
determining a DMRS corresponding to each reference signal in the first reference signal group indicated by first indication information,
wherein the DMRS corresponding to each reference signal in the first reference signal group is the first DMRS or the second DMRS, and DMRSs corresponding to different reference signals are identical or different.

3. The method of claim 1, wherein the determining a DMRS corresponding to a reference signal in a first reference signal group comprises:
in a case where first indication information indicates a DMRS corresponding to the first reference signal group, determining the DMRS corresponding to the first reference signal group as a DMRS corresponding to each reference signal in the first reference signal group,
wherein the DMRS corresponding to the first reference signal group is the first DMRS or the second DMRS.

4. The method of claim 1, wherein the determining a DMRS corresponding to a reference signal in a first reference signal group comprises:
in a case where a control channel uses the first DMRS, determining the first DMRS as the DMRS corresponding to each reference signal in the first reference signal group; or
in a case where the control channel uses the second DMRS, determining the second DMRS as the DMRS corresponding to each reference signal in the first reference signal group; or
in a case where the control channel does not use the first DMRS, determining the second DMRS as the DMRS corresponding to each reference signal in the first reference signal group; or
in a case where the control channel does not use the second DMRS, determining the first DMRS as the DMRS corresponding to each reference signal in the first reference signal group.

5. The method of claim 1, wherein the determining a DMRS corresponding to a reference signal in a first reference signal group comprises:
in a case where a first reference signal in the first reference signal group is determined based on a Transmission Configuration Indicator (TCI) state corresponding to a target Control Resource Set (CORESET) in a control channel, determining a DMRS corresponding to the target CORESET as a DMRS corresponding to the first reference signal in the first reference signal group,
wherein the DMRS corresponding to the target CORESET is the first DMRS or the second DMRS.

6. The method of claim 1, wherein the determining a DMRS corresponding to a reference signal in a first reference signal group comprises:
in a case where at least one CORESET, among a plurality of CORESETs corresponding to the reference signal in the first reference signal group, corresponds to the first DMRS, determining the first DMRS as DMRS corresponding to each reference signal in the first reference signal group; or
in a case where at least one CORESET, among the plurality of CORESETs corresponding to the reference signal in the first reference signal group, corresponds to the second DMRS, determining the second DMRS as the DMRS corresponding to each reference signal in the first reference signal group; or
in a case where all CORESETs among the plurality of CORESETs corresponding to the reference signal in the first reference signal group use the first DMRS, determining the first DMRS as the DMRS corresponding to each reference signal in the first reference signal group; or
in a case where all CORESETs among the plurality of CORESETs corresponding to the reference signal in the first reference signal group use the second DMRS, determining the second DMRS as the DMRS corresponding to each reference signal in the first reference signal group.

7. The method of claim 1, wherein the determining a DMRS corresponding to a reference signal in a first reference signal group comprises:
in a case where a second reference signal in the first reference signal group is determined based on a TCI state corresponding to a target search space in a control channel, determining a DMRS corresponding to the target search space as a DMRS corresponding to a first reference signal in the first reference signal group,
wherein the DMRS corresponding to the target search space is the first DMRS or the second DMRS.

8. The method of claim 1, wherein the determining a DMRS corresponding to a reference signal in a first reference signal group comprises:
in a case where at least one search space, among a plurality of search spaces corresponding to the reference signal in the first reference signal group, corresponds to the first DMRS, determining the first DMRS as a DMRS corresponding to each reference signal in the first reference signal group; or
in a case where at least one search space, among the plurality of search spaces corresponding to the reference signal in the first reference signal group, corresponds to the second DMRS, determining the second DMRS as the DMRS corresponding to each reference signal in the first reference signal group; or
in a case where all search spaces among the plurality of search spaces corresponding to the reference signal in the first reference signal group use the first DMRS, determining the first DMRS as the DMRS corresponding to each reference signal in the first reference signal group; or
in a case where all search spaces among the plurality of search spaces corresponding to the reference signal in the first reference signal group use the second DMRS, determining the second DMRS as the DMRS corresponding to each reference signal in the first reference signal group.

9. The method of claim 1, wherein the determining a DMRS corresponding to a reference signal in a first reference signal group comprises:
determining the first DMRS as a DMRS corresponding to each reference signal in the first reference signal group; or
determining the second DMRS as the DMRS corresponding to each reference signal in the first reference signal group.

10. The method of any one of claims 1 to 9, further comprising:
determining a DMRS corresponding to a reference signal in a second reference signal group,
wherein the reference signal in the second reference signal group and the DMRS corresponding to the reference signal in the second reference signal group are used to assess a second link quality, and the DMRS corresponding to the reference signal in the second reference signal group is the first DMRS or the second DMRS.

11. The method of claim 10, wherein the determining a DMRS corresponding to a reference signal in a first reference signal group and the determining a DMRS corresponding to a reference signal in a second reference signal group comprise:
in a case where first indication information indicates a DMRS corresponding to the first reference signal group and a DMRS corresponding to the second reference signal group,
determining the DMRS corresponding to the first reference signal group as a DMRS corresponding to each reference signal in the first reference signal group; and
determining the DMRS corresponding to the second reference signal group as a DMRS corresponding to each reference signal in the second reference signal group.

12. The method of claim 11, wherein the first link quality and/or the second link quality are used to indicate whether a target event occurs.

13. The method of any one of claims 1 to 12, further comprising:
reporting a first terminal capability, wherein the first terminal capability is configured to indicate support for using the first-type DMRS; and/or
reporting a second terminal capability, wherein the second terminal capability is configured to indicate support for determining a DMRS corresponding to a reference signal in a reference signal group,
wherein the reference signal group comprises the first reference signal group and/or the second reference signal group.

14. The method of any one of claims 1 to 13, wherein
the first-type DMRS is a DMRS that uses at least one same resource element as control information; and
the second-type DMRS is a DMRS that uses a different resource element from the control information.

15. A method for determining a demodulation reference signal (DMRS), performed by a first terminal device, the method comprising:
determining a DMRS corresponding to a candidate reference signal in a third reference signal group,
wherein the candidate reference signal in the third reference signal group and the DMRS corresponding to the candidate reference signal in the third reference signal group are used to assess a third link quality; the DMRS corresponding to the candidate reference signal in the third reference signal group is a first DMRS or a second DMRS; the first DMRS is a first-type DMRS or a second-type DMRS; and the second DMRS is the second-type DMRS.

16. The method of claim 15, wherein the determining a DMRS corresponding to a candidate reference signal in a third reference signal group comprises:
determining the first DMRS as a DMRS corresponding to each candidate reference signal in the third reference signal group; or
determining the second DMRS as the DMRS corresponding to each candidate reference signal in the third reference signal group.

17. The method of claim 15, wherein the determining a DMRS corresponding to a candidate reference signal in a third reference signal group comprises:
in a case where second indication information indicates a DMRS corresponding to the third reference signal group, determining the DMRS corresponding to the third reference signal group as a DMRS corresponding to each candidate reference signal in the third reference signal group,
wherein the DMRS corresponding to the third reference signal group is the first DMRS or the second DMRS.

18. The method of claim 15, wherein the determining a DMRS corresponding to a candidate reference signal in a third reference signal group comprises:
determining a DMRS corresponding to each candidate reference signal in the third reference signal group indicated by second indication information,
wherein the DMRS corresponding to each candidate reference signal in the third reference signal group is the first DMRS or the second DMRS; and DMRSs corresponding to different candidate reference signals are identical or different.

19. The method of any one of claims 15 to 18, further comprising:
determining a DMRS corresponding to a candidate reference signal in a fourth reference signal group,
wherein the candidate reference signal in the fourth reference signal group and the DMRS corresponding to the candidate reference signal in the fourth reference signal group are used to assess a fourth link quality; and the DMRS corresponding to the candidate reference signal in the fourth reference signal group is the first DMRS or the second DMRS.

20. The method of claim 19, wherein the third link quality and/or the fourth link quality are used to select a target reference signal satisfying a link quality condition from at least one candidate reference signal.

21. The method of claim 20, further comprising:
reporting the target reference signal; or
reporting the target reference signal and a DMRS corresponding to the target reference signal,
wherein the DMRS corresponding to the target reference signal is the first DMRS or the second DMRS.

22. The method of any one of claims 15 to 21, further comprising:
reporting a third terminal capability, wherein the third terminal capability is configured to indicate support for using the first-type DMRS; and/or
reporting a fourth terminal capability, wherein the fourth terminal capability is configured to indicate support for determining a DMRS corresponding to a candidate reference signal in the third reference signal group.

23. The method of any one of claims 15 to 22, wherein
the first-type DMRS is a DMRS that uses at least one same resource element as control information; and
the second-type DMRS is a DMRS that uses a different resource element from the control information.

24. A method for determining a demodulation reference signal (DMRS), performed by a first terminal device, the method comprising:
receiving a first signal, wherein the first signal is configured to respond to a target reference signal, the target reference signal being a reference signal satisfying a link quality condition among all candidate reference signals,
wherein the first signal is transmitted based on a first DMRS or the first signal is transmitted based on a second DMRS; the first DMRS is a first-type DMRS or a second-type DMRS; and the second DMRS is the second-type DMRS.

25. The method of claim 24, wherein a port of the first signal is quasi-co-located with the target reference signal, or a DMRS corresponding to the first signal is quasi-co-located with the target reference signal.

26. The method of claim 24, wherein the first signal is transmitted based on a default DMRS, and the default DMRS is the first DMRS or the second DMRS.

27. The method of claim 24, wherein the first signal is transmitted based on a DMRS indicated by third indication information, and the DMRS indicated by the third indication information is the first DMRS or the second DMRS.

28. The method of claim 24, wherein the first signal is transmitted based on a DMRS corresponding to the target reference signal.

29. The method of any one of claims 24 to 28, further comprising:
receiving fourth indication information, wherein the fourth indication information is configured to indicate one or more of a receiver, a receiver algorithm, and an AI model used for receiving the first signal.

30. The method of claim 29, wherein the fourth indication information comprises one or more of:
a first receiver identifier, wherein the first receiver identifier is configured to indicate the receiver used for receiving the first signal;
a first algorithm identifier, wherein the first algorithm identifier is configured to indicate the receiver algorithm used for receiving the first signal; and
a first model identifier, wherein the first model identifier is configured to indicate the AI model used for receiving the first signal.

31. The method of any one of claims 24 to 28, further comprising:
in a case where the first signal is used to schedule a Physical Downlink Shared Channel (PDSCH), determining a DMRS corresponding to the PDSCH, wherein the DMRS corresponding to the PDSCH is the first DMRS or the second DMRS.

32. The method of claim 31, wherein the first signal comprises first Downlink Control Information (DCI).

33. The method of claim 31, wherein the determining a DMRS corresponding to the PDSCH comprises:
determining the DMRS corresponding to the PDSCH as a previously used DMRS, wherein the previously used DMRS is the first DMRS or the second DMRS, and the previously used DMRS is a DMRS used by the PDSCH last time or a DMRS used by the PDSCH most recently; or
determining the DMRS corresponding to the PDSCH as a DMRS indicated by fifth indication information.

34. The method of claim 31, wherein the determining a DMRS corresponding to the PDSCH comprises:
determining the first DMRS as the DMRS corresponding to the PDSCH; or
determining the second DMRS as the DMRS corresponding to the PDSCH.

35. The method of claim 31, wherein the determining a DMRS corresponding to the PDSCH comprises:
determining a DMRS corresponding to the first signal as the DMRS corresponding to the PDSCH, wherein the DMRS corresponding to the first signal is the first DMRS or the second DMRS.

36. The method of any one of claims 31 to 35, further comprising:
receiving sixth indication information, wherein the sixth indication information indicates one or more of a receiver, a receiver algorithm, and an AI model used for receiving the PDSCH.

37. The method of claim 36, wherein the sixth indication information comprises one or more of:
a second receiver identifier, wherein the second receiver identifier is configured to indicate the receiver used for receiving the PDSCH;
a second algorithm identifier, wherein the second algorithm identifier is configured to indicate the receiver algorithm used for receiving the PDSCH; and
a second model identifier, wherein the second model identifier is configured to indicate the AI model used for receiving the PDSCH.

38. The method of any one of claims 31 to 35, further comprising:
determining a DMRS corresponding to a Physical Uplink Control Channel (PUCCH), wherein the PUCCH is configured to transmit a second signal corresponding to the PDSCH, and the DMRS corresponding to the PUCCH is the first DMRS or the second DMRS.

39. The method of claim 38, wherein the determining a DMRS corresponding to the PUCCH comprises:
determining the DMRS corresponding to the PUCCH as a previously used DMRS, wherein the previously used DMRS is the first DMRS or the second DMRS, and the previously used DMRS is a DMRS used by the PUCCH last time or a DMRS used by the PUCCH most recently; or
determining the DMRS corresponding to the PUCCH as a DMRS indicated by seventh indication information.

40. The method of claim 38, wherein the determining a DMRS corresponding to the PUCCH comprises:
determining the first DMRS as the DMRS corresponding to the PUCCH; or
determining the second DMRS as the DMRS corresponding to the PUCCH.

41. The method of claim 38, wherein the determining a DMRS corresponding to the PUCCH comprises:
determining a DMRS corresponding to the first signal as the DMRS corresponding to the PUCCH, wherein the DMRS corresponding to the first signal is the first DMRS or the second DMRS.

42. The method of any one of claims 24 to 28, further comprising:
in a case where the first signal is used to schedule a Physical Uplink Shared Channel (PUSCH), determining a DMRS corresponding to the PUSCH, wherein the DMRS corresponding to the PUSCH is the first DMRS or the second DMRS.

43. The method of claim 42, wherein the first signal comprises second DCI.

44. The method of claim 42, wherein the determining a DMRS corresponding to the PUSCH comprises:
determining the DMRS corresponding to the PUSCH as a previously used DMRS, wherein the previously used DMRS is the first DMRS or the second DMRS, and the previously used DMRS is a DMRS used by the PUSCH last time or a DMRS used by the PUSCH most recently; or
determining the DMRS corresponding to the PUSCH as a DMRS indicated by eighth indication information.

45. The method of claim 42, wherein the determining a DMRS corresponding to the PUSCH comprises:
determining the first DMRS as the DMRS corresponding to the PUSCH; or
determining the second DMRS as the DMRS corresponding to the PUSCH.

46. The method of claim 42, wherein the determining a DMRS corresponding to the PUSCH comprises:
determining a DMRS corresponding to the first signal as the DMRS corresponding to the PUSCH, wherein the DMRS corresponding to the first signal is the first DMRS or the second DMRS.

47. The method of any one of claims 24 to 46, further comprising:
reporting a fifth terminal capability, wherein the fifth terminal capability is configured to indicate support for using the first-type DMRS; and/or
reporting a sixth terminal capability, wherein the sixth terminal capability is configured to indicate support for determining a DMRS.

48. The method of any one of claims 24 to 46, wherein
the first-type DMRS is a DMRS that uses at least one same resource element as control information; and
the second-type DMRS is a DMRS that uses a different resource element from the control information.

49. A method for determining a demodulation reference signal (DMRS), performed by a second terminal device or a network device, the method comprising:
sending first indication information, wherein the first indication information is configured to indicate a DMRS corresponding to a reference signal in a first reference signal group,
wherein the reference signal in the first reference signal group and the DMRS corresponding to the reference signal in the first reference signal group are used to assess a first link quality; the DMRS corresponding to the reference signal in the first reference signal group is a first DMRS or a second DMRS; the first DMRS is a first-type DMRS or a second-type DMRS; and the second DMRS is the second-type DMRS.

50. The method of claim 49, wherein the first indication information is configured to indicate a DMRS corresponding to each reference signal in the first reference signal group,
wherein the DMRS corresponding to each reference signal in the first reference signal group is the first DMRS or the second DMRS; and DMRSs corresponding to different reference signals are identical or different.

51. The method of claim 49, wherein the first indication information is configured to indicate a DMRS corresponding to the first reference signal group,
wherein the DMRS corresponding to the first reference signal group is the first DMRS or the second DMRS.

52. The method of any one of claims 49 to 51, wherein the first indication information is further configured to indicate a DMRS corresponding to a reference signal in a second reference signal group,
wherein the reference signal in the second reference signal group and the DMRS corresponding to the reference signal in the second reference signal group are used to assess a second link quality; and the DMRS corresponding to the reference signal in the second reference signal group is the first DMRS or the second DMRS.

53. The method of claim 52, wherein the first link quality and/or the second link quality are used to indicate whether a target event occurs.

54. The method of any one of claims 49 to 53, further comprising:
receiving a first terminal capability, wherein the first terminal capability is configured to indicate support for using the first-type DMRS; and/or
receiving a second terminal capability, wherein the second terminal capability is configured to indicate support for determining a DMRS corresponding to a reference signal in a reference signal group,
wherein the reference signal group comprises the first reference signal group and/or the second reference signal group.

55. The method of any one of claims 49 to 54, wherein
the first-type DMRS is a DMRS that uses at least one same resource element as control information; and
the second-type DMRS is a DMRS that uses a different resource element from the control information.

56. A method for determining a demodulation reference signal (DMRS), performed by a second terminal device or a network device, the method comprising:
sending second indication information, wherein the second indication information is configured to indicate a DMRS corresponding to a candidate reference signal in a third reference signal group,
wherein the candidate reference signal in the third reference signal group and the DMRS corresponding to the candidate reference signal in the third reference signal group are used to assess a third link quality; the DMRS corresponding to the candidate reference signal in the third reference signal group is a first DMRS or a second DMRS; the first DMRS is a first-type DMRS or a second-type DMRS; and the second DMRS is the second-type DMRS.

57. The method of claim 56, wherein the second indication information is configured to indicate a DMRS corresponding to the third reference signal group,
wherein the DMRS corresponding to the third reference signal group is the first DMRS or the second DMRS.

58. The method of claim 56, wherein the second indication information is configured to indicate a DMRS corresponding to each candidate reference signal in the third reference signal group,
wherein the DMRS corresponding to each candidate reference signal in the third reference signal group is the first DMRS or the second DMRS; and DMRSs corresponding to different candidate reference signals are identical or different.

59. The method of any one of claims 56 to 58, wherein the second indication information is further configured to indicate a DMRS corresponding to a candidate reference signal in a fourth reference signal group,
wherein the candidate reference signal in the fourth reference signal group and the DMRS corresponding to the candidate reference signal in the fourth reference signal group are used to assess a fourth link quality; and the DMRS corresponding to the candidate reference signal in the fourth reference signal group is the first DMRS or the second DMRS.

60. The method of claim 59, wherein the third link quality and/or the fourth link quality are used to select a target reference signal satisfying a link quality condition from at least one candidate reference signal.

61. The method of claim 60, further comprising:
receiving the target reference signal; or
receiving the target reference signal and a DMRS corresponding to the target reference signal,
wherein the DMRS corresponding to the target reference signal is the first DMRS or the second DMRS.

62. The method of any one of claims 56 to 61, further comprising:
receiving a third terminal capability, wherein the third terminal capability is configured to indicate support for using the first-type DMRS; and/or
receiving a fourth terminal capability, wherein the fourth terminal capability is configured to indicate support for determining a DMRS corresponding to a candidate reference signal in the third reference signal group.

63. The method of any one of claims 56 to 62, wherein
the first-type DMRS is a DMRS that uses at least one same resource element as control information; and
the second-type DMRS is a DMRS that uses a different resource element from the control information.

64. A method for determining a demodulation reference signal (DMRS), performed by a second terminal device or a network device, the method comprising:
sending a first signal, wherein the first signal is configured to respond to a target reference signal, the target reference signal being a reference signal satisfying a link quality condition among all candidate reference signals,
wherein the first signal is transmitted based on a first DMRS or the first signal is transmitted based on a second DMRS; the first DMRS is a first-type DMRS or a second-type DMRS; and the second DMRS is the second-type DMRS.

65. The method of claim 64, wherein a port of the first signal is quasi-co-located with the target reference signal, or a DMRS corresponding to the first signal is quasi-co-located with the target reference signal.

66. The method of claim 64, wherein the first signal is transmitted based on a default DMRS, and the default DMRS is the first DMRS or the second DMRS.

67. The method of claim 64, wherein the first signal is transmitted based on a DMRS indicated by third indication information, and the DMRS indicated by the third indication information is the first DMRS or the second DMRS.

68. The method of claim 64, wherein the first signal is transmitted based on a DMRS corresponding to the target reference signal.

69. The method of any one of claims 64 to 68, further comprising:
sending fourth indication information, wherein the fourth indication information is configured to indicate one or more of a receiver, a receiver algorithm, and an AI model used for receiving the first signal.

70. The method of claim 69, wherein the fourth indication information comprises one or more of:
a first receiver identifier, wherein the first receiver identifier is configured to indicate the receiver used for receiving the first signal;
a first algorithm identifier, wherein the first algorithm identifier is configured to indicate the receiver algorithm used for receiving the first signal; and
a first model identifier, wherein the first model identifier is configured to indicate the AI model used for receiving the first signal.

71. The method of any one of claims 64 to 68, further comprising:
sending fifth indication information, wherein the fifth indication information is configured to indicate a DMRS corresponding to a PDSCH scheduled by the first signal,
wherein the DMRS corresponding to the PDSCH is the first DMRS or the second DMRS.

72. The method of claim 71, wherein the first signal comprises first DCI.

73. The method of claim 72, further comprising:
sending sixth indication information, wherein the sixth indication information indicates one or more of a receiver, a receiver algorithm, and an AI model used for receiving the PDSCH.

74. The method of claim 73, wherein the sixth indication information comprises one or more of:
a second receiver identifier, wherein the second receiver identifier is configured to indicate the receiver used for receiving the PDSCH;
a second algorithm identifier, wherein the second algorithm identifier is configured to indicate the receiver algorithm used for receiving the PDSCH; and
a second model identifier, wherein the second model identifier is configured to indicate the AI model used for receiving the PDSCH.

75. The method of any one of claims 71 to 74, further comprising:
sending seventh indication information, wherein the seventh indication information is configured to indicate a DMRS corresponding to a PUCCH,
wherein the PUCCH is configured to transmit a second signal corresponding to the PDSCH, and the DMRS corresponding to the PUCCH is the first DMRS or the second DMRS.

76. The method of any one of claims 64 to 68, further comprising:
sending eighth indication information, wherein the eighth indication information is configured to indicate a DMRS corresponding to a PUSCH scheduled by the first signal,
wherein the DMRS corresponding to the PUSCH is the first DMRS or the second DMRS.

77. The method of claim 76, wherein the first signal comprises second DCI.

78. The method of any one of claims 64 to 77, further comprising:
receiving a fifth terminal capability, wherein the fifth terminal capability is configured to indicate support for using the first-type DMRS; and/or
receiving a sixth terminal capability, wherein the sixth terminal capability is configured to indicate support for determining a DMRS.

79. The method of any one of claims 64 to 78, wherein
the first-type DMRS is a DMRS that uses at least one same resource element as control information; and
the second-type DMRS is a DMRS that uses a different resource element from the control information.

80. An apparatus for determining a demodulation reference signal (DMRS), comprising:
a determining module, configured to determine a DMRS corresponding to a reference signal in a first reference signal group,
wherein the reference signal in the first reference signal group and the DMRS corresponding to the reference signal in the first reference signal group are used to assess a first link quality; the DMRS corresponding to the reference signal in the first reference signal group is a first DMRS or a second DMRS; the first DMRS is a first-type DMRS or a second-type DMRS; and the second DMRS is the second-type DMRS.

81. An apparatus for determining a demodulation reference signal (DMRS), comprising:
a determining module, configured to determine a DMRS corresponding to a candidate reference signal in a third reference signal group,
wherein the candidate reference signal in the third reference signal group and the DMRS corresponding to the candidate reference signal in the third reference signal group are used to assess a third link quality; the DMRS corresponding to the candidate reference signal in the third reference signal group is a first DMRS or a second DMRS; the first DMRS is a first-type DMRS or a second-type DMRS; and the second DMRS is the second-type DMRS.

82. An apparatus for determining a demodulation reference signal (DMRS), comprising:
a receiving module, configured to receive a first signal, wherein the first signal is configured to respond to a target reference signal, the target reference signal being a reference signal satisfying a link quality condition among all candidate reference signals,
wherein the first signal is transmitted based on a first DMRS or the first signal is transmitted based on a second DMRS; the first DMRS is a first-type DMRS or a second-type DMRS; and the second DMRS is the second-type DMRS.

83. An apparatus for determining a demodulation reference signal (DMRS), comprising:
a transmitting module, configured to transmit first indication information, wherein the first indication information is configured to indicate a DMRS corresponding to a reference signal in a first reference signal group,
wherein the reference signal in the first reference signal group and the DMRS corresponding to the reference signal in the first reference signal group are used to assess a first link quality; the DMRS corresponding to the reference signal in the first reference signal group is a first DMRS or a second DMRS; the first DMRS is a first-type DMRS or a second-type DMRS; and the second DMRS is the second-type DMRS.

84. An apparatus for determining a demodulation reference signal (DMRS), comprising:
a transmitting module, configured to transmit second indication information, wherein the second indication information is configured to indicate a DMRS corresponding to a candidate reference signal in a third reference signal group,
wherein the candidate reference signal in the third reference signal group and the DMRS corresponding to the candidate reference signal in the third reference signal group are used to assess a third link quality; the DMRS corresponding to the candidate reference signal in the third reference signal group is a first DMRS or a second DMRS; the first DMRS is a first-type DMRS or a second-type DMRS; and the second DMRS is the second-type DMRS.

85. An apparatus for determining a demodulation reference signal (DMRS), comprising:
a transmitting module, configured to transmit a first signal, wherein the first signal is configured to respond to a target reference signal, the target reference signal being a reference signal satisfying a link quality condition among all candidate reference signals,
wherein the first signal is transmitted based on a first DMRS or the first signal is transmitted based on a second DMRS; the first DMRS is a first-type DMRS or a second-type DMRS; and the second DMRS is the second-type DMRS.

86. A communications device, comprising:
a processor;
a transceiver coupled to the processor; and
a memory configured to store executable instructions of the processor,
wherein the processor is configured to load and execute the executable instructions to implement the method for determining a demodulation reference signal (DMRS) of any one of claims 1 to 79.

87. A computer-readable storage medium, having stored a computer program that is loaded and executed by a processor to implement the method for determining a demodulation reference signal (DMRS) of any one of claims 1 to 79.

88. A computer program product, comprising computer instructions, wherein the computer instructions are stored in a computer-readable storage medium, and a processor obtains the computer instructions from the computer-readable storage medium and executes the computer instructions to implement the method for determining a demodulation reference signal (DMRS) of any one of claims 1 to 79.
